# EUROPEAN PATENT APPLICATION

(11) **EP 4 659 591 A1**
(43) Date of publication of application: **10.12.2025**
(21) Application number: 24750371.7
(22) Date of filing: 31.01.2024
(51) Int. Cl.: A23L 27/00, A23L 23/10, A23L 27/10, A23L 27/20

(54) **TASTE-ENHANCING COMPOSITION, METHOD FOR PRODUCING SAME, FOOD PRODUCT, AND METHOD FOR ENHANCING TASTE OF FOOD PRODUCT**

(30) Priority: 31.01.2023 JP 2023013624
(71) Applicant: House Foods Group Inc., Higashiosaka-shi, Osaka 577-8520 (JP); House Foods Corporation, Higashi-Osaka-shi, Osaka 577-8520 (JP)
(72) Inventor: MIYAZAKI, Kinuko, Higashiosaka-shi Osaka 577-8520 (JP); KOBAYASHI, Runo, Higashiosaka-shi Osaka 577-8520 (JP); SAKANE, Kumi, Higashiosaka-shi Osaka 577-8520 (JP); SHIRAMIZU, Takashi, Higashiosaka-shi Osaka 577-8520 (JP); MATSUBARA, Keiko, Higashiosaka-shi Osaka 577-8520 (JP); KAMOI, Takahiro, Higashiosaka-shi Osaka 577-8520 (JP)
(74) Representative: Global IP Europe Patentanwaltskanzlei
(86) International application number: PCT/JP2024/003191
(87) International publication number: WO 2024/162422

(57) **Abstract**

The present invention provides a flavor-enhancing composition capable of enhancing a flavor of a food product when blended with the aforesaid food product, and a method for producing the same, and a flavor-enhanced food product and a method for enhancing a flavor of the food product. A first embodiment relates to a flavor-enhancing composition comprising a cyclic dipeptide. A second embodiment relates to a method for producing the aforesaid flavor-enhancing composition, comprising heating a spice such as coriander, to increase the cyclic dipeptide in the aforesaid spice. A third embodiment relates to a food product containing the aforesaid flavor-enhancing composition. A fourth embodiment relates to a method for enhancing a flavor of a food product, comprising blending the aforesaid flavor-enhancing composition with the food product.

## Description

### Technical Field

The present invention relates to a flavor-enhancing composition, a method for producing the same, a food product and a method for enhancing a flavor of a food product.

### Background Art

Sodium chloride mparts a preferable taste to food products and is used as a source of chlorine and sodium, which are elements essential for sustaining life. On the other hand, sodium chloride intake is desired to be controlled because excessive sodium chloride intake is known to be a cause of many diseases such as hypertension.

Patent Literature 1 discloses a saltiness-enhancing spice mixture that contains paprika, yuzu rind and/or chenpi, ginger, and allspice in a specified ratio, and may further contain at least one spice selected from red chili pepper, cumin, coriander, and celery seed. The Patent Literature 1 describes that the aforesaid saltiness-enhancing spice mixture, when including a smoked spice, can further enhance the saltiness-enhancing effect. Smoked paprika is described as a specific example of the smoked spice. According to the Patent Literature 1, the aforesaid saltiness-enhancing spice mixture, when added together with sodium chloride to a food product, exhibits the saltiness-enhancing effect on it.

Patent Literature 2 discloses a saltiness-enhancer containing a mixture of pepper, ginger, clove and cinnamon, and a saltiness enhancer containing a mixture of pepper, ginger, clove, cinnamon and capsicum.

Patent Literature 3 discloses a method for producing a caramelized-flavor-enhanced spice comprising a step of heating at least one spice selected from the group consisting of coriander, cumin, chenpi, anise, celery, turmeric, fenugreek, garlic, chili pepper, paprika, fennel, black pepper, ginger and asafoetida under a gauge pressure of 0.05 MPa or higher and a condition whereby a heating value is 15 to 170, and a method for producing an almond-flavor-enhanced spice comprising a step of heating at least one spice selected from the group consisting of turmeric, chili, fenugreek, cumin, coriander, chenpi, garlic, paprika, fennel, anise, celery, black pepper, ginger, fenugreek leaves and bay leaves under a gauge pressure of 0.05 MPa or lower and a condition whereby the heating value is 50 to 180. The Patent Literature 3 also discloses that a seared-flavor-enhanced spice can be obtained by heating coriander under a condition whereby the heating value is 800 or more.

### Citation List

### Patent Literature

Patent Literature 1: JP 2018-102142
Patent Literature 2: JP 2012-239398
Patent Literature 3: JP 2020-103257

### Summary of Invention

### Technical Problem

The present invention provides a flavor-enhancing composition capable of enhancing a flavor of a food product by blending the composition with the aforesaid food product, and a method for producing the same. The present invention also provides a method for enhancing the flavor of the food product.

### Solution to Problem

The inventors have found the following means as a flavor-enhancing composition capable of enhancing a flavor of a food product, a method for producing the flavor-enhancing composition, and a flavor-enhanced food product and a method for enhancing the flavor of the food product.
[1] A flavor-enhancing composition containing a cyclic dipeptide. The flavor-enhancing composition may be, for example, a saltiness-enhancing composition.
[2] The flavor-enhancing composition according to [1], wherein said cyclic dipeptide contains one or more selected from the group consisting of proline, leucine, isoleucine, glycine, phenylalanine, glutamic acid, tyrosine, valine, aspartic acid, histidine and alanine.
[3] The flavor-enhancing composition according to [1] or [2], wherein said cyclic dipeptide is one or more selected from the group consisting of cyclic (Pro-Asn), cyclic (Pro-His), cyclic (Pro-Asp), cyclic (Pro-Pro), cyclic (Pro-Val), cyclic (Pro-Tyr), cyclic (Pro-Leu), cyclic (Pro-Ile), cyclic (Pro-Glu), cyclic (Pro-Gly), cyclic (Pro-Met), cyclic (Arg-Pro), cyclic (Thr-Pro), cyclic (hyPro-Pro), cyclic (Leu-Leu), cyclic (Ile-Leu), cyclic (Ile-Ile), cyclic (Leu-Asp), cyclic (Ile-Asp), cyclic (Leu-Ser), cyclic (Ile-Ser), cyclic (Leu-Val), cyclic (Ile-Val), cyclic (Leu-His), cyclic (Ile-His), cyclic (Leu-Met), cyclic (Ile-Met), cyclic (Arg-Leu), cyclic (Arg-Ile), cyclic (hyPro-Leu), cyclic (hyPro-Ile), cyclic (Thr-Leu), cyclic (Thr-Ile), cyclic (Gly-His), cyclic (Gly-Ser), cyclic (Gly-Arg), cyclic (Gly-Val), cyclic (Gly-Leu), cyclic (Gly-Ile), cyclic (Gly-Phe), cyclic (Gly-Tyr), cyclic (Gly-Thr), cyclic (Gly-Gly), cyclic (Gly-Ala), cyclic (Phe-Leu), cyclic (Phe-Ile), cyclic (Phe-Ser), cyclic (Phe-Ala), cyclic (Phe-Asp), cyclic (Phe-Thr), cyclic (Phe-Pro), cyclic (Phe-Tyr), cyclic (Phe-Phe), cyclic (Glu-His), cyclic (Glu-Glu), cyclic (Glu-Arg), cyclic (Glu-Gly), cyclic (Glu-Asp), cyclic (Glu-Tyr), cyclic (Glu-Phe), cyclic (Glu-Leu), cyclic (Glu-Ile), cyclic (Tyr-Asp), cyclic (Tyr-His), cyclic (Tyr-Ser), cyclic (Val-Arg), cyclic (Val-Tyr), cyclic (Val-Val), cyclic (Val-Phe), cyclic (Val-Ser), cyclic (Ala-His), cyclic (Ala-Arg), cyclic (Ala-Pro), cyclic (Ala-Tyr), cyclic (Ala-Val), cyclic (Ala-Leu), cyclic (Ala-Ile), cyclic (Ala-Asp) and cyclic (Ala-Asn).
[4] The flavor-enhancing composition according to [3], wherein said cyclic dipeptide is one or more selected from the group consisting of cyclic (Ala-Leu), cyclic (Ala-Ile), cyclic (Thr-Pro), cyclic (Pro-His), cyclic (Ala-Pro), cyclic (Arg-Pro), cyclic (Phe-Pro), cyclic (Phe-Ala), cyclic (Pro-Pro), cyclic (hyPro-Pro), cyclic (Leu-Val), cyclic (Ile-Val), cyclic (Gly-Val), cyclic (Ala-Val), cyclic (Pro-Met), cyclic (hyPro-Leu), cyclic (hyPro-Ile), cyclic (Pro-Leu), cyclic (Pro-Ile) and cyclic (Pro-Val).
[5] The flavor-enhancing composition according to [3], wherein said cyclic dipeptide is one or more selected from the group consisting of cyclic (Pro-Met), cyclic (Glu-His), cyclic (Ala-His), cyclic (Gly-His), cyclic (Tyr-His), cyclic (Leu-His), cyclic (Ile-His), cyclic (Leu-Val), cyclic (Ile-Val), cyclic (Glu-Gly), cyclic (Pro-His) and cyclic (Glu-Phe).
[6] The flavor-enhancing composition according to any of [1] to [4], further comprising one or more selected from the group consisting of sulfurol(4-methyl-5-thiazoleethanol), sulfurol acetate, carveol, nerolidol, α-terpinene-7-al and an organic acid.
[7] The flavor-enhancing composition according to [6], wherein said organic acid is one or more selected from the group consisting of cis-aconitic acid, *trans-aconitic* acid, tartaric acid, malic acid and citric acid.
[8] A method for producing the flavor-enhancing composition according to any of [1] to [7], comprising
   heating one or more spices selected from the group consisting of coriander, paprika, cumin and asafoetida, to increase said cyclic dipeptide in said spice.
[9] A food product containing the flavor-enhancing composition according to any of [1] to [7].
[10] A method for enhancing a flavor of a food product, comprising blending the flavor-enhancing composition according to any of [1] to [7] with the food product. The flavor-enhancing composition may be, for example, a saltiness-enhancing composition.
[11] Use of a cyclic dipeptide, for enhancing a flavor of a food product.
[12] The use according to [11], wherein said cyclic dipeptide is a cyclic dipeptide defined in any of [1] to [5].
[13] The use according to [11] or [12], wherein said cyclic dipeptide is a combination of said cyclic dipeptide with one or more selected from the group consisting of sulfurol(4-methyl-5-thiazoleethanol), sulfurol acetate, carveol, nerolidol, α-terpinene-7-al and an organic acid.
[14] The use according to [13], wherein said organic acid is one or more selected from the group consisting of cis-aconitic acid, *trans-aconitic* acid, tartaric acid, malic acid and citric acid.
[15] The use according to any of [11] to [14], wherein said cyclic dipeptide is included in one or more spices selected from the group consisting of heat-treated coriander, heat-treated paprika, heat-treated cumin and heat-treated asafoetida
[16] A method for enhancing a flavor of a food product, comprising blending a cyclic dipeptide with the food product.
[17] The method according to [16], wherein said cyclic dipeptide is a cyclic dipeptide defined in any of [1] to [5].
[18] The method according to [16] or [17], wherein said cyclic dipeptide is a combination of said cyclic dipeptide with one or more selected from the group consisting of sulfurol(4-methyl-5-thiazoleethanol), sulfurol acetate, carveol, nerolidol, α-terpinene-7-al and an organic acid.
[19] The method according to [18], wherein said organic acid is one or more selected from the group consisting of cis-aconitic acid, *trans-aconitic* acid, tartaric acid, malic acid and citric acid.
[20] The method according to any of [16] to [19], wherein said cyclic dipeptide is included in one or more spices selected from the group consisting of heat-treated coriander, heat-treated paprika, heat-treated cumin and heat-treated asafoetida.
[21] A cyclic dipeptide for use in enhancing a flavor of a food product.
[22] The cyclic dipeptide according to [21], wherein said cyclic dipeptide is a cyclic dipeptide defined in any of [1] to [5].
[23] The cyclic dipeptide according to [21] or [22], which is a combination of said cyclic dipeptide with one or more selected from the group consisting of sulfurol(4-methyl-5-thiazoleethanol), sulfurol acetate, carveol, nerolidol, α-terpinene-7-al and an organic acid.
[24] The cyclic dipeptide according to [23], wherein said organic acid is one or more selected from the group consisting of cis-aconitic acid, trans-aconitic acid, tartaric acid, malic acid and citric acid.
[25] The cyclic dipeptide according to any of [21] to [24], which is included in one or more spices selected from the group consisting of heat-treated coriander, heat-treated paprika, heat-treated cumin and heat-treated asafoetida.
[26] Use of a cyclic dipeptide in producing an additive for use in enhancing a flavor of a food product.
[27] The use according to [26], wherein said cyclic dipeptide is a cyclic dipeptide defined in any of [1] to [5].
[28] The use according to [26] or [27], wherein said cyclic dipeptide is a combination of said cyclic dipeptide with one or more selected from the group consisting of sulfurol(4-methyl-5-thiazoleethanol), sulfurol acetate, carveol, nerolidol, α-terpinene-7-al and an organic acid.
[29] The use according to [28], wherein said organic acid is one or more selected from the group consisting of cis-aconitic acid, *trans-aconitic* acid, tartaric acid, malic acid and citric acid.
[30] The use according to any of [26] to [29], wherein said cyclic dipeptide is included in one or more spices selected from the group consisting of heat-treated coriander, heat-treated paprika, heat-treated cumin and heat-treated asafoetida.

This specification encompasses the content of the disclosure of Japanese Patent Application No. JP 2023-013624, on which the priority of the present application is based. All publications, patents and patent applications cited herein are to be incorporated herein by reference in their entirety.

### Advantageous Effect of Invention

The flavor-enhancing composition according to one or more embodiments of the present invention can enhance a flavor of a food product when blended with the aforesaid food product.

According to the method for producing a flavor-enhancing composition according to one or more embodiments of the present invention, the aforesaid flavor-enhancing composition can be produced.

The food product according to one or more embodiments of the present invention is a flavor-enhanced food product.

According to the method for enhancing a flavor of a food product according to one or more embodiments of the present invention, the flavor of a food product can be enhanced by blending the aforesaid flavor-enhancing composition with the aforesaid food product.

### Brief Description of Drawings

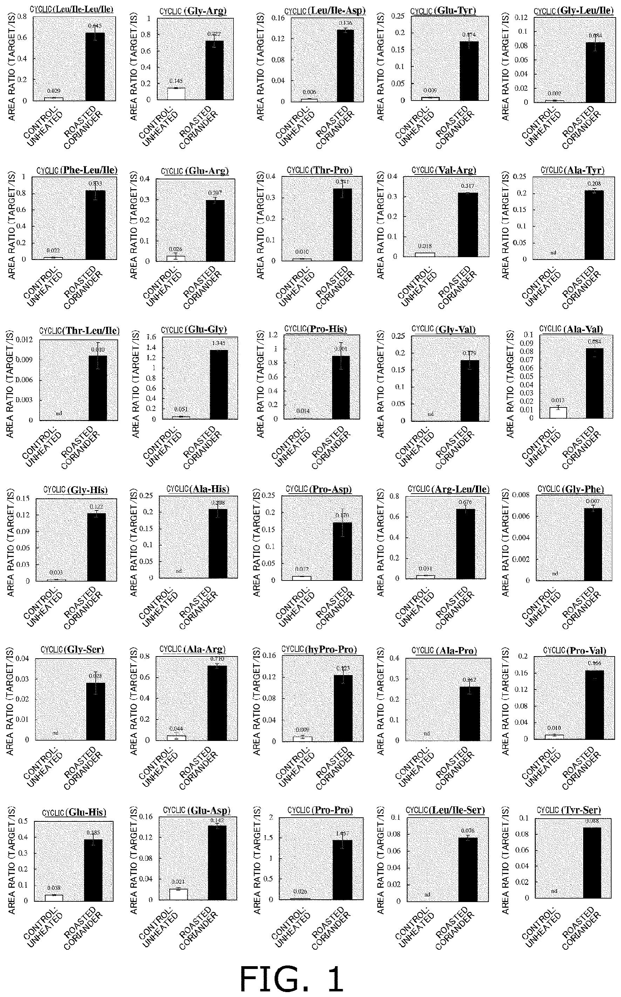

Figure 1 shows the ratio of the peak area of a plurality of cyclic dipeptides to the peak area of an internal standard (47 µg/g of L-lysine-¹³C₆ monohydrochloride) in an extracted ion chromatogram obtained by LC-MS/MS, in unheated coriander and heat-treated coriander.

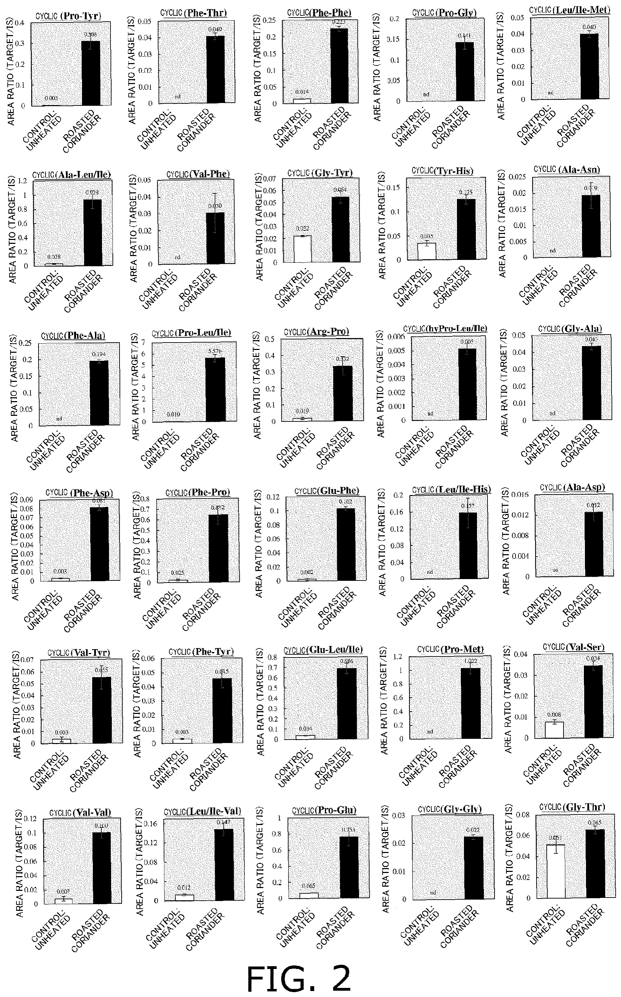

Figure 2 shows the ratio of the peak area of a plurality of cyclic dipeptides to the peak area of the internal standard (47 µg/g of L-lysine-¹³C₆ monohydrochloride) in an extracted ion chromatogram obtained by LC-MS/MS, in unheated coriander and heat-treated coriander.

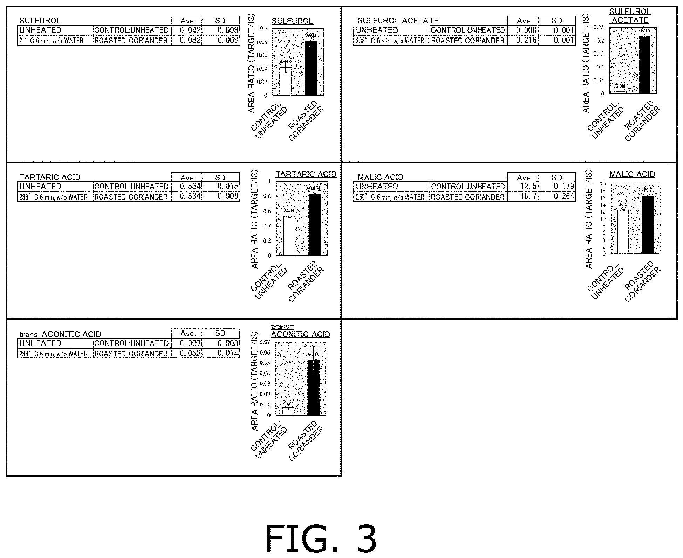

Figure 3 shows the ratio of the peak area of sulfurol and sulfurol acetate to the peak area of the internal standard (47 µg/g of L-lysine-¹³C₆ monohydrochloride) in an extracted ion chromatogram obtained by LC-MS/MS, and the ratio of the peak area of tartaric acid, malic acid and *trans-aconitic* acid, to the that of an internal standard (99 µg/g of ribitol) in an extracted ion chromatogram obtained by LC-MS/MS, in unheated coriander and heat-treated (roasted) coriander.

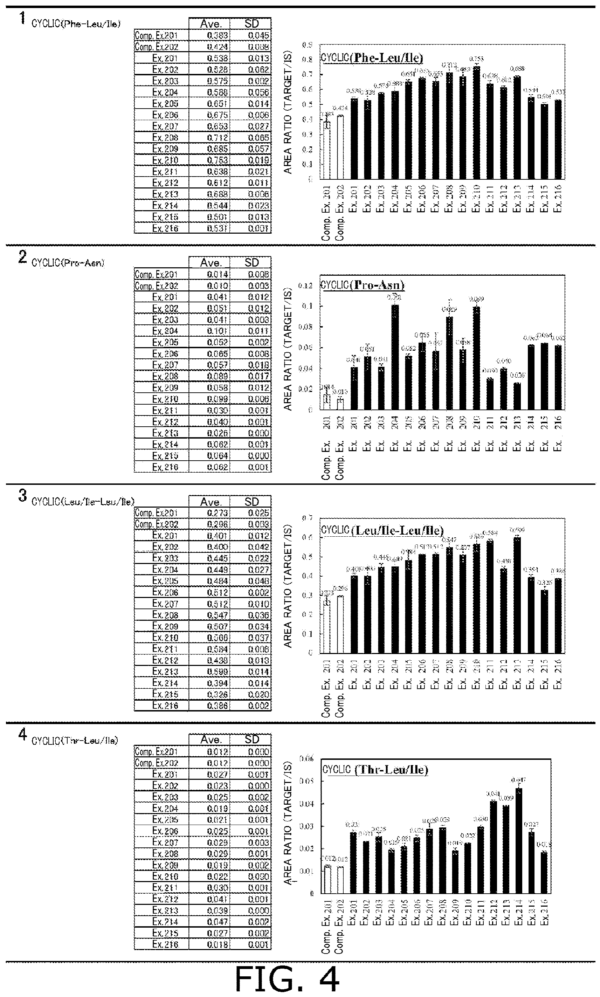

Figure 4 shows the ratio of the peak area of cyclic (Phe-Leu/Ile) (1), cyclic (Pro-Asn) (2), cyclic (Leu/Ile-Leu/Ile) (3) and cyclic (Thr-Leu/Ile) (4), to the peak area of the internal standard (47 µg/g of L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

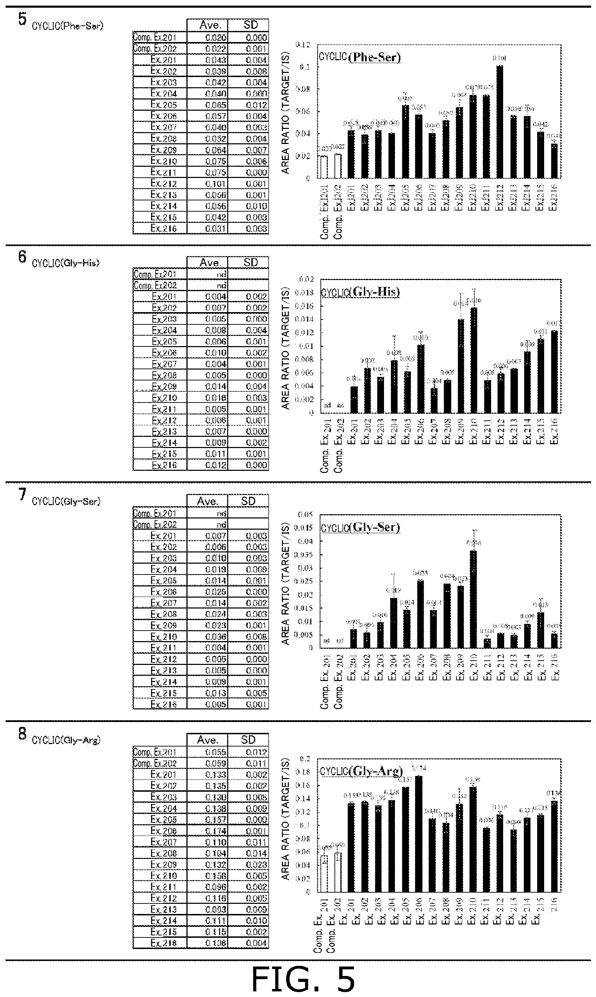

Figure 5 shows the ratio of the peak area of cyclic (Phe-Ser) (5), cyclic (Gly-His) (6), cyclic (Gly-Ser) (7) and cyclic (Gly-Arg) (8), to the peak area of the internal standard (47 µg/g of L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

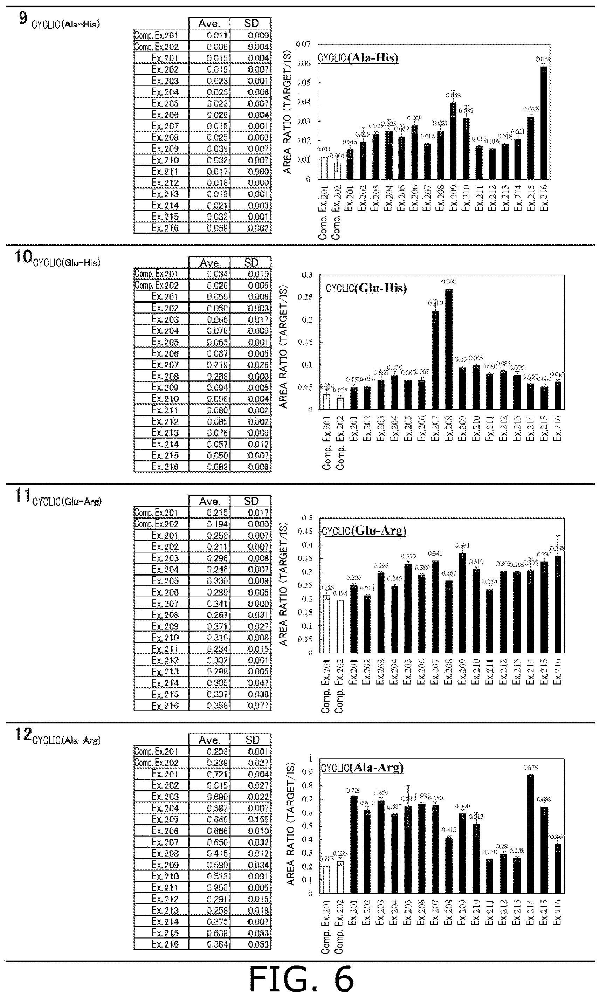

Figure 6 shows the ratio of the peak area of cyclic (Ala-His) (9), cyclic (Glu-His) (10), cyclic (Glu-Arg) (11) and cyclic (Ala-Arg) (12), to the peak area of the internal standard (47 µg/g of L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

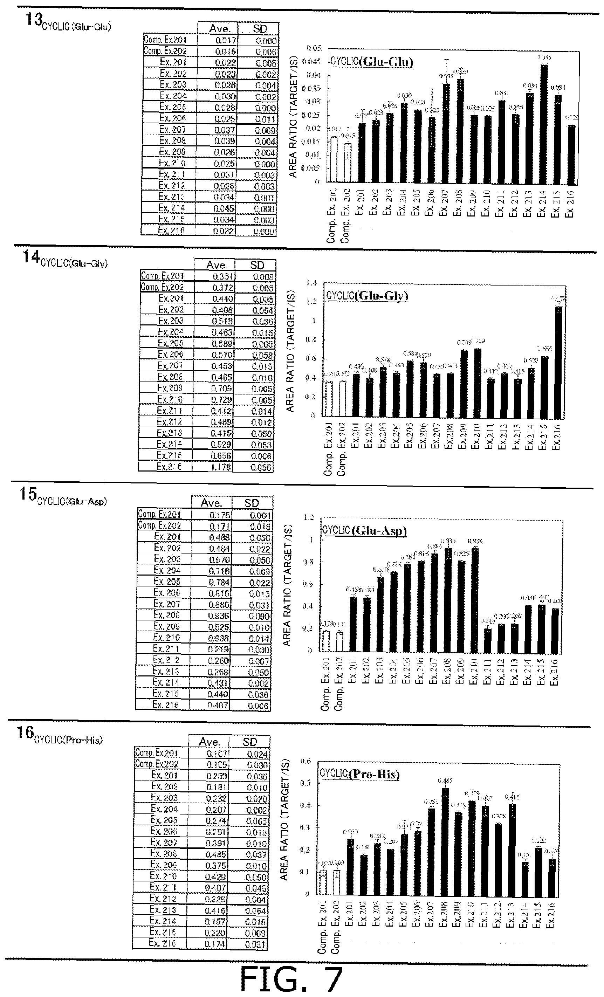

Figure 7 shows the ratio of the peak area of cyclic (Glu-Glu) (13), cyclic (Glu-Gly) (14), cyclic (Glu-Asp) (15) and cyclic (Pro-His) (16), to the peak area of the internal standard (47 µg/g of L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

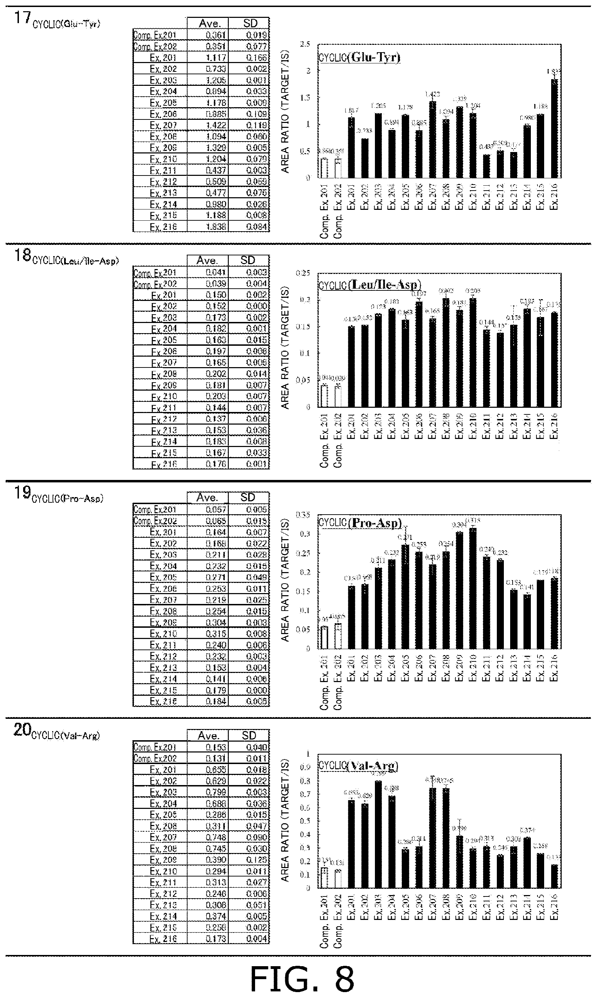

Figure 8 shows the ratio of the peak area of cyclic (Glu-Tyr) (17), cyclic (Leu/Ile-Asp) (18), cyclic (Pro-Asp) (19) and cyclic (Val-Arg) (20), to the peak area of the internal standard (47 µg/g of L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

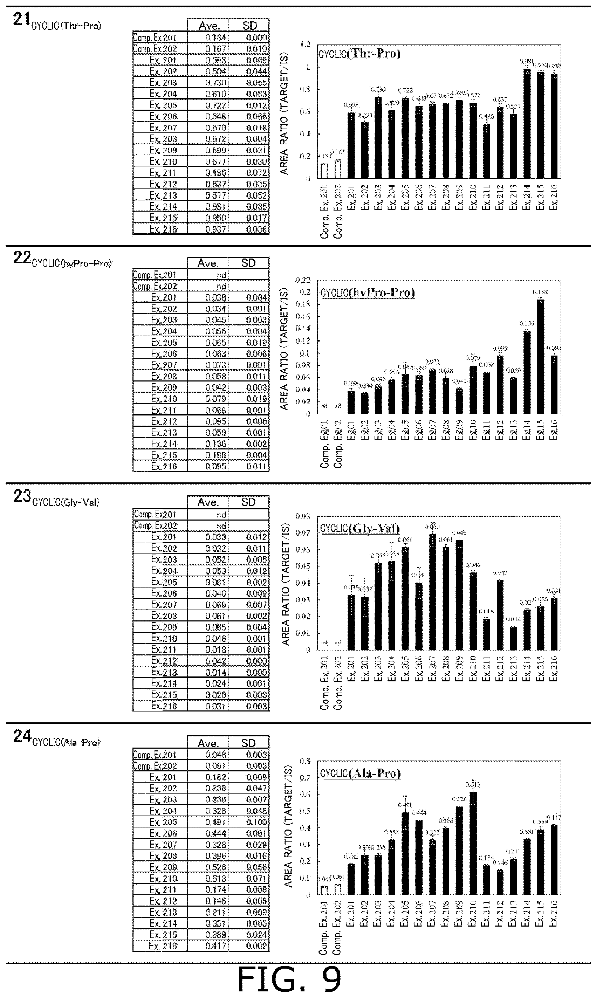

Figure 9 shows the ratio of the peak area of cyclic (Thr-Pro) (21), cyclic (hyPro-Pro) (22), cyclic (Gly-Val) (23) and cyclic (Ala-Pro) (24), to the peak area of the internal standard (47 µg/g L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

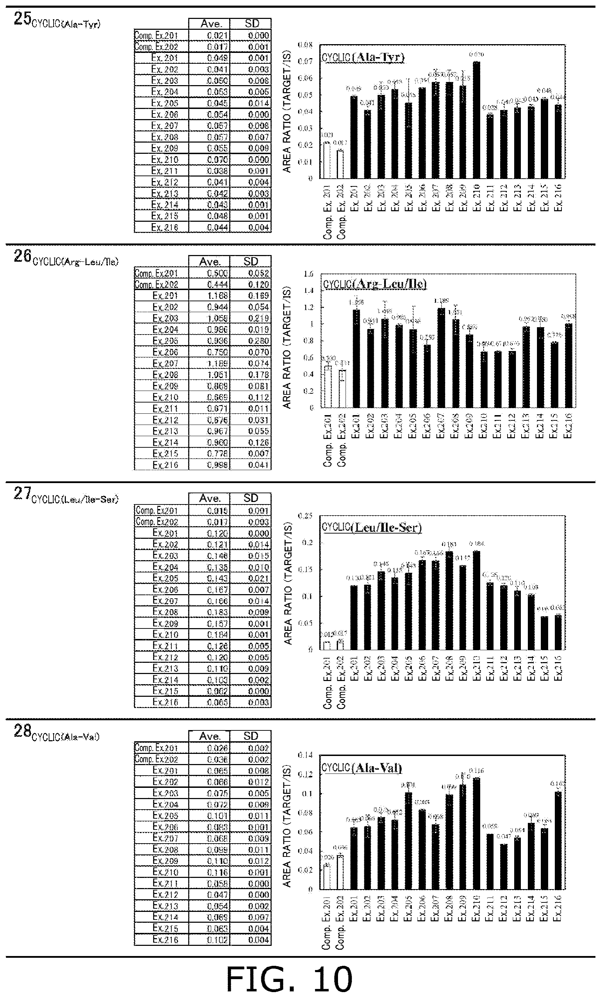

Figure 10 shows the ratio of the peak area of cyclic (Ala-Tyr) (25), cyclic (Arg-Leu/Ile) (26), cyclic (Leu/Ile-Ser) (27) and cyclic (Ala-Val) (28), to the peak area of the internal standard (47 µg/g of L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

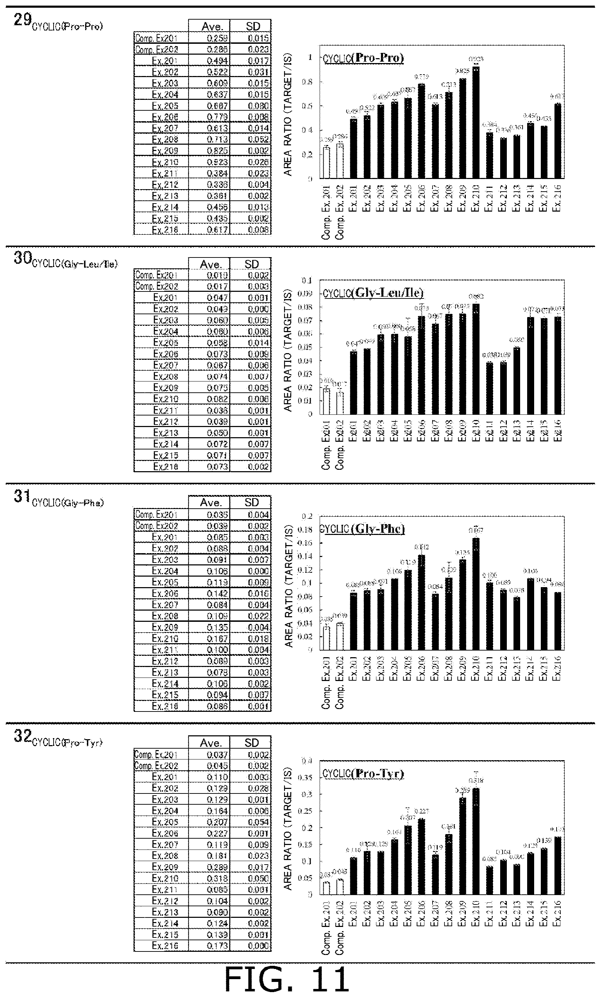

Figure 11 shows the ratio of the peak area of cyclic (Pro-Pro) (29), cyclic (Gly-Leu/Ile) (30), cyclic (Gly-Phe) (31) and cyclic (Pro-Tyr) (32), to the peak area of the internal standard (47 µg/g of L-lysine-¹³C₆ monohydrochloride) in an extracted ion chromatograms obtained by LC-MS/MS, in unheated paprika (Comparative Examples 201, 202) and in paprika heat-treated under a specified condition (Examples 201 to 216).

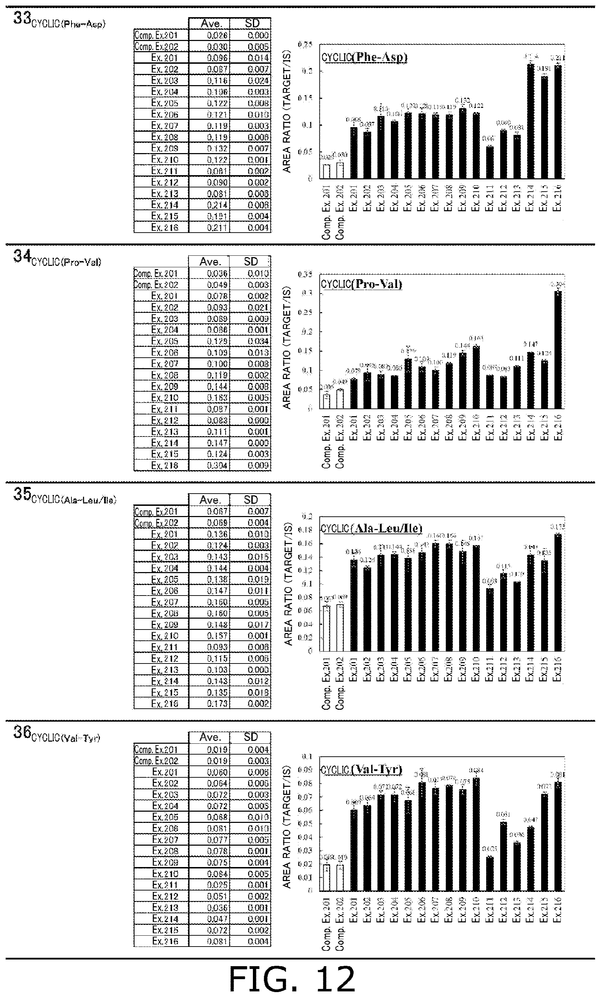

Figure 12 shows the ratio of the peak area of cyclic (Phe-Asp) (33), cyclic (Pro-Val) (34), cyclic (Ala-Leu/Ile) (35) and cyclic (Val-Tyr) (36), to the peak area of the internal standard (47 µg/g of L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

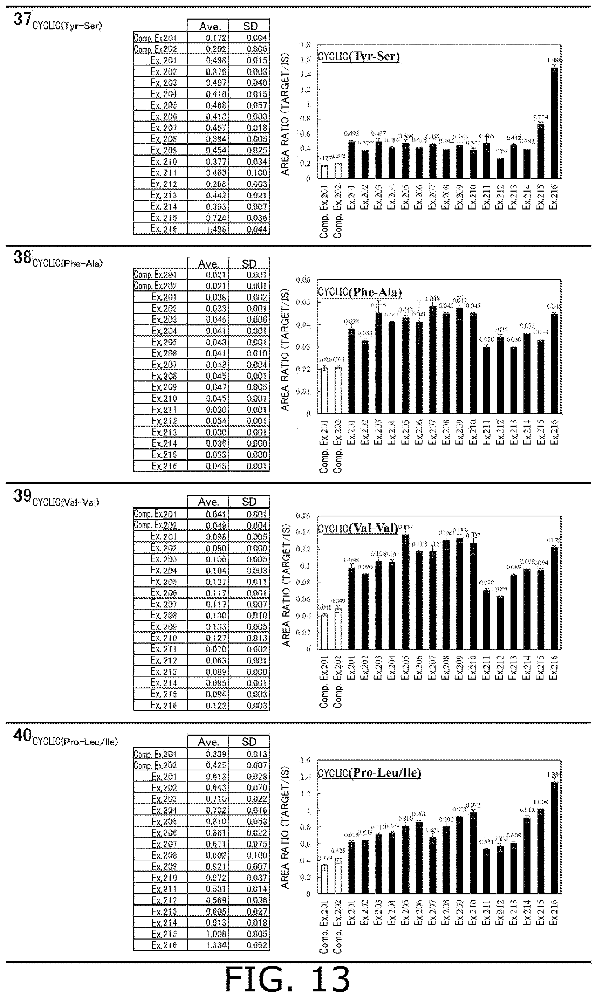

Figure 13 shows the ratio of the peak area of cyclic (Tyr-Ser) (37), cyclic (Phe-Ala) (38), cyclic (Val-Val) (39) and cyclic (Pro-Leu/Ile) (40), to the peak area of the internal standard (47 µg/g of L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

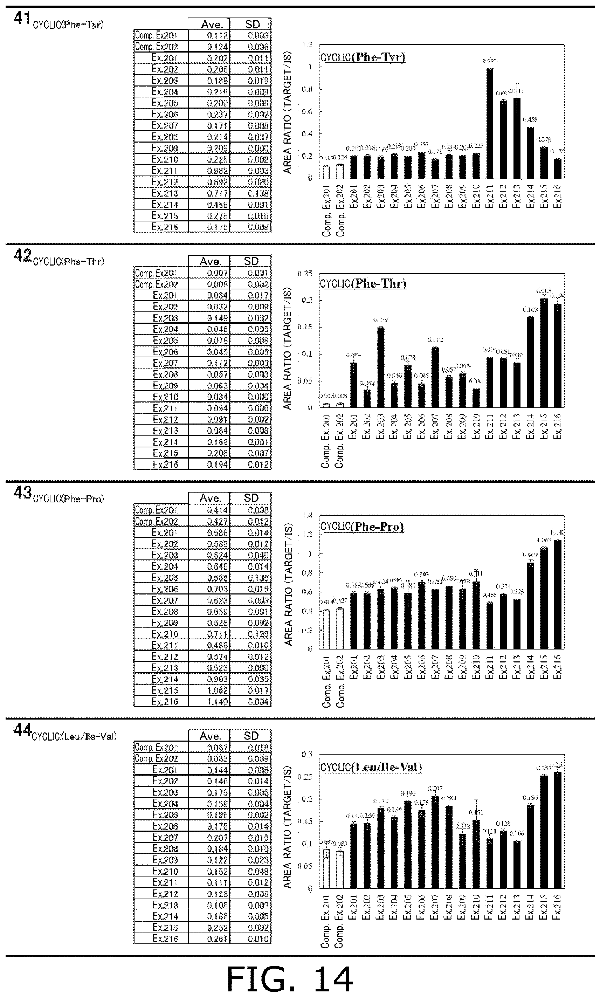

Figure 14 shows the ratio of the peak area of cyclic (Phe-Tyr) (41), cyclic (Phe-Thr) (42), cyclic (Phe-Pro) (43) and cyclic (Leu/Ile-Val) (44), to the peak area of the internal standard (47 µg/g of L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

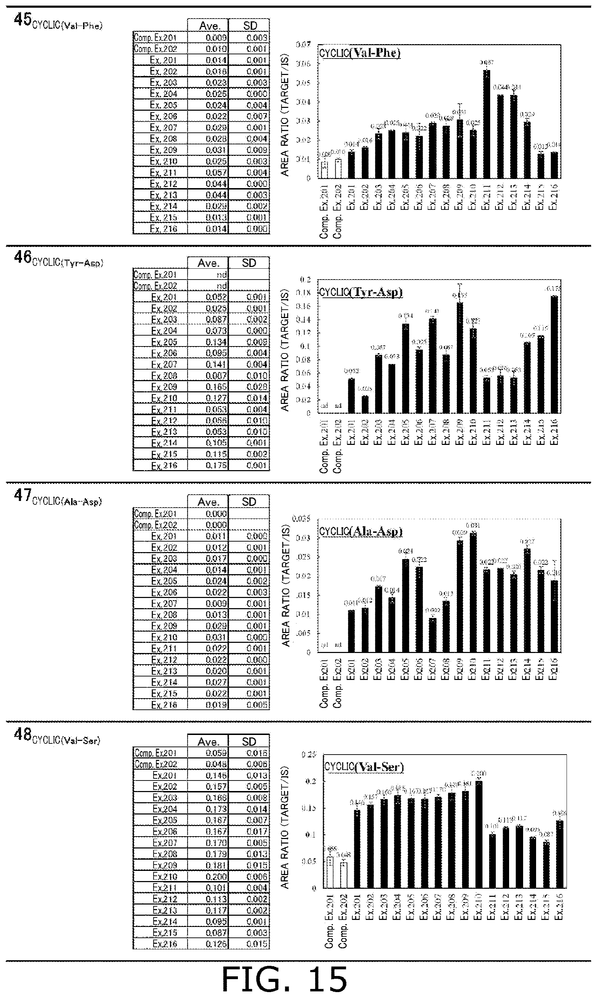

Figure 15 shows the ratio of the peak area of cyclic (Val-Phe) (45), cyclic (Tyr-Asp) (46), cyclic (Ala-Asp) (47) and cyclic (Val-Ser) (48), to the peak area of the internal standard (47 µg/g of L-lysine-¹³C₆ monohydrochloride) in an extracted ion chromatogram obtained by LC-MS/MS, in unheated paprika (Comparative Examples 201, 202) and in paprika heat-treated under a specified condition (Examples 201 to 216).

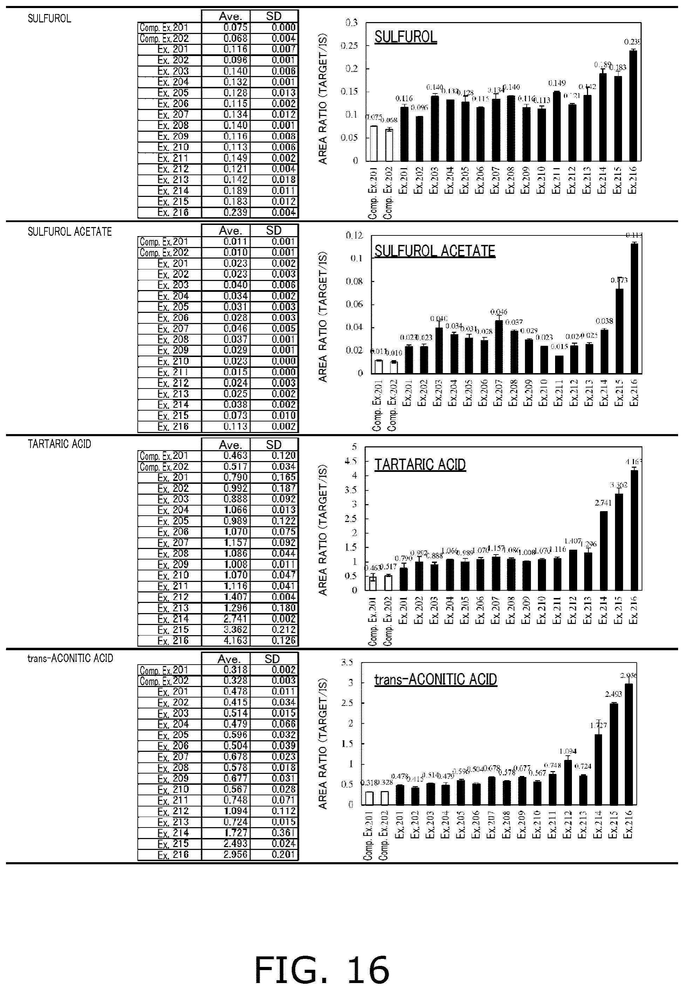

Figure 16 shows the ratio of the peak area of sulfurol and sulfurol acetate, to the peak area of the internal standard (47 µg/g of L-lysine-¹³C₆ monohydrochloride) in an extracted ion chromatogram obtained by LC-MS/MS, and the ratio of the peak area of tartaric acid and trans-aconitic acid, to the peak area of the internal standard (99 µg/g ribitol) in an extracted ion chromatogram obtained by LC-MS/MS, in unheated paprika (Comparative Examples 201, 202) and in paprika heat-treated under a specified condition (Examples 201 to 216).

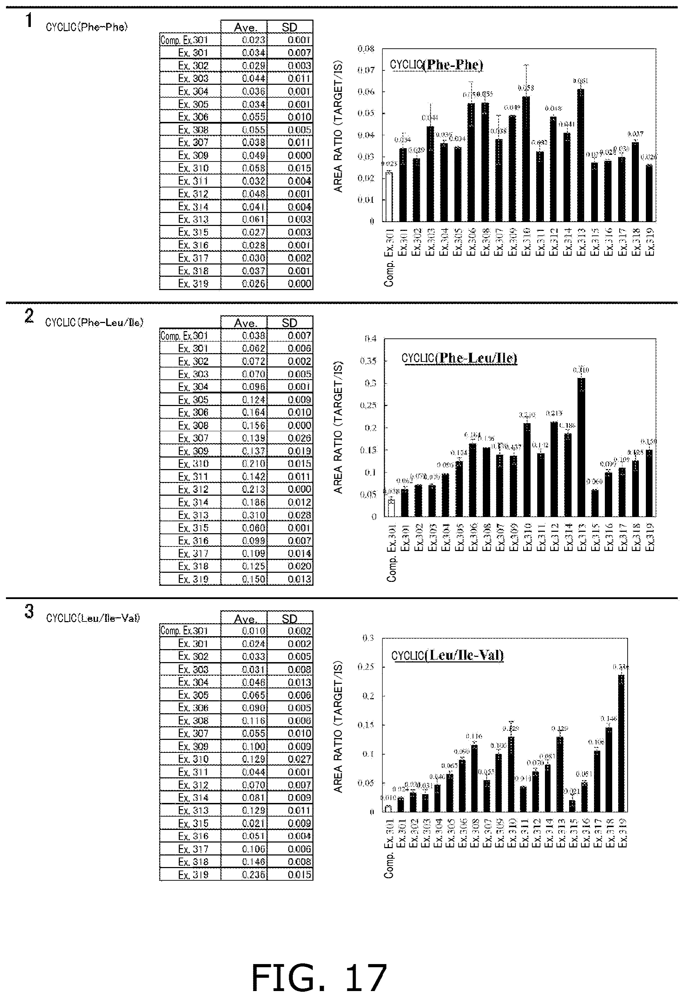

Figure 17 shows the ratio of the peak area of cyclic (Phe-Phe) (1), cyclic (Phe-Leu/Ile) (2) and cyclic (Leu/Ile-Val) (3), to the peak area of the internal standard (47 µg/g of L-lysine-¹³C₆ monohydrochloride) in an extracted ion chromatogram obtained by LC-MS/MS, in unheated cumin (Comparative Example 301) and in cumin heat-treated under a specified condition (Examples 301 to 319).

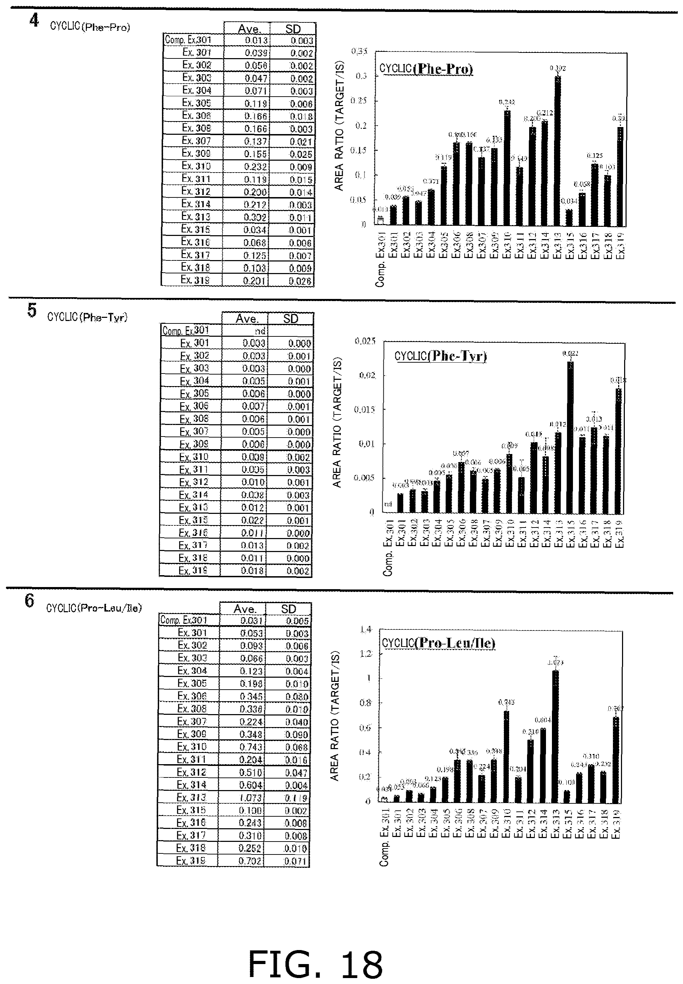

Figure 18 shows the ratio of the peak area of cyclic (Phe-Pro) (4), cyclic (Phe-Tyr) (5) and cyclic (Pro-Leu/Ile) (6), to the peak area of the aforesaid internal standard in an extracted ion chromatogram obtained by LC-MS/MS, in unheated cumin (Comparative Example 301) and in cumin heat-treated under a specified condition (Examples 301 to 319).

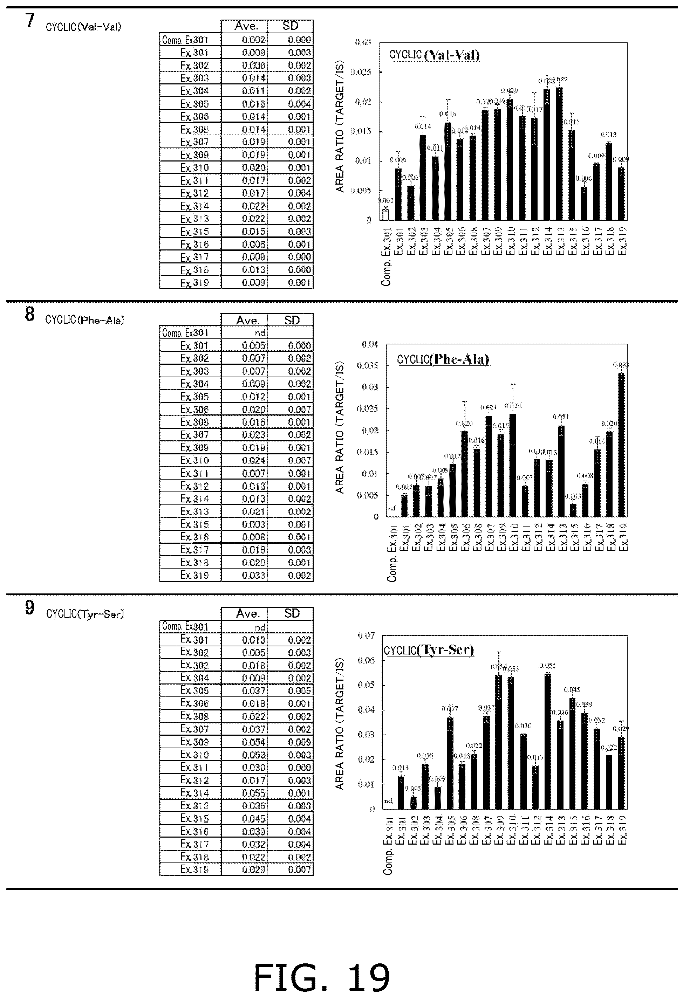

Figure 19 shows the ratio of the peak area of cyclic (Val-Val) (7), cyclic (Phe-Ala) (8) and cyclic (Tyr-Ser) (9), to the peak area of the aforesaid internal standard in an extracted ion chromatogram obtained by LC-MS/MS, in unheated cumin (Comparative Example 301) and in cumin heat-treated under a specified condition (Examples 301 to 319).

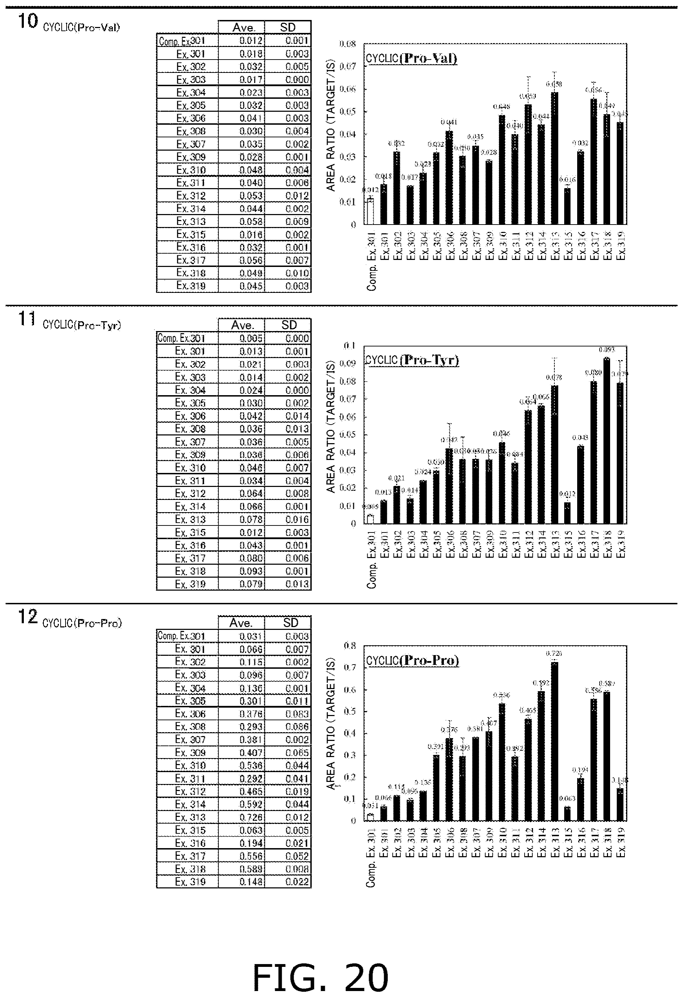

Figure 20 shows the ratio of the peak area of cyclic (Pro-Val) (10), cyclic (Pro-Tyr) (11) and cyclic (Pro-Pro) (12), to the peak area of the aforesaid internal standard in an extracted ion chromatogram obtained by LC-MS/MS, in unheated cumin (Comparative Example 301) and in cumin heat-treated under a specified condition (Examples 301 to 319).

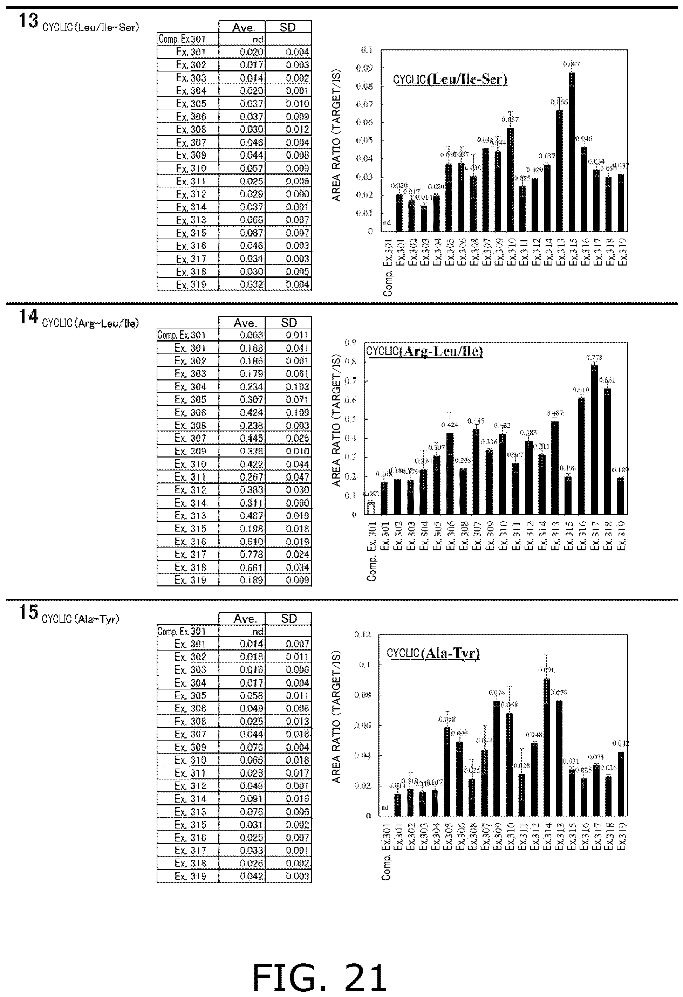

Figure 21 shows the ratio of the peak area of cyclic (Leu/Ile-Ser) (13), cyclic (Arg-Leu/Ile) (14) and cyclic (Ala-Tyr) (15), to the peak area of the aforesaid internal standard in an extracted ion chromatogram obtained by LC-MS/MS, in unheated cumin (Comparative Example 301) and in cumin heat-treated under a specified condition (Examples 301 to 319).

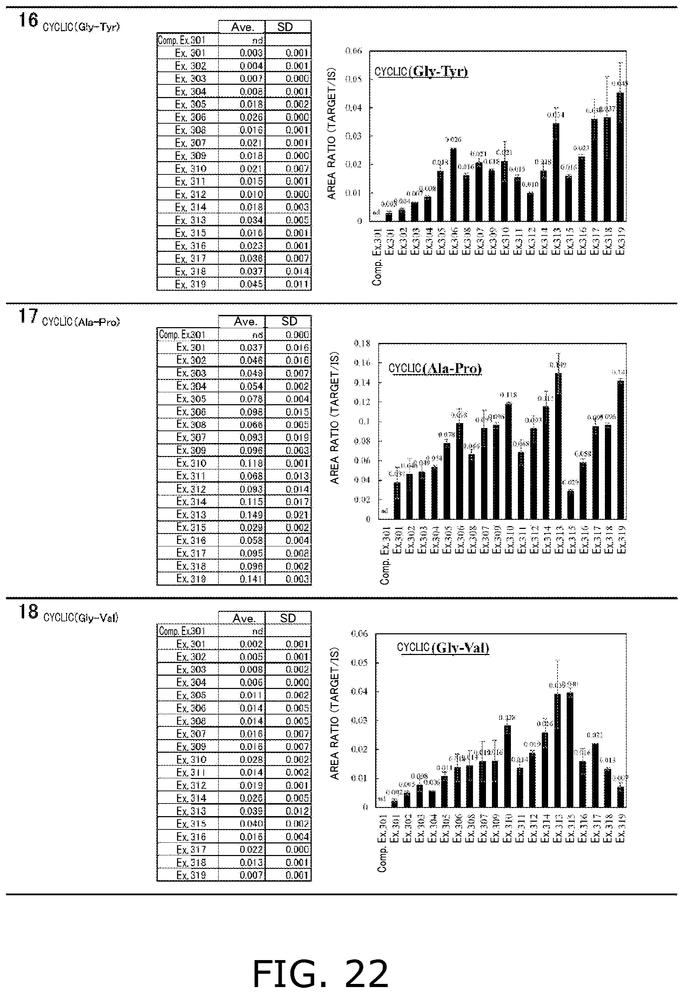

Figure 22 shows the ratio of the peak area of cyclic (Gly- Tyr) (16), cyclic (Ala-Pro) (17) and cyclic (Gly-Val) (18), to the peak area of the aforesaid internal standard in an extracted ion chromatogram obtained by LC-MS/MS, in unheated cumin (Comparative Example 301) and in cumin heat-treated under a specified condition (Examples 301 to 319).

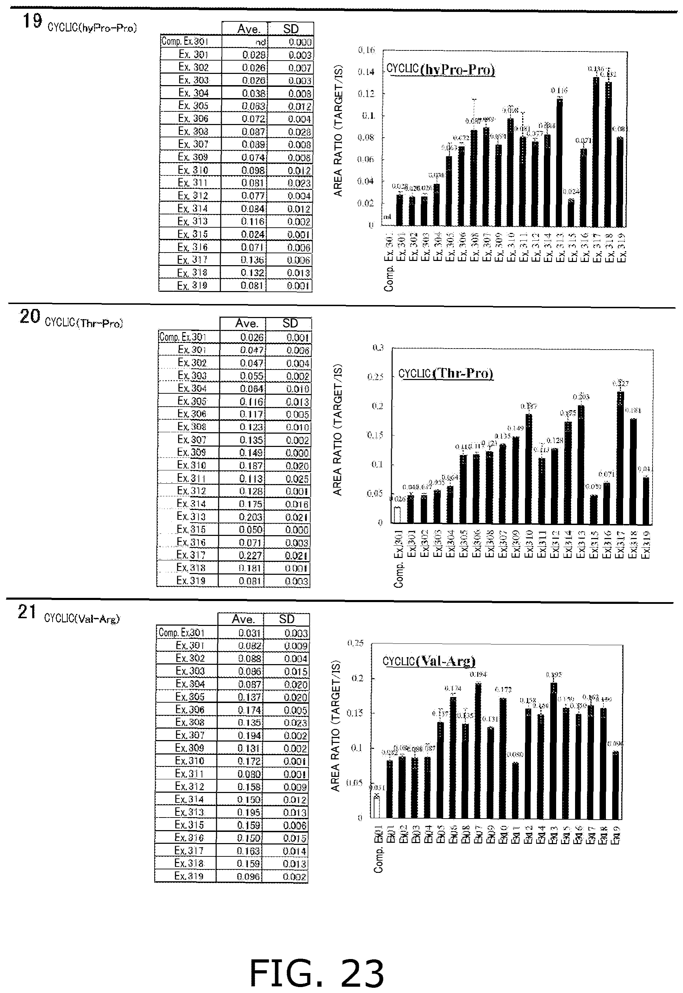

Figure 23 shows the ratio of the peak area of cyclic (hyPro-Pro) (19), cyclic (Thr-Pro) (20) and cyclic (Val-Arg) (21), to the peak area of the aforesaid internal standard in an extracted ion chromatogram obtained by LC-MS/MS, in unheated cumin (Comparative Example 301) and in cumin heat-treated under a specified condition (Examples 301 to 319).

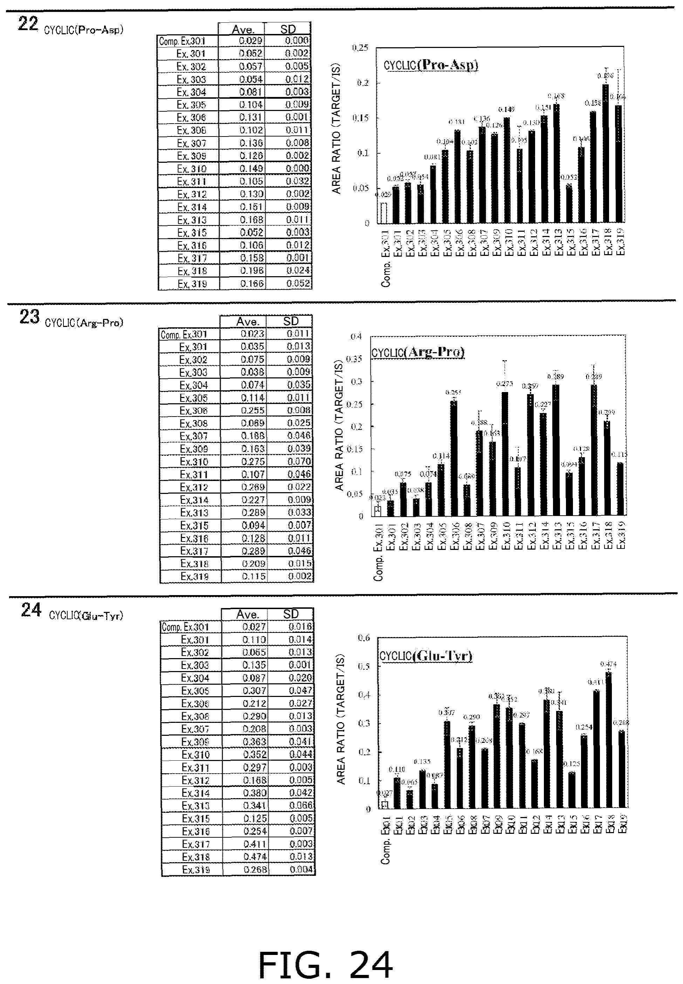

Figure 24 shows the ratio of the peak area of cyclic (Pro-Asp) (22), cyclic (Arg-Pro) (23) and cyclic (Glu-Tyr) (24), to the peak area of the aforesaid internal standard in an extracted ion chromatogram obtained by LC-MS/MS, in unheated cumin (Comparative Example 301) and in cumin heat-treated under a specified condition (Examples 301 to 319).

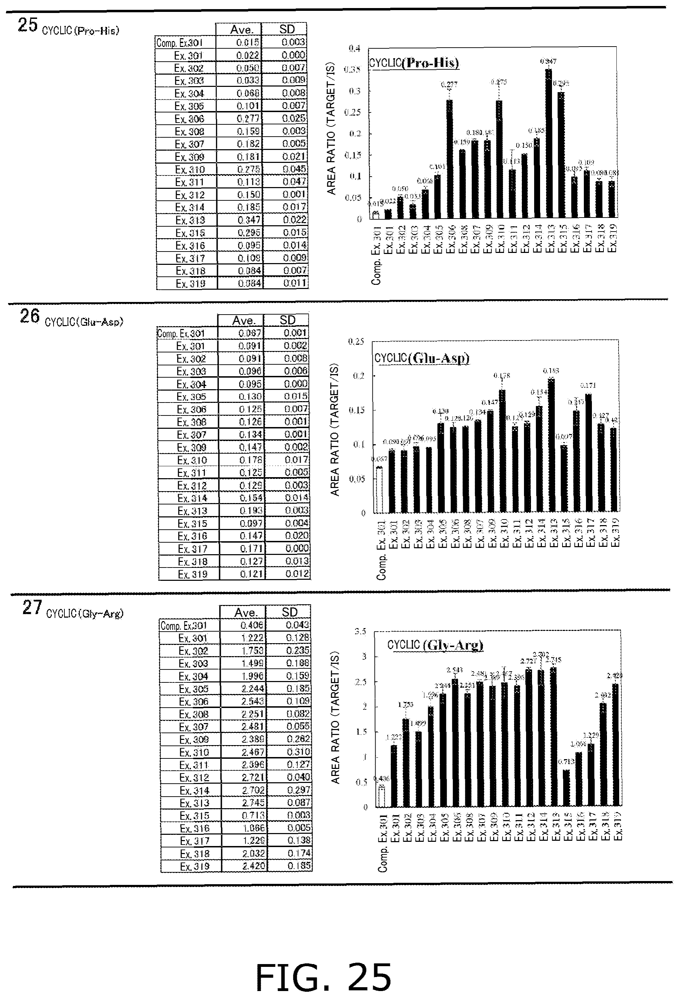

Figure 25 shows the ratio of the peak area of cyclic (Pro-His) (25), cyclic (Glu-Asp) (26) and cyclic (Gly-Arg) (27), to the peak area of the aforesaid internal standard in an extracted ion chromatogram obtained by LC-MS/MS, in unheated cumin (Comparative Example 301) and in cumin heat-treated under a specified condition (Examples 301 to 319).

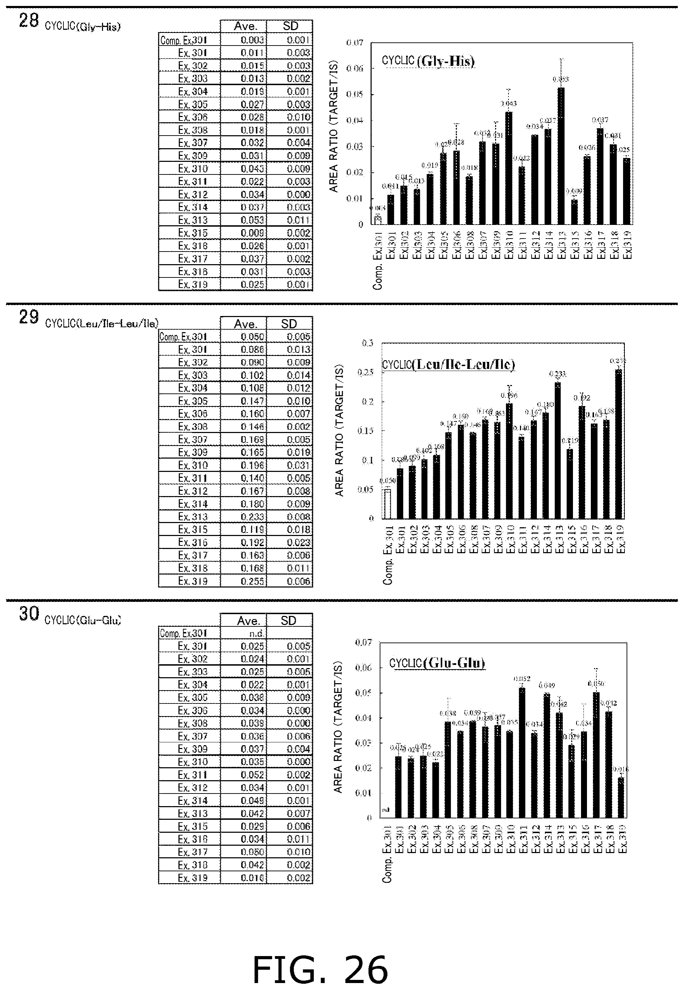

Figure 26 shows the ratio of the peak area of cyclic (Gly-His) (28), cyclic (Leu/Ile-Leu/Ile) (29) and cyclic (Glu-Glu) (30), to the peak area of the aforesaid internal standard in an extracted ion chromatogram obtained by LC-MS/MS, in unheated cumin (Comparative Example 301) and in cumin heat-treated under a specified condition (Examples 301 to 319).

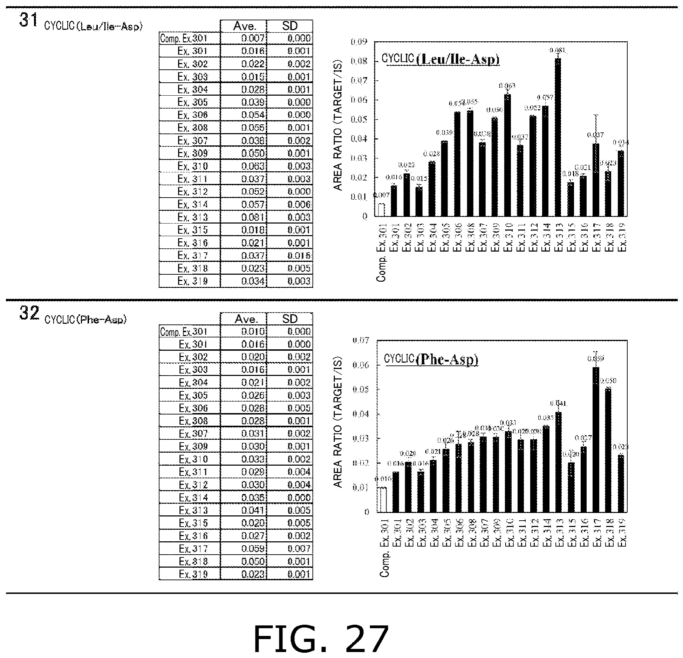

Figure 27 shows the ratio of the peak area of cyclic (Leu/Ile-Asp) (31) and cyclic (Phe-Asp) (32), to the peak area of the aforesaid internal standard in an extracted ion chromatogram obtained by LC-MS/MS, in unheated cumin (Comparative Example 301) and in cumin heat-treated under a specified condition (Examples 301 to 319).

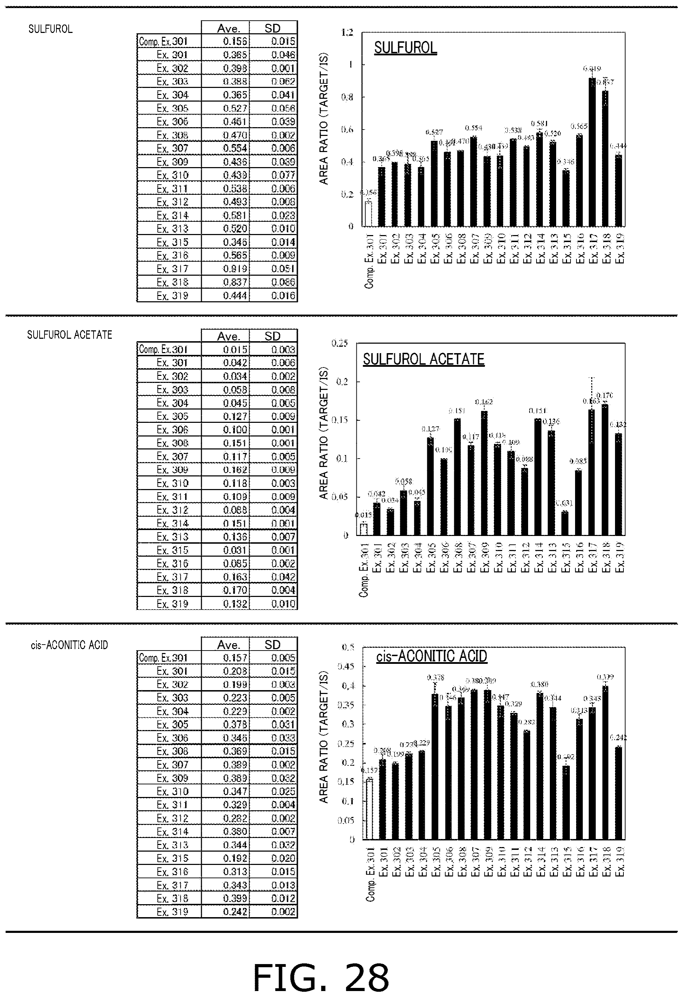

Figure 28 shows the ratio of the peak area of sulfurol (top) and sulfurol acetate (middle), to the peak area of the internal standard (47 µg/g of L-lysine-¹³C₆ monohydrochloride) in an extracted ion chromatogram obtained by LC-MS/MS, and the ratio of the peak area of cis-aconitic acid (bottom) to the peak area of the internal standard (99 µg/g of ribitol) in an extracted ion chromatogram obtained by LC-MS/MS, in unheated cumin (Comparative Example 301) and in cumin heat-treated under a specified condition (Examples 301 to 319).

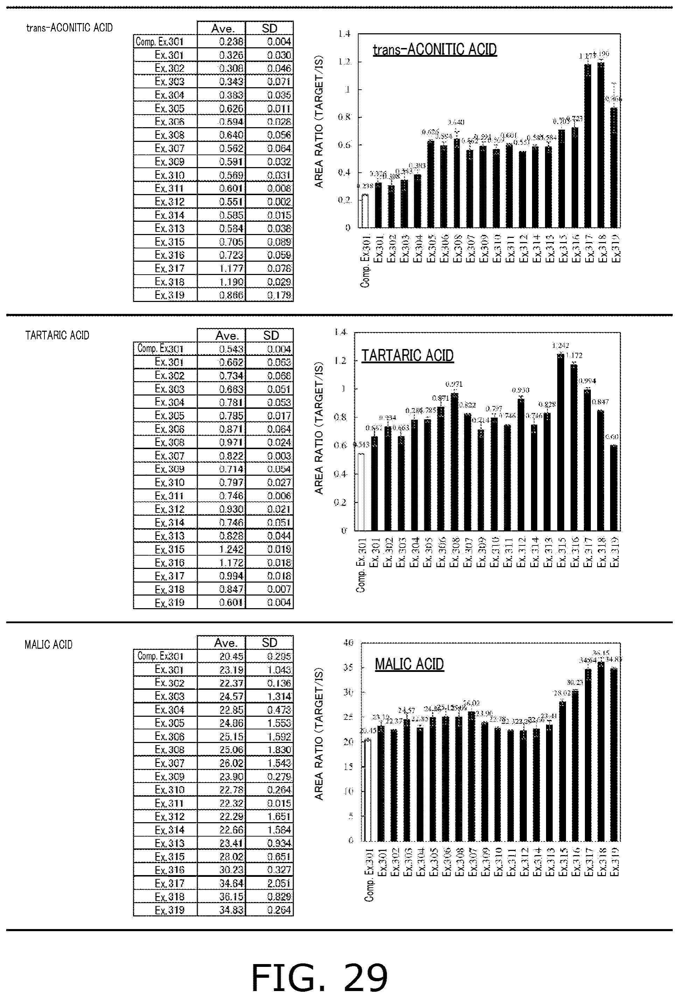

Figure 29 shows the ratio of the peak area of *trans-aconitic* acid (top), tartaric acid (middle) and malic acid (bottom), to the peak area of the internal standard (99 µg/g of ribitol) in an extracted ion chromatogram obtained by LC-MS/MS, in unheated cumin (Comparative Example 301) and in cumin heat-treated under a specified condition (Examples 301 to 319).

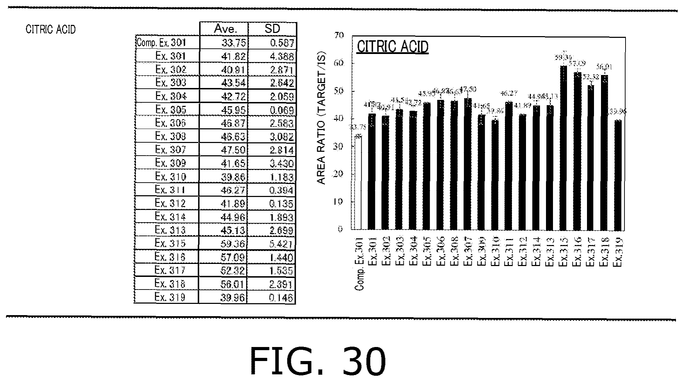

Figure 30 shows the ratio of the peak area of citric acid to the peak area of the internal standard (99 µg/g of ribitol) in an extracted ion chromatogram obtained by LC-MS/MS, in unheated cumin (Comparative Example 301) and in cumin heat-treated under a specified condition (Examples 301 to 319).

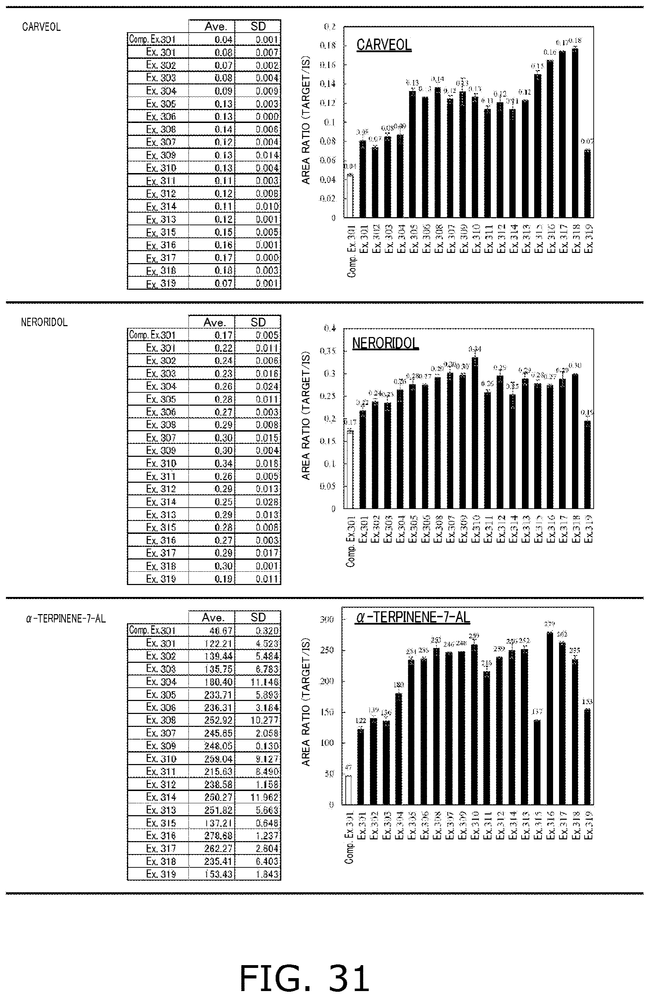

Figure 31 shows the ratio of the peak area of carveol (top), nerolidol (middle) and α-terpinene-7-al (bottom), to the peak area of the internal standard (625 µg/g of 4-methylthiazole) in an extracted ion chromatogram obtained by GC-MS, in unheated cumin (Comparative Example 301) and in cumin heat-treated under a specified condition (Examples 301 to 319).

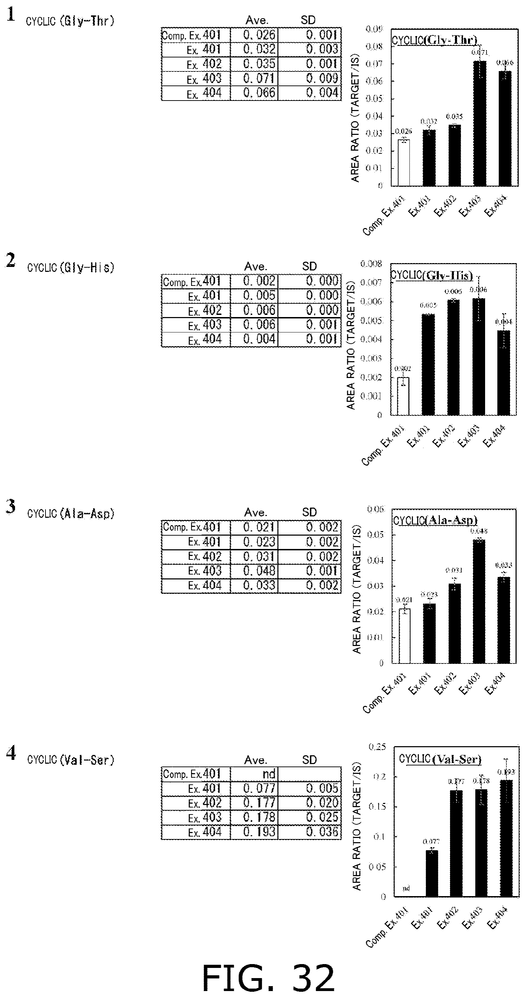

Figure 32 shows the ratio of the peak area of cyclic (Gly-Thr) (1), cyclic (Gly-His) (2), cyclic (Ala-Asp) (3) and cyclic (Val-Ser) (4), to the peak area of the internal standard (47 µg/g of L-lysine-¹³C₆ monohydrochloride) in an extracted ion chromatogram obtained by LC-MS/MS, in unheated asafoetida (Comparative Example 401) and in asafoetida heat-treated under a specified condition (Examples 401 to 404).

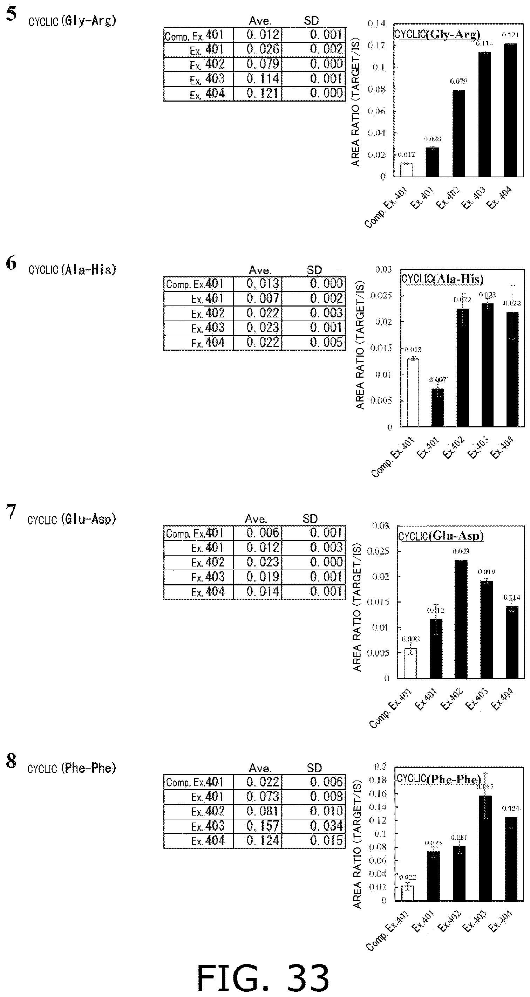

Figure 33 shows the ratio of the peak area of cyclic (Gly-Arg) (5), cyclic (Ala-His) (6), cyclic (Glu-Asp) (7) and cyclic (Phe-Phe) (8), to the peak area of the internal standard (47 µg/g of L-lysine-¹³C₆ monohydrochloride) in an extracted ion chromatogram obtained by LC-MS/MS, in unheated asafoetida (Comparative Example 401) and in asafoetida heat-treated under a specified condition (Examples 401 to 404).

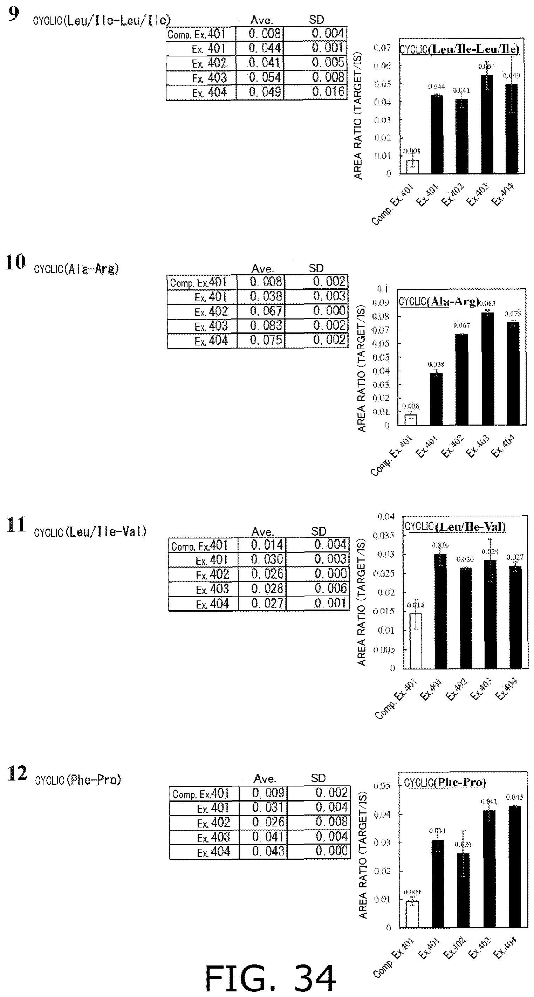

Figure 34 shows the ratio of the peak area of cyclic (Leu/Ile-Leu/Ile) (9), cyclic (Ala-Arg) (10), cyclic (Leu/Ile-Val) (11) and cyclic (Phe-Pro) (12), to the peak area of the internal standard (47 µg/g of L-lysine-¹³C₆ monohydrochloride) in an extracted ion chromatogram obtained by LC-MS/MS, in unheated asafoetida (Comparative Example 401) and in asafoetida heat-treated under a specified condition (Examples 401 to 404).

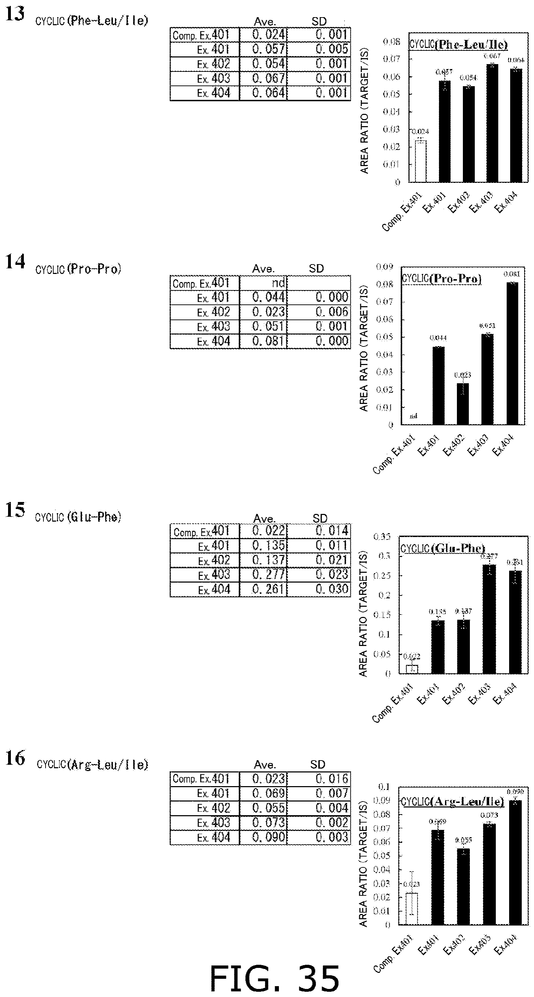

Figure 35 shows the ratio of the peak area of cyclic (Phe-Leu/Ile) (13), cyclic (Pro-Pro) (14), cyclic (Glu-Phe) (15) and cyclic (Arg-Leu/Ile) (16), to the peak area of the internal standard (47 µg/g of L-lysine-¹³C₆ monohydrochloride) in an extracted ion chromatogram obtained by LC-MS/MS, in unheated asafoetida (Comparative Example 401) and in asafoetida heat-treated under a specified condition (Examples 401 to 404).

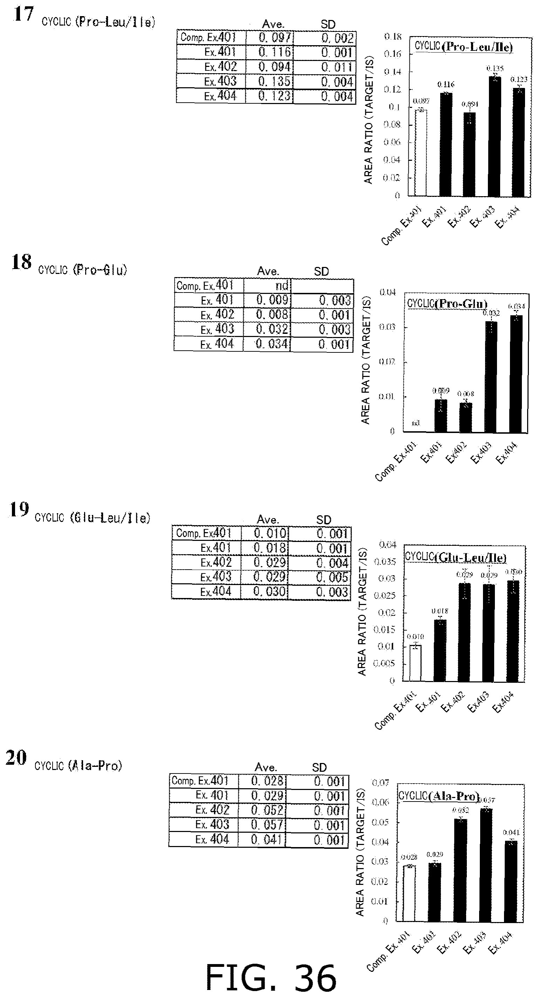

Figure 36 shows the ratio of the peak area of cyclic (Pro-Leu/Ile) (17), cyclic (Pro-Glu) (18), cyclic (Glu-Leu/Ile) (19) and cyclic (Ala-Pro) (20), to the peak area of the internal standard (47 µg/g of L-lysine-¹³C₆ monohydrochloride) in an extracted ion chromatogram obtained by LC-MS/MS, in unheated asafoetida (Comparative Example 401) and in asafoetida heat-treated under a specified condition (Examples 401 to 404).

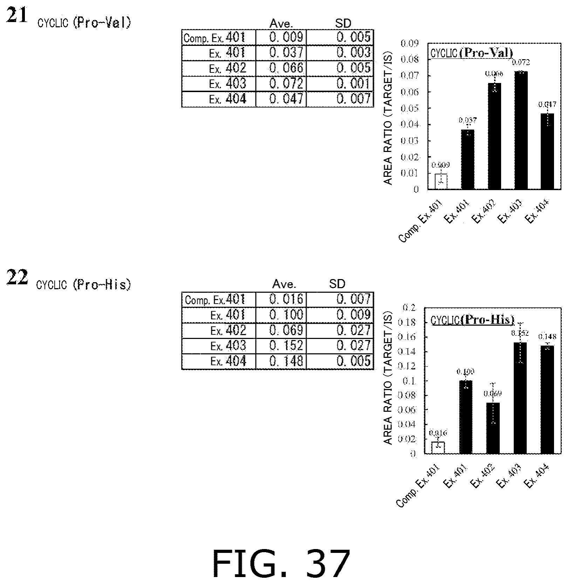

Figure 37 shows the ratio of the peak area of cyclic (Pro-Val) (21) and cyclic (Pro-His) (22), to the peak area of the internal standard (47 µg/g of L-lysine-¹³C₆ monohydrochloride) in an extracted ion chromatogram obtained by LC-MS/MS, in unheated asafoetida (Comparative Example 401) and in asafoetida heat-treated under a specified condition (Examples 401 to 404).

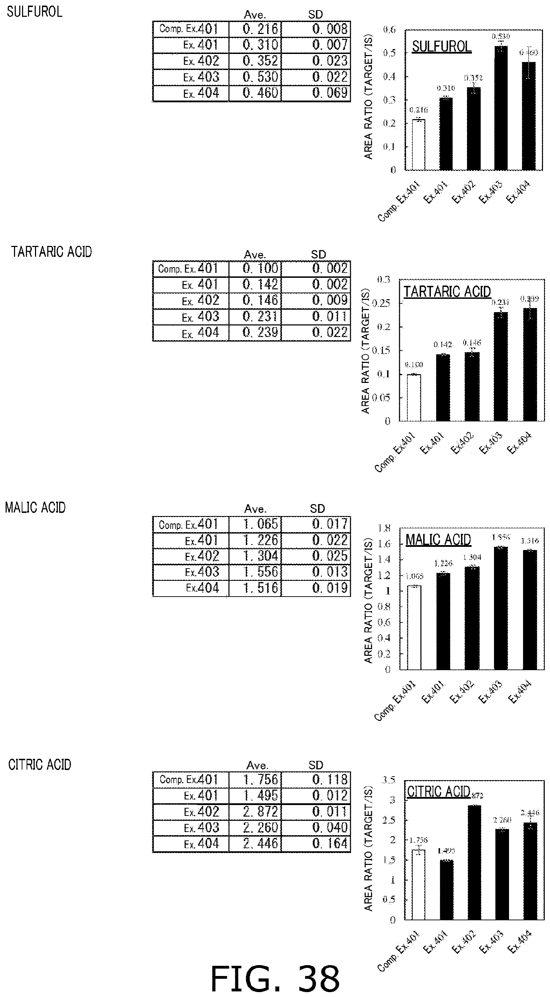

Figure 38 shows the ratio of the peak area of sulfurol to the peak area of the internal standard (47 µg/g of L-lysine-¹³C₆ monohydrochloride) in an extracted ion chromatogram obtained by LC-MS/MS, and the ratio of the peak area of tartaric acid, malic acid and citric acid, to the peak area of the internal standard (99 µg/g of ribitol) in an extracted ion chromatogram obtained by LC-MS/MS, in unheated asafoetida (Comparative Example 401) and in asafoetida heat-treated under a specified condition (Examples 401 to 404).

### Description of Embodiments

### <Flavor-enhancement>

In this specification, "flavor" refers to a flavor possessed by food products, and for example, it can be one or more selected from saltiness, sweetness, sourness, bitterness, umami, richness, sweet umami, spiciness, astringency, flavor spreading and roasted flavor. In addition, the "enhancement" of flavor refers to enhancing a flavor of a food product perceived when the food product is consumed and, for example, it refers to enhancing a weakened flavor of a food product including the flavor constituent in a reduced amount from usual (e.g., reduced-sodium food product) perceived when the food product is consumed.

In this specification, the flavor perceived when a food product is consumed can be divided into three stages: "top" perceived first, "middle" perceived second and "last" perceived last. The enhancement of flavor in this specification refers to enhancing at least one of these flavors.

In this specification, saltiness among flavors is a flavor perceived when sodium chloride is consumed. Saltiness encompasses the flavor of sodium chloride itself and a flavor perceived when sodium chloride is combined with a foodstuff other than sodium chloride. For example, the top flavor of food products including sodium chloride is exemplified by "sharp saltiness (shiokado)", which is a sharp taste of sodium chloride, the middle flavor is exemplified by "full-bodied taste" and "roasted flavor", and the last flavor is exemplified by "metal-like complexity" and "aftertaste." Saltiness may also include a taste owing to "boosting of flavor" in which the flavor of foodstuffs other than sodium chloride is enhanced by sodium chloride. The enhancement of saltiness (flavor) herein refers to enhancing at least one of these types of saltiness.

In this specification, the enhancement of flavor is preferably the enhancement of a flavor derived from one or more flavor constituents selected from sodium chloride, sucrose, citric acid, tartaric acid, naringin, glutamic acid or its salts, aspartic acid or its salts, succinic acid or its salts, inosinic acid or its salts, guanylic acid or its salts, glycine or its salts, alanine or its salts, chili pepper, black pepper, animal- or plant-derived extracts and seasonings. Salts in the aforesaid one or more of flavor constituents are exemplified by respective sodium salts. The aforesaid animal- or plant-derived extracts are exemplified by one or more extracts selected from beef extract, chicken extract, pork extract, seafood extract, garlic extract and onion extract. The aforesaid seasonings are exemplified by one or more selected from tomato paste, banana paste, apple paste, honey, soy sauce, miso, ketchup, Worcestershire sauce, mayonnaise, cheese, noodle soup base, nonfat soybean, nonfat milk powder, yeast extract, protein hydrolysis products and curry powder. The enhancement of flavor herein refers more preferably to the enhancement of a flavor derived from the aforesaid one or more flavor constituents in food products including the aforesaid one or more flavor constituents, especially in food products including the aforesaid one or more flavor constituents in a smaller amount than usual.

### <Flavor-enhancing Composition>

A first embodiment of the present invention relates to
a flavor-enhancing composition containing a cyclic dipeptide.

The flavor-enhancing composition according to this embodiment can enhance a flavor of a food product by blending the composition with the aforesaid food product. For example, a food product which includes the one or more flavor constituents as described above in a reduced amount from usual (e.g., a reduced-sodium food product including a reduced amount of sodium chloride from usual) and the flavor-enhancing composition according to this embodiment blended therewith can have, in comparison with the food product without the flavor-enhancing composition, a flavor close to that of a food product which includes the one or more flavor constituents in their usual amount, and more preferably, can have a flavor comparable to that of the food product including the one or more of flavor constituents in their usual amount.

The aforesaid cyclic dipeptide in the aforesaid flavor-enhancing composition according to this embodiment preferably contains one or more selected from the group consisting of proline, leucine, isoleucine, glycine, phenylalanine, glutamic acid, tyrosine, valine, aspartic acid, histidine, alanine, serine, arginine, threonine, asparagine and methionine, and especially preferably one or more selected from the group consisting of proline, leucine, isoleucine, glycine, phenylalanine, glutamic acid, tyrosine, valine, aspartic acid, histidine and alanine, as a constituent amino acid. The cyclic dipeptide containing one or more amino acids selected from the aforesaid group is preferred because of its particularly high flavor-enhancing effect. Specific examples of the cyclic dipeptide containing one or more amino acids selected from the aforesaid group are preferably one or more selected from the group consisting of cyclic (Pro-Asn), cyclic (Pro-His), cyclic (Pro-Asp), cyclic (Pro-Pro), cyclic (Pro-Val), cyclic (Pro-Tyr), cyclic (Pro-Leu), cyclic (Pro-Ile), cyclic (Pro-Glu), cyclic (Pro-Gly), cyclic (Pro-Met), cyclic (Arg-Pro), cyclic (Thr-Pro), cyclic (hyPro-Pro), cyclic (Leu-Leu), cyclic (Ile-Leu), cyclic (Ile-Ile), cyclic (Leu-Asp), cyclic (Ile-Asp), cyclic (Leu-Ser), cyclic (Ile-Ser), cyclic (Leu-Val), cyclic (Ile-Val), cyclic (Leu-His), cyclic (Ile-His), cyclic (Leu-Met), cyclic (Ile-Met), cyclic (Arg-Leu), cyclic (Arg-Ile), cyclic (hyPro-Leu), cyclic (hyPro-Ile), cyclic (Thr-Leu), cyclic (Thr-Ile), cyclic (Gly-His), cyclic (Gly-Ser), cyclic (Gly-Arg), cyclic (Gly-Val), cyclic (Gly-Leu), cyclic (Gly-Ile), cyclic (Gly-Phe), cyclic (Gly-Tyr), cyclic (Gly-Thr), cyclic (Gly-Gly), cyclic (Gly-Ala), cyclic (Phe-Leu), cyclic (Phe-Ile), cyclic (Phe-Ser), cyclic (Phe-Ala), cyclic (Phe-Asp), cyclic (Phe-Thr), cyclic (Phe-Pro), cyclic (Phe-Tyr), cyclic (Phe-Phe), cyclic (Glu-His), cyclic (Glu-Glu), cyclic (Glu-Arg), cyclic (Glu-Gly), cyclic (Glu-Asp), cyclic (Glu-Tyr), cyclic (Glu-Phe), cyclic (Glu-Leu), cyclic (Glu-Ile), cyclic (Tyr-Asp), cyclic (Tyr-His), cyclic (Tyr-Ser), cyclic (Val-Arg), cyclic (Val-Tyr), cyclic (Val-Val), cyclic (Val-Phe), cyclic (Val-Ser), cyclic (Ala-His), cyclic (Ala-Arg), cyclic (Ala-Pro), cyclic (Ala-Tyr), cyclic (Ala-Val), cyclic (Ala-Leu), cyclic (Ala-Ile), cyclic (Ala-Asp) and cyclic (Ala-Asn), and more preferably one or more selected from the group consisting of cyclic (Ala-Leu), cyclic (Ala-Ile), cyclic (Thr-Pro), cyclic (Pro-His), cyclic (Ala-Pro), cyclic (Arg-Pro), cyclic (Phe-Pro), cyclic (Phe-Ala), cyclic (Pro-Pro), cyclic (hyPro-Pro), cyclic (Leu-Val), cyclic (Ile-Val), cyclic (Gly-Val), cyclic (Ala-Val), cyclic (Pro-Met), cyclic (hyPro-Leu), cyclic (hyPro-Ile), cyclic (Pro-Leu), cyclic (Pro-Ile) and cyclic (Pro-Val). These specific examples of the cyclic dipeptide have a particularly high flavor-enhancing effect. Other preferred specific examples of the aforesaid cyclic dipeptide having a particularly high flavor-enhancing effect are one or more selected from the group consisting of cyclic (Pro-Met), cyclic (Glu-His), cyclic (Ala-His), cyclic (Gly-His), cyclic (Tyr-His), cyclic (Leu-His), cyclic (Ile-His), cyclic (Leu-Val), cyclic (Ile-Val), cyclic (Glu-Gly), cyclic (Pro-His) and cyclic (Glu-Phe), and are more preferably a mixture of five or more cyclic dipeptides selected from the group, especially preferably a mixture of all cyclic dipeptides of the group (provided that one or both of cyclic (Leu-His) and cyclic (Ile-His) and one or both of cyclic (Leu-Val) and cyclic (Ile-Val) are included in the mixture). In this specification, cyclic (Phe-Phe), etc. represent a cyclic dipeptide consisting of two amino acids. In this specification, "Leu/Ile" represents one of leucine (Leu) and isoleucine (Ile) or a mixture including both of them. For example, "cyclic (Leu/Ile-Val)" represents one or both of cyclic (Leu-Val) and cyclic (Ile-Val) or a mixture including both of them. In this specification, "hyPro" refers to γ-hydroxy-proline. In this specification, any amino acid constituting the cyclic dipeptide may be an L-enantiomer, a D-enantiomer, or a mixture of L- and D-enantiomers.

The enhancement of saltiness refers to enhancing one or more of the top, middle and last flavors, as described above. Cyclic dipeptides may have different profiles of flavor-enhancement depending on their constituent amino acids. In order to impart a top-flavor-enhancing effect to the flavor-enhancing composition according to this embodiment, one or more cyclic dipeptides having the top-flavor-enhancing effect can be blended. Similarly, in order to impart a middle-flavor-enhancing effect to the flavor-enhancing composition according to this embodiment, one or more cyclic dipeptides having the middle-taste-enhancing effect can be blended, and in order to impart a last-flavor-enhancing effect to the last flavor-enhancing composition according to this embodiment, one or more cyclic dipeptides having the last-flavor-enhancing effect can be blended. In addition, in order to impart flavors on a plurality of stages among the top-, middle- and last-flavors to the flavor-enhancing composition according to this embodiment, a combination of a plurality of cyclic dipeptides can be blended depending on the flavor to be enhanced.

The flavor-enhancing composition according to this embodiment contains at least a cyclic dipeptide. The flavor-enhancing composition according to this embodiment preferably contains, in addition to the cyclic dipeptide, one or more selected from the group consisting of sulfurol, sulfurol acetate, carveol, nerolidol, α-terpinene-7-al and an organic acid. The combination of the cyclic dipeptide and one or more selected from the group consisting of sulfurol, sulfurol acetate, carveol, nerolidol, α-terpinene-7-al and an organic acid further enhances the flavor-enhancing effect. The organic acid in the flavor-enhancing composition according to this embodiment is preferably one or more selected from the group consisting of cis-aconitic acid, *trans-aconitic* acid, tartaric acid, malic acid and citric acid.

In the flavor-enhancing composition according to this embodiment, the aforesaid cyclic peptide may be blended as a purified product of the aforesaid cyclic dipeptide, which may be artificially produced or naturally derived, or as a naturally derived material including the aforesaid cyclic dipeptide. The purified product of the aforesaid cyclic dipeptide only has to be in a form including a high concentration of the aforesaid cyclic dipeptide, such as a concentration of 30% by mass to 100% by mass, preferably 50% by mass to 100% by mass, more preferably 75% by mass to 100% by mass of the aforesaid cyclic dipeptide. The naturally derived materials including the aforesaid cyclic dipeptide are exemplified by a spice having an increased content of the aforesaid cyclic dipeptide and the extract thereof, obtained by heating one or more spices selected from the group consisting of coriander, paprika, cumin and asafoetida. A preferred embodiment of the aforesaid spice will be explained with regard to a second embodiment of the present invention. By heating the aforesaid spice, the content of one or more selected from the group consisting of sulfurol, sulfurol acetate, carveol, nerolidol, α-terpinene-7-al and an organic acid, in addition to the aforesaid cyclic dipeptide, is increased.

The flavor-enhancing composition according to this embodiment may consist only of the aforesaid cyclic dipeptide or a naturally derived material including the aforesaid cyclic peptide, or may include the aforesaid cyclic dipeptide or a naturally derived material including the aforesaid cyclic peptide, together with an additional material. The additional material may be exemplified by one or more materials having the flavor-enhancing effect and one or more materials acceptable as food products. The flavor-enhancing composition according to this embodiment can be in the form of powder, granule, paste, liquid, etc., and can include one or more materials acceptable as food products, such as excipients, carriers, etc., as necessary, in order to achieve a desired form of the composition.

The flavor-enhancing composition according to this embodiment can contain the aforesaid cyclic dipeptide at a percentage of preferably from 0.1% by mass or more and 100% by mass or less, more preferably from 1% by mass or more and 100% by mass or less, even more preferably 5% by mass or more and 100% by mass or less, especially preferably 10% by mass or more and 100% by mass or less.

In an aspect in which the flavor-enhancing composition according to this embodiment contains a naturally derived material including the aforesaid cyclic dipeptide, the aforesaid naturally derived material can be preferably contained in a percentage of 30% by mass or more 100% by mass or less, more preferably 50% by mass or more and 100% by mass or less, even more preferably 80% by mass or more and 100% by mass or less, most preferably 95% by mass or more and 100% by mass or less.

The naturally derived material including the aforesaid cyclic dipeptide in the flavor-enhancing composition according to this embodiment is preferably in the form of powder, and its particle size is, for example, 1000 µm or less. The particle size can be determined by the opening of a standard sieve as specified in JIS. The naturally derived material including the aforesaid cyclic dipeptide may further include oil or fat.

### <Method of Producing Flavor-enhancing Composition>

A second embodiment of the present invention relates to
a method for producing the flavor-enhancing composition according to the first embodiment of the present invention, comprising
heating one or more spices selected from the group consisting of coriander, paprika, cumin and asafoetida, to increase the cyclic dipeptide in the aforesaid spices.

The inventors have found that the cyclic dipeptide in the aforesaid spice increased when the aforesaid spice was heated. The inventors have also found that when the aforesaid spice was heated, one or more selected from the group consisting of sulfurol, sulfurol acetate, carveol, nerolidol, and α-terpinene-7-al and organic acids, in addition to the cyclic dipeptide, also increased.

The term "coriander" refers to the seed of coriander *(Coriandrum sativum),* an annual herb of the family *Seriaceae.* The coriander to be subjected to heating may be the whole seed of coriander or a pulverized product obtained by pulverizing the whole seed, but is preferably the whole seed.

The term "paprika" refers to a spice (paprika powder) made by drying and powdering the rind and pulp of the fruit of paprika *(Capsicum annuum var. grossum),* a perennial plant of the nightshade family. Hereinafter, "paprika" refers to paprika powder that can be used as a spice, unless otherwise clearly stated. Paprika powder can be subjected to heating.

The term "cumin" refers to the seed of cumin *(Cuminum cyminum),* an annual herb in the family *Seriaceae.* Cumin to be subjected to heating may be the whole seed of cumin or a pulverized product obtained by pulverizing the whole seed, but preferably the whole seed.

In this specification, asafoetida is a dried resin used as a spice, collected from asafoetida (*Ferula assa-foetida),* a member of the family *Seriaceae.* Asafoetida used as a spice may include, in addition to the asafoetida resin, an additional additive such as gum arabic and rice flour. For example, powdered asafoetida including asafoetida resin and the additive is commercially available as a spice. In this specification, asafoetida refers to asafoetida that is used as a spice and may include the aforesaid additive, unless otherwise stated. The mass of asafoetida used in the respective embodiments described below is expressed in a mass converted under the assumption that the asafoetida resin content is 12% by mass. For example, "200 mg of heat-treated asafoetida" is, when the asafoetida resin content in used asafoetida is 6% by mass, equivalent to 400 mg of the mass as a mass converted under the assumption that the asafoetida resin content is 12% by mass.

Next, the treatment of heating one or more selected from the group consisting of coriander, paprika and cumin, among the aforesaid spices, will be explained.

The treatment of heating one or more selected from the group consisting of coriander, paprika and cumin is preferably a heat-treatment that comprises heating one or more selected from the group consisting of coriander, paprika and cumin without the addition of oil or fat (hereinafter it may be referred to as "first heat-treatment"), or a heat-treatment that comprises heating one or more selected from the group consisting of coriander, paprika and cumin together with oil or fat (hereinafter it may be referred to as "second heat-treatment").

A preferred aspect of the aforesaid first heat-treatment for one or more selected from the group consisting of coriander, paprika and cumin will be explained below.

In the first heat-treatment in which one or more selected from the group consisting of coriander, paprika and cumin are heated without the addition of oil or fat, only one or more selected from the group consisting of coriander, paprika and cumin may be heated, or a mixture of one or more selected from the group consisting of coriander, paprika and cumin and water may be heated. When the mixture of one or more selected from the group consisting of coriander, paprika and cumin and water are heat-treated, the blending amount of water is not particularly limited, but preferably the amount of water can be set appropriately so that the water activity after heating may be within the range described below.

For the aforesaid first heat-treatment in heating coriander, its temperature and time period are preferably set so that a heating value may be preferably 100 or more, more preferably 1000 or more, even more preferably 5000 or more, and furthermore the heating value may be preferably 100 or more and 20000 or less. For the aforesaid first heat-treatment in heating paprika and cumin, its temperature and time period are preferably set so that the heating value may be preferably 15 or more, preferably 50 or more, preferably 60 or more, preferably 100 or more, preferably 130 or more, even more preferably 190 or more, most preferably 200 or more, and furthermore, the heating value may be preferably 15 or more and 1000 or less, preferably 15 or more and 600 or less, more preferably 60 or more and 500 or less, even more preferably 100 or more and 410 or less, especially preferably 190 or more and 410 or less. One or more selected from the group consisting of heat-treated coriander, heat-treated paprika and heat-treated cumin, which have been heat-treated under a condition whereby the heating value is in the aforesaid range, is especially preferred because they include a large amount of cyclic dipeptide. The heating condition whereby the heating value is within the aforesaid range can preferably comprise heating under the temperature and time period condition described below.

The heating value is given by the integral of the value expressed by the formula (hereinafter "CV value"),
$CV value = {10}^{\left[\left(product temperature-reference temperature\right)/Z value\right]} ,$ with respect to the heating time (min).

In this specification, "reference temperature" is 110 °C and "Z value" is 30 °C.

In the first heat-treatment, heating one or more selected from the group consisting of coriander, paprika and cumin can be carried out at a temperature of, for example, 110 °C or higher, preferably 120 °C or higher, more preferably 125 °C or higher, especially preferably 128 °C or higher, and for example, 110 °C or higher and 300 °C or lower, preferably 120 °C or higher and 250 °C or lower, preferably 125 °C or higher and 200 °C or lower, preferably 128 °C or higher and 180 °C or lower, preferably 128 °C or higher and 160 °C or lower, more preferably 128 °C or higher and 150 °C or lower. Heating one or more selected from the group consisting of coriander, paprika and cumin is carried out so that the heating time at a temperature within the aforesaid temperature range may be, for example, 5 minutes or longer, preferably 10 minutes or longer, preferably 20 minutes or longer, more preferably 30 minutes or longer, and for example 5 minutes or longer and 120 minutes or shorter, preferably 10 minutes or longer and 90 minutes or shorter, more preferably 20 minutes or longer and 75 minutes or shorter.

The first heat-treatment for coriander may be carried out in an unsealed open system or under a pressurized and sealed condition, but it is preferably a heat-treatment in an unsealed open system. The heat-treatment of coriander in an open system can be carried out by heating with superheated steam or by heating with an oven. Heating equipment used for the heat-treatment of coriander can be exemplified by superheated steam eddy current mixers, ovens, flat-bottom roasting machines, vertical heating mixers, microwave heating equipment, etc.

The first heat-treatment for one or more selected from the group consisting of paprika and cumin can be carried out under a pressure condition in which gauge pressure is preferably 0.05 MPa or higher, more preferably 0.2 MPa or higher. The upper limit of the pressure during heating is not particularly limited, but a gauge pressure of 0.6 MPa or lower is preferred from the viewpoint of equipment.

Various types of means such as pressure-tight heating, superheated steam heating, oven heating, etc. can be used for the first heat-treatment of one or more selected from the group consisting of paprika and cumin, but pressure-tight heating is preferably used. Heating equipment used for pressure-tight heating can be exemplified by pressure-tight kettles and retort sterilizers. When heating other than pressure-tight heating is utilized, ovens, flat-bottom roasting machines, vertical heating mixers, microwave heating equipment, superheated steam eddy current mixers, superheated steam sterilizers, etc. can be used appropriately.

Next, a preferred aspect of the aforesaid second heat-treatment for one or more selected from the group consisting of coriander, paprika and cumin will be explained below.

In the aforesaid second heat-treatment, one or more spices selected from the group consisting of coriander, paprika and cumin are heated together with oil or fat. The aforesaid heat-treated spice obtained by the aforesaid second heat-treatment is preferred because of its particularly strong flavor-enhancing effect. The amount of oil or fat used in the aforesaid second heat-treatment is not particularly limited, but for example, 10 parts by mass or more and 500 parts by mass or less, preferably 50 parts by mass or more and 200 parts by mass or less, of oil or fat can be used with respect to 100 parts by mass of the aforesaid spice. The aforesaid oil or fat is not limited so long as it is edible oil or fat derived from plants, animals etc. acceptable as food products. The oil or fat may be an oil or fat that has a melting point adjusted by a technique such as esterification or hydrogenation for fatty acids.

For the aforesaid second heat-treatment, its temperature and time period are preferably set so that the heating value as defined above may be preferably 0.3 or more, more preferably 0.3 or more and 6000 or less. The range of the heating value in the aforesaid second heat-treatment for paprika is exemplified by, for example, 0.3 or more and 6,000 or less, preferably 2.5 or more and 450 or less, more preferably 30 or more and 110 or less. The range of the heating value in the aforesaid second heat-treatment for coriander or cumin is exemplified by, for example, 1 or more and 6000 or less, preferably 20 or more and 4000 or less, more preferably 100 or more and 1000 or less, especially preferably 200 or more and 600 or less. The aforesaid spice heat-treated under a condition whereby the heating value is within the aforesaid range is especially preferred because the spice includes a large amount of cyclic dipeptide. The heating condition whereby the heating value is within the aforesaid range can preferably comprise heating under the temperature and time period condition described below.

In the aforesaid second heat-treatment, the mixture of one or more spices selected from the group consisting of coriander, paprika and cumin, and oil or fat can be heated at a temperature of, for example, 90 °C or higher, preferably 100 °C or higher, more preferably 120 °C or higher, more preferably 130 °C or higher, more preferably 140 °C or higher, more preferably 150 °C or higher, and for example 90 °C or higher and 230 °C or lower, preferably 100 °C or higher and 220 °C or lower, more preferably 120 °C or higher and 220 °C or lower, more preferably 130 °C or higher and 210 °C or lower, more preferably 150 °C or higher and 210 °C or lower, especially preferably 160 °C or higher and 210 °C or lower. The aforesaid second heat-treatment can be carried out so that the heating time at a temperature within the aforesaid temperature range may be, for example, 1 minute or longer, preferably 2 minutes or longer, preferably 3 minutes or longer, and for example, 1 minute or longer and 10 minutes or shorter, preferably 2 minutes or longer and 7 minutes or shorter, more preferably 3 minutes or longer and 7 minutes or shorter. The spice obtained by the aforesaid second heat-treatment under these conditions is preferred because the spice includes a particularly large amount of cyclic dipeptide.

The aforesaid second heat-treatment for one or more spices selected from the group consisting of coriander, paprika and cumin can be carried out in an either open or closed system.

The aforesaid second heat-treatment for one or more spices selected from the group consisting of coriander, paprika and cumin can be carried out by heating with superheated steam or by heating with an oven. Heating equipment used for the aforesaid second heat-treatment can be exemplified by ovens, flat-bottom roasting machines, vertical heating mixers, microwave heating equipment, etc.

One or more spices selected from the group consisting of coriander, paprika and cumin heated by the aforesaid first heat-treatment or the aforesaid second heat-treatment may be further subjected to a maturing treatment after the heat-treatment. The aforesaid maturing treatment is a storage treatment at a temperature higher than room temperature under an air atmosphere, and can be a storage treatment, for example, in an airtight container filled with air, for example, at 30 °C to 50 °C, preferably 35 °C to 45 °C, for example, for 5 days to 15 days, preferably 7 days to 10 days.

One or more spices selected from the group consisting of coriander, paprika and cumin heated by the aforesaid first or second heat-treatment preferably has a water activity measured at 25 °C of 0.85 or less, more preferably 0.81 or less, especially preferably 0.80 or less.

Next, the treatment of heating asafoetida among the aforesaid spices will be explained.

The treatment of heating asafoetida is also preferably a heat-treatment that comprises heating asafoetida without the addition of oil or fat (hereinafter it may be referred to as "first heat-treatment"), or a heat-treatment that comprises heating asafoetida together with oil or fat (hereinafter it may be referred to as "second heat-treatment").

A preferred aspect of the aforesaid first heat-treatment for asafoetida will be explained below.

For the aforesaid first heat-treatment for asafoetida, its temperature and time period are preferably set so that the heating value as defined above is preferably 15 or more, more preferably 50 or more, even more preferably 100 or more, and further so that the heating value may be preferably 15 or more and 1000 or less, more preferably 50 or more and 500 or less, even more preferably 100 or more and 410 or less, most preferably 100 or more and 300 or less. A preferred range of the heating value is exemplified by, for example, 50 or more and 300 or less. Asafoetida that has been heat-treated under a condition whereby the heating value is within the aforesaid range is particularly preferred because the asafoetida includes a large amount of cyclic dipeptide. The heating condition whereby the heating value is within the aforesaid range can preferably comprise heating under the temperature and time period condition described below.

In the aforesaid first heat-treatment to asafoetida, heating can be carried out at a temperature of, for example, 110 °C or higher, preferably 120 °C or higher, more preferably 125 °C or higher, especially preferably 128 °C or higher, and for example, 100 °C or higher and 180 °C or lower, preferably 120 °C or higher and 160 °C or lower, more preferably 125 °C or higher and 150 °C or lower, especially preferably 128 °C or higher and 150 °C or lower. The aforesaid first heat-treatment can be carried out so that the heating time at a temperature within the aforesaid temperature range may be, for example, 20 minutes or longer, preferably 30 minutes or longer, and for example, 20 minutes or longer and 120 minutes or shorter, preferably 30 minutes or longer and 90 minutes or shorter, more preferably 30 minutes or longer and 60 minutes or shorter. Asafoetida obtained by the aforesaid first heat-treatment under these conditions is preferred because the asafoetida includes a larger amount of cyclic dipeptides.

The aforesaid first heat-treatment can be carried out under a pressure condition in which gauge pressure is preferably 0.05 MPa or higher, more preferably 0.2 MPa or higher. The upper limit of the pressure during heating is not particularly limited, but a gauge pressure of 0.6 MPa or lower is preferred from the viewpoint of equipment.

Asafoetida only or a mixture of asafoetida and water may be subjected to the aforesaid first heat-treatment. The blending amount of water in the mixture of asafoetida and water is not particularly limited, but preferably can be set appropriately so that the water activity after heating may be within the range described below.

Various types of means such as pressure-tight heating, superheated steam heating, oven heating, etc. can be used for the aforesaid first heat-treatment, but pressure-tight heating is preferably used. Heating equipment used for pressure-tight heating can be exemplified by pressure-tight kettles and retort sterilizers. When heating other than pressure-tight heating is utilized, ovens, flat-bottom roasting machines, vertical heating mixers, microwave heating equipment, superheated steam eddy current mixers, superheated steam sterilizers, etc. can be used appropriately.

Next, a preferred aspect of the aforesaid second heat-treatment for asafoetida will be explained below.

In the aforesaid second heat-treatment, asafoetida is heated together with oil or fat. The heat-treated asafoetida obtained by the aforesaid second heat-treatment is preferred because of its particularly strong flavor-enhancing effect. The amount of oil or fat used in the aforesaid second heat-treatment is not particularly limited, but for example, 10 parts by mass or more and 500 parts by mass or less, preferably 50 parts by mass or more and 200 parts by mass or less, of oil or fat can be used with respect to 100 parts by mass of asafoetida. The aforesaid oil or fat is not limited so long as it is edible oil or fat derived from plants, animals etc. acceptable as food products. The oil or fat may be an oil or fat that has a melting point adjusted by a technique such as esterification or hydrogenation for fatty acids.

For the aforesaid second heat-treatment, its temperature and time period are preferably set so that the heating value as defined above may be preferably 5 or more, more preferably 10 or more, even more preferably 20 or more. The upper limit of the heating value in the aforesaid second heat-treatment is exemplified by, for example, 100 or less, preferably 50 or less, more preferably 40 or less. That is, the heating value is exemplified by preferably 5 or more and 100 or less, more preferably 10 or more and 50 or less, even more preferably 20 or more and 40 or less. Asafoetida heat-treated under a condition whereby the heating value is within the aforesaid range is particularly preferred because the asafoetida includes a large amount of cyclic dipeptide. The heating condition whereby the heating value is within the aforesaid range can preferably comprise heating under the temperature and time period condition described below.

In the aforesaid second heat-treatment, the mixture of asafoetida and oil or fat can be heated at a temperature of, for example, 90 °C or higher, preferably 100 °C or higher, more preferably 110 °C or higher, more preferably 120 °C or higher, especially preferably 125 °C or higher, and for example, 180 °C or lower, preferably 100 °C or higher and 160 °C or lower, more preferably 110 °C or higher and 150 °C or lower. The aforesaid second heat-treatment can be carried out so that the heating time at a temperature within the aforesaid temperature range may be, for example, 2 minutes or longer, preferably 3 minutes or longer, and for example, 2 minutes or longer and 10 minutes or shorter, preferably 3 minutes or longer and 7 minutes or shorter. Asafoetida obtained by the aforesaid second heat-treatment under these conditions is preferred because it includes a particularly large amount of cyclic dipeptide.

The aforesaid second heat-treatment can be carried out in an either open or closed system.

The aforesaid second heat-treatment can be carried out by heating with superheated steam or by heating with an oven. Heating equipment used for the aforesaid second heat-treatment can be exemplified by ovens, flat-bottom roasting machines, vertical heating mixers, microwave heating equipment, etc.

The asafoetida obtained by the heat-treatment preferably has a water activity measured at 25 °C of 0.70 or less, more preferably 0.60 or less, especially preferably 0.50 or less.

Next, one or more selected from the group consisting of a cyclic dipeptide, sulfurol, sulfurol acetate, carveol, nerolidol, α-terpinene-7-al and an organic acid, which are increased by heating one or more spices selected from the group consisting of coriander, paprika, cumin and asafoetida in this embodiment will be explained.

One or more selected from the group consisting of the cyclic dipeptide, sulfurol, sulfurol acetate, carveol, nerolidol, α-terpinene-7-al and the organic acid explained with regard to the flavor-enhancing composition according to the first embodiment of the present invention are increased by heating one or more spices selected from the group consisting of coriander, paprika, cumin and asafoetida. The cyclic dipeptide is preferably a cyclic dipeptide containing one or more selected from the group consisting of proline, leucine, isoleucine, glycine, phenylalanine, glutamic acid, tyrosine, valine, aspartic acid, histidine, alanine, serine, arginine, threonine, asparagine and methionine as constituent amino acids, especially preferably a cyclic dipeptide containing one or more selected from the group consisting of proline, leucine, isoleucine, glycine, phenylalanine, glutamic acid, tyrosine, valine, aspartic acid, histidine and alanine, and their suitable specific examples are as described above.

Cyclic dipeptides increased by heating coriander are typically exemplified by one or more selected from the cyclic dipeptides assigned the coriander IDs: 1 to 60 shown in the table at the end of Examples. Furthermore, by heating coriander, one or more selected from sulfurol, sulfurol acetate and an organic acid are increased, and in particular, one or more selected from sulfurol, sulfurol acetate, tartaric acid, malic acid and trans-aconitic acid are increased.

Cyclic dipeptides increased by heating paprika are typically exemplified by one or more selected from the cyclic dipeptides assigned the paprika IDs: 1 to 48 described in the table at the end of Examples. Furthermore, by heating paprika, one or more selected from sulfurol, sulfurol acetate and the organic acid are increased, and in particular, one or more selected from sulfurol(4-methyl-5-thiazoleethanol), sulfurol acetate, trans-aconitic acid and tartaric acid are increased.

The cyclic dipeptide increased by heating cumin is typically exemplified by one or more selected from the cyclic dipeptides assigned the cumin IDs: 1 to 32 described in the table at the end of Examples. Furthermore, by heating cumin, one or more selected from sulfurol, sulfurol acetate, carveol, nerolidol, α-terpinene-7-al and an organic acid are increased, and in particular, sulfurol, sulfurol acetate cis-aconitic acid, trans-aconitic acid, tartaric acid, malic acid and citric acid are increased.

Cyclic dipeptides increased by heating asafoetida are typically exemplified by one or more selected from the cyclic dipeptides assigned the asafoetida IDs: 1 to 22 described in the table at the end of Examples. Furthermore, by heating asafoetida, one or more selected from sulfurol, sulfurol acetate and an organic acid are increased, and in particular, one or more selected from sulfurol, tartaric acid, malic acid and citric acid are increased.

The method for producing a flavor-enhancing composition according to this embodiment may use the aforesaid spice itself after heating as a flavor-enhancing composition, or may further include a step of extracting, concentrating or refining the aforesaid cyclic dipeptide from the aforesaid spice after heating, or may further include a step of processing the aforesaid spice itself after heating, or the aforesaid cyclic dipeptide extracted, concentrated or refined from the aforesaid spice after heating into the form of powder, granule, paste, liquid or the like.

### <Flavor-enhanced Food Product>

A third embodiment of the present invention relates to
a food product containing the flavor-enhancing composition according to the first embodiment of the present invention.

The food product according to this embodiment is a flavor-enhanced food product. The food product according to this embodiment is preferably a food product including one or more of the above-described flavor constituents in a reduced amount from usual (e.g., a reduced-sodium food product including a reduced amount of sodium chloride from usual). The food product according to this embodiment can preferably include one or more flavor constituents, and more preferably can include sodium chloride.

The blending amount of the flavor-enhancing composition according to the first embodiment of the present invention in the food product according to this embodiment is not particularly limited and can be adjusted appropriately, according to the form of the food product. For example, when the food product according to this embodiment is a food product containing sodium chloride, the flavor-enhancing composition according to the first embodiment of the present invention can be blended so that the amount of the cyclic dipeptide may be preferably 0.005 g or more, more preferably 0.010 g or more, especially 0.020 g or more, and preferably 0.005 g or more and 50.0 g or less, more preferably 0.010 g or more and 20.0 g or less, especially preferably 0.020 g or more and 10.0 g or less per 100,000 g of sodium chloride equivalent of the food product.

The type of the food product according to this embodiment is not limited, but the examples are curry sauces, stew sauces, meat products, prepared foods and confectionery.

### <Method for Enhancing Flavor>

A fourth embodiment of the present invention relates to
a method for enhancing the flavor of a food product, comprising blending the flavor-enhancing composition according to the first embodiment of the present invention with a food product.

As the method according to this embodiment can enhance the flavor of food products, it can be suitably used to enhance the flavor of a food product including one or more of the above-described flavor constituents in a reduced amount from usual (e.g., a reduced-sodium food product in which the sodium chloride amount is reduced from usual).

The blending amount of the flavor-enhancing composition according to the first embodiment of the present invention is not particularly limited and can be adjusted as appropriately, according to the form of the food product. For example, for the purpose of enhancing saltiness, the flavor-enhancing composition according to the first embodiment of the present invention can be blended so that the cyclic dipeptide may be preferably 0.005 g or more, more preferably 0.010 g or more, especially 0.020 g or more, and preferably 0.020 g or more and 50.0 g or less, more preferably 0.010 g or more and 20.0 g or less, especially preferably 0.020 g or more and 10.0 g or less per 100,000 g of sodium chloride equivalent of the food product.

The type of the food product is not limited, but the examples are curry sauces, stew sauces, meat products, prepared foods and confectionery. The aforesaid food product may be a food product including such one or more flavor constituents as described above in a reduced amount from usual. The aforesaid food product may be a food product including one or more flavor constituents as described above, e.g., sodium chloride.

### <One or More Further Embodiments>

One or more further embodiments of the present invention relates to
use of a cyclic dipeptide for enhancing a flavor of a food product,
a method for enhancing a flavor of a food product, comprising blending the cyclic dipeptide with the food product,
a cyclic dipeptide for use in enhancing a flavor of a food product or
use of the cyclic dipeptide in producing an additive for use in enhancing a flavor of a food product.

In this embodiment, the aforesaid cyclic dipeptide can preferably have the feature described with regard to the cyclic dipeptide included in the flavor-enhancing composition according to the first embodiment of the present invention.

In this embodiment, the aforesaid cyclic dipeptide can be a combination of the aforesaid cyclic dipeptide and one or more selected from the group consisting of sulfurol, sulfurol acetate, carveol, nerolidol, α-terpinene-7-al and an organic acid.

In this embodiment, the aforesaid cyclic dipeptide can be included in one or more spices selected from the group consisting of heat-treated coriander, heat-treated paprika, heat-treated cumin and heat-treated asafoetida. The aforesaid heat-treated spices can be preferably provided with the feature described with regard to heat-treated spices that can be included in the flavor-enhancing composition according to the first embodiment of the present invention.

In this embodiment, the aforesaid food product can preferably be provided with the feature described with regard to the third and fourth embodiments of the present invention.

In this embodiment, the aforesaid cyclic dipeptide can preferably be blended with a food product so that the cyclic dipeptide may be preferably 0.005 g or more, more preferably 0.010 g or more, especially 0.020 g or more, and preferably 0.005 g or more and 50.0 g or less, more preferably 0.010 g or more and 20.0 g or less, especially preferably 0.020 g or more and 10.0 g or less per 100,000 g of sodium chloride equivalent of the aforesaid food product, and can be used for enhancing the flavor of the aforesaid food product.

### Examples

### 1. Experiment 1: Flavor-enhancing Effect of Heat-treated Coriander and Cyclic Dipeptide Included Therein

### 1.1. Preparation of Heat-treated Coriander

Heat-treated coriander was prepared under the conditions shown in the table described below. The heating values are values given by the integral of the CV value according to the aforesaid formula ("reference temperature" is 110 °C and "Z value" is 30 (°C)) with respect to the heating time (min), as previously described. The temperatures and time periods described in the heating condition column are maximum reached temperatures and their holding times, and the heating values were calculated on the basis of temperature-change over time, including the values of the temperature and time during temperature rise and fall.

**[Table 1]**

| | Heating condition | Heating value | Aw | Temp. (° C) |
|---|---|---|---|---|
| control | unheated | - | 0.6254 | 25.03 |
| heat-treated coriander | 250° C for 6 min, w/o water | 11000 | 0.2098 | 25.07 |

The control is coriander without heat-treatment including heat sterilization.

The heat-treatment of coriander was carried out for 100 g of whole coriander seed placed in an open container (oven), so that the heating conditions and the heating values shown in Table 1 were achieved.

Respective water activities (Aw) for unheated (control) and heat-treated corianders were measured under the temperature conditions described in the table described above.

### 1.2. Constituent Analysis

Constituents in the unheated coriander described above (control) and heat-treated coriander were analyzed using the following procedure.

### (1) LC-MS/MS Test Solution Preparation

Into a 10-mL test tube was taken 200 mg of the unheated coriander (control) or the heat-treated coriander, and 5 mL of ultrapure water was added. The test tube was kept heated for 30 minutes in a thermostatic water bath set to 80 °C and then left to stand down to room temperature. To the test tube was added 5 mL of acetonitrile (FUJIFILM Wako Pure Chemicals), and furthermore, L-lysine-¹³C₆ monohydrochloride (FUJIFILM Wako Pure Chemicals) and ribitol (Fujifilm Wako Pure Chemicals) were added as an internal standard in Positive mode and an internal standard in Negative mode, respectively. L-lysine-¹³C₆ monohydrochloride and ribitol were added so as to be 47 µg/g and 99 µg/g with respect to the coriander, respectively. The test tube was shaken with a high-speed shaker (CM-1000, TOKYO RIKAKIKAI CO., LTD.) at room temperature and 1,800 rpm for 30 minutes, and after centrifugation, 0.5 mL of the solution in the test tube was transferred to an ultrafiltration filter (Nanosep Centrifugal Filtration Device 3K, Nippon Paul). After centrifuging the ultrafiltration filter at room temperature and 15,000 rpm x 20 minutes, 0.5 mL of ultrapure water was added to a filtrate under the filter, which was then vortexed for 10 seconds. The solution after passing through a 0.2 µm filter was used as an LC-MS/MS specimen (n=2).

### (2) LC-MS/MS Analysis Condition

The analysis condition for LC-orbitrap-MS is shown below.

### Analytical Apparatus:

LC: Vanquish Flex (Thermo Fisher Scientific)
MS: ID-X (Thermo Fisher Scientific)

### Analysis column: Unison UK-C18, 3 µm [particle size], 250 mm [length] x 4.6 mm [inside diameter] (Imtakt)

### LC Condition:

Column temperature: 40 °C
Injection volume: 5 µL
Mode: ESI positive, ESI negative
Flow rate: 0.3 mL/min
Mobile phase:
   Liquid A 0.1% of formic acid solution (formic acid: LCMS grade, FUJIFILM Wako Pure Chemicals)
   Liquid B acetonitrile (LCMS grade, FUJIFILM Wako Pure Chemicals)
   Mobile phase composition - analysis time 70 min.

**[Table 2]**

| LC-MS/MS mobile phase composition | | | | | | | | | |
|---|---|---|---|---|---|---|---|---|---|
| | 0 min | 15 min | 35 min | 40 min | 53 min | 54 min | 59 min | 60 min | 70 min |
| Liquid A (%) | 100 | 100 | 70 | 50 | 50 | 0 | 0 | 100 | 100 |
| Liquid B (%) | 0 | 0 | 30 | 50 | 50 | 100 | 100 | 0 | 0 |

### MS Condition:

Ion source temperature: 230 °C, collision energy: 30 eV
Monitoring ions: shown in the table described below.

### (3) Data Analysis

From LC-MS/MS chromatogram, the precise mass of the precursor ion > the product ion of respective constituents was extracted and the peak area was obtained. Constituents in respective specimens were compared by calculating the ratio of the peak area of product ions (= the peak area of the product ion of the respective constituents / the peak area of the product ion of the internal standard). In the table described below, "compound ID" is a number specifying 64 cyclic dipeptides that were found to be increased in the heat-treated coriander, as well as in heat-treated paprika, cumin and asafoetida, as will be described below, in comparison with unheated ones. In the table described below, "coriander ID" is a number specifying 60 cyclic dipeptides that were found to be increased in the heat-treated coriander in comparison with the unheated coriander. In the table described below, A1 and A2 indicate two amino acids constituting respective cyclic dipeptides, specified by "compound ID" and "coriander ID".

**[Table 3]**

| Constituents detected in LC-MS/MS analysis (other than cyclic dipeptides) and analysis condition (Positive mode) | | | |
|---|---|---|---|
| Constituent name | Retention time (min) | [M+H] | |
| | | Precursor Ion | Product Ion |
| internal standard: L-lysine-¹³C₆ | 8.0 | 153.1327 | 89.0974 |
| 4-methyl-5-thiazoleethanol(sulfurol) | 35.5 | 144.0477 | 113.0293 |
| sulfurol acetate | 49.8 | 186.0583 | 126.0372 |

**[Table 4]**

| Constituents detected in LC-MS/MS analysis (cyclic dipeptides) and analysis condition (Positive mode) | | | | | | |
|---|---|---|---|---|---|---|
| Compound ID | Coriander ID | A1 | A2 | Retention time (min) | Precursor Ion [M+H] | Product Ion [M+H] |
| 1 | 1 | Leu/Ile | Leu/Ile | 50.5 | 227.1755 | 86.0962 |
| 2 | 2 | Phe | Leu/Ile | 50.7 | 261.1598 | 120.0808 |
| 3 | 3 | Thr | Leu/Ile | 38.9 | 215.1391 | 169.1337 |
| 4 | 4 | Gly | His | 9.5 | 195.0877 | 122.0712 |
| 7 | 5 | Gly | Ser | 11.0 | 145.0608 | 85.0395 |
| 8 | 6 | Glu | His | 14.1 | 267.1088 | 110.0712 |
| 10 | 7 | Gly | Arg | 12.8 | 214.1299 | 155.0815 |
| 11 | 8 | Glu | Arg | 16.0 | 286.1510 | 227.1022 |
| 12 | 9 | Glu | Gly | 18.2 | 187.0714 | 84.0441 |
| 13 | 10 | Ala | His | 11.3 | 209.1034 | 110.0713 |
| 14 | 11 | Ala | Arg | 15.9 | 228.1456 | 169.0970 |
| 15 | 12 | Glu | Asp | 22.1 | 245.0769 | 84.0441 |
| 16 | 13 | Leu/Ile | Asp | 41.0 | 229.1183 | 141.1022 |
| 17 | 14 | Thr | Pro | 35.7 | 199.1078 | 125.0707 |
| 18 | 15 | Pro | His | 29.5 | 235.1190 | 110.0712 |
| 19 | 16 | Pro | Asp | 34.7 | 213.0870 | 125.0706 |
| 20 | 17 | hyPro | Pro | 35.5 | 211.1079 | 70.0650 |
| 21 | 18 | Pro | Pro | 39.2 | 195.1128 | 70.0649 |
| 22 | 19 | Glu | Tyr | 34.5 | 293.1133 | 247.1078 |
| 23 | 20 | Val | Arg | 34.4 | 256.1769 | 197.1284 |
| 24 | 21 | Gly | Val | 35.8 | 157.0972 | 72.0805 |
| 25 | 22 | Arg | Leu/Ile | 37.0 | 270.1925 | 211.1438 |
| 26 | 23 | Ala | Pro | 36.6 | 169.0968 | 70.0649 |
| 27 | 24 | Leu/Ile | Ser | 37.9 | 201.1234 | 86.0962 |
| 28 | 25 | Gly | Leu/Ile | 40.0 | 171.1128 | 86.0962 |
| 29 | 26 | Ala | Tyr | 37.6 | 235.1072 | 136.0756 |
| 30 | 27 | Ala | Val | 38.9 | 171.1125 | 72.0806 |
| 31 | 28 | Gly | Phe | 42.1 | 205.0972 | 120.0808 |
| 32 | 29 | Pro | Val | 42.9 | 197.1285 | 70.0650 |
| 33 | 30 | Tyr | Ser | 35.6 | 251.1027 | 107.0487 |
| 34 | 31 | Pro | Tyr | 41.9 | 261.1234 | 136.0756 |
| 35 | 32 | Ala | Leu/Ile | 43.5 | 185.1285 | 86.0963 |
| 36 | 33 | Phe | Ala | 44.9 | 219.1128 | 120.0808 |
| 37 | 34 | Phe | Asp | 42.6 | 263.1027 | 175.0863 |
| 38 | 35 | Val | Tyr | 43.9 | 263.1391 | 136.0756 |
| 39 | 36 | Val | Val | 45.9 | 199.1442 | 72.0806 |
| 40 | 37 | Phe | Thr | 42.8 | 249.1234 | 91.0542 |
| 41 | 38 | Val | Phe | 49.5 | 247.1442 | 120.0806 |
| 42 | 39 | Pro | Leu/Ile | 46.9 | 211.1442 | 70.0650 |
| 43 | 40 | Phe | Pro | 48.3 | 245.1285 | 120.0808 |
| 45 | 41 | Phe | Tyr | 47.6 | 311.1391 | 136.0754 |
| 46 | 42 | Leu/Ile | Val | 48.5 | 213.1599 | 72.0806 |
| 47 | 43 | Phe | Phe | 51.6 | 295.1442 | 120.0808 |
| 48 | 44 | Gly | Tyr | 36.4 | 221.0921 | 107.0487 |
| 49 | 45 | Arg | Pro | 34.2 | 254.1607 | 195.1128 |
| 50 | 60 | Gly | Thr | 12.6 | 159.0765 | 113.0710 |
| 51 | 58 | Ala | Asp | 17.3 | 187.0714 | 99.0550 |
| 52 | 59 | Val | Ser | 33.9 | 187.1078 | 72.0807 |
| 53 | 46 | Glu | Phe | 46.1 | 277.1183 | 120.0808 |
| 54 | 47 | Glu | Leu/Ile | 44.5 | 243.1340 | 86.0962 |
| 55 | 48 | Pro | Glu | 36.7 | 227.1027 | 84.0443 |
| 56 | 49 | Pro | Gly | 34.4 | 155.0816 | 70.0650 |
| 57 | 50 | Tyr | His | 33.7 | 301.1296 | 110.0713 |
| 58 | 51 | hyPro | Leu/Ile | 41.3 | 227.1391 | 153.1383 |
| 59 | 52 | Leu/Ile | His | 36.8 | 251.1503 | 110.0713 |
| 60 | 53 | Pro | Met | 43.1 | 229.1006 | 181.0972 |
| 61 | 54 | Gly | Gly | 12.8 | 115.0503 | 58.0286 |
| 62 | 55 | Leu/Ile | Met | 49.5 | 245.1319 | 86.0963 |
| 63 | 56 | Ala | Asn | 11.3 | 186.0874 | 83.0606 |
| 64 | 57 | Gly | Ala | 16.6 | 129.0659 | 55.0177 |

**[Table 5]**

| Constituents detected in LC-MS/MS analysis and analysis condition (Negative mode) | | | |
|---|---|---|---|
| Constituent name | retention time (min) | [M-H] | |
| | | Precursor Ion | Product Ion |
| internal standard: ribitol | 9.7 | 151.0607 | 71.0138 |
| tartaric acid | 10.6 | 149.0086 | 72.9931 |
| malic acid | 13.1 | 133.0142 | 71.0138 |
| *trans-*aconitic acid | 33.6 | 173.0091 | 111.0087 |

The ratios of the peak area of cyclic peptides detected in LC-MS/MS specimens prepared from the respective samples, to the internal standard are shown in Figures 1-2 and the table described below. The ratios of the peak area of sulfurol, sulfurol acetate and organic acids (tartaric acid, malic acid and trans-aconitic acid) detected in LC-MS/MS specimens prepared from the respective samples, to the internal standard are also shown in Figure 3. It was confirmed that heating coriander significantly increased the content of 60 cyclic dipeptides shown in the table described above, as well as sulfurol, sulfurol acetate, and organic acids (tartaric acid, malic acid and *trans-aconitic* acid).

**[Table 6]**

| Content of cyclic dipeptides in unheated coriander and heat-treated coriander (area ratio to standard peak area) and increase magnification by heating | | | | | | | |
|---|---|---|---|---|---|---|---|
| | | | Unheated | | Heated | | Magnification (heated/unheated) |
| Coriander ID | A1 | A2 | Average value | Standard deviation | Average value | Standard deviation | |
| 1 | Leu/Ile | Leu/Ile | 0.029 | 0.003 | 0.645 | 0.070 | 22.4 |
| 2 | Phe | Leu/Ile | 0.022 | 0.005 | 0.833 | 0.110 | 38.6 |
| 3 | Thr | Leu/Ile | nd | | 0.010 | 0.002 | * |
| 4 | Gly | His | 0.003 | 0.001 | 0.122 | 0.006 | 39.7 |
| 5 | Gly | Ser | nd | | 0.028 | 0.006 | * |
| 6 | Glu | His | 0.038 | 0.003 | 0.385 | 0.035 | 10.2 |
| 7 | Gly | Arg | 0.145 | 0.006 | 0.722 | 0.075 | 5.0 |
| 8 | Glu | Arg | 0.026 | 0.015 | 0.297 | 0.015 | 11.4 |
| 9 | Glu | Gly | 0.051 | 0.009 | 1.345 | 0.003 | 26.3 |
| 10 | Ala | His | nd | | 0.208 | 0.025 | * |
| 11 | Ala | Arg | 0.044 | 0.030 | 0.710 | 0.020 | 16.3 |
| 12 | Glu | Asp | 0.021 | 0.003 | 0.142 | 0.006 | 6.7 |
| 13 | Leu/Ile | Asp | 0.006 | 0.001 | 0.136 | 0.004 | 24.5 |
| 14 | Thr | Pro | 0.010 | 0.001 | 0.341 | 0.041 | 34.3 |
| 15 | Pro | His | 0.014 | 0.001 | 0.901 | 0.193 | 66.2 |
| 16 | Pro | Asp | 0.012 | 0.000 | 0.170 | 0.040 | 13.9 |
| 17 | hyPro | Pro | 0.009 | 0.003 | 0.123 | 0.015 | 14.0 |
| 18 | Pro | Pro | 0.026 | 0.001 | 1.437 | 0.191 | 54.8 |
| 19 | Glu | Tyr | 0.009 | 0.001 | 0.174 | 0.023 | 19.2 |
| 20 | Val | Arg | 0.018 | 0.000 | 0.317 | 0.001 | 17.2 |
| 21 | Gly | Val | nd | | 0.179 | 0.027 | * |
| 22 | Arg | Leu/Ile | 0.031 | 0.004 | 0.676 | 0.039 | 21.8 |
| 23 | Ala | Pro | nd | | 0.262 | 0.035 | * |
| 24 | Leu/Ile | Ser | nd | | 0.076 | 0.003 | * |
| 25 | Gly | Leu/Ile | 0.002 | 0.001 | 0.084 | 0.011 | 33.7 |
| 26 | Ala | Tyr | nd | | 0.208 | 0.007 | * |
| 27 | Ala | Val | 0.013 | 0.003 | 0.084 | 0.010 | 6.6 |
| 28 | Gly | Phe | nd | | 0.007 | 0.000 | * |
| 29 | Pro | Val | 0.010 | 0.002 | 0.166 | 0.019 | 17.0 |
| 30 | Tyr | Ser | nd | | 0.088 | 0.000 | * |
| 31 | Pro | Tyr | 0.003 | 0.000 | 0.308 | 0.038 | 114.3 |
| 32 | Ala | Leu/Ile | 0.028 | 0.007 | 0.928 | 0.122 | 33.4 |
| 33 | Phe | Ala | nd | | 0.194 | 0.005 | * |
| 34 | Phe | Asp | 0.003 | 0.000 | 0.081 | 0.003 | 29.5 |
| 35 | Val | Tyr | 0.003 | 0.002 | 0.055 | 0.010 | 16.8 |
| 36 | Val | Val | 0.007 | 0.003 | 0.100 | 0.008 | 13.8 |
| 37 | Phe | Thr | nd | | 0.040 | 0.002 | * |
| 38 | Val | Phe | nd | | 0.030 | 0.012 | * |
| 39 | Pro | Leu/Ile | 0.019 | 0.003 | 5.576 | 0.327 | 289.0 |
| 40 | Phe | Pro | 0.025 | 0.008 | 0.642 | 0.085 | 25.8 |
| 41 | Phe | Tyr | 0.003 | 0.000 | 0.045 | 0.006 | 15.0 |
| 42 | Leu/Ile | Val | 0.012 | 0.002 | 0.147 | 0.013 | 11.8 |
| 43 | Phe | Phe | 0.014 | 0.000 | 0.223 | 0.007 | 15.9 |
| 44 | Gly | Tyr | 0.022 | 0.001 | 0.054 | 0.005 | 2.4 |
| 45 | Arg | Pro | 0.019 | 0.007 | 0.332 | 0.057 | 17.6 |
| 60 | Gly | Thr | 0.051 | 0.008 | 0.065 | 0.004 | 1.3 |
| 58 | Ala | Asp | nd | | 0.012 | 0.002 | * |
| 59 | Val | Ser | 0.008 | 0.001 | 0.034 | 0.002 | 4.5 |
| 46 | Glu | Phe | 0.002 | 0.001 | 0.102 | 0.003 | 48.7 |
| 47 | Glu | Leu/Ile | 0.034 | 0.002 | 0.686 | 0.049 | 20.0 |
| 48 | Pro | Glu | 0.065 | 0.001 | 0.753 | 0.110 | 11.6 |
| 49 | Pro | Gly | nd | | 0.141 | 0.015 | * |
| 50 | Tyr | His | 0.035 | 0.006 | 0.125 | 0.010 | 3.6 |
| 51 | hyPro | Leu/Ile | nd | | 0.005 | 0.000 | * |
| 52 | Leu/Ile | His | nd | | 0.157 | 0.035 | * |
| 53 | Pro | Met | nd | | 1.022 | 0.077 | * |
| 54 | Gly | Gly | nd | | 0.022 | 0.001 | * |
| 55 | Leu/Ile | Met | nd | | 0.040 | 0.002 | * |
| 56 | Ala | Asn | nd | | 0.019 | 0.004 | * |
| 57 | Gly | Ala | nd | | 0.043 | 0.002 | * |

In the table described above, "n.d." indicates that the specified compound was not detected. In addition, in the table described above, "*" indicates that the magnification was not be able to be calculated because the specified compound was not detected (n.d.) in the unheated coriander.

### 1.3. Flavor-enhancing Effect by Cyclic Dipeptide

### (1) Preparation of Common Curry Roux

Flour roux was prepared by putting 20 g of flour and 30 g of beef tallow in a pan, then heating with stirring at 120 °C. To this flour roux were added 10 g of sodium chloride, 10 g of sugar, 10 g of cornstarch, 5 g of curry powder and 15 g of other seasoning ingredients (vegetable and fruit extracts, yeast extract and seafood extract), and after heat-treatment to 105 °C, the mixture was cooled and solidified, to form a block of common curry roux.

The sodium chloride equivalent per 100 g of this curry roux was 10.6 g.

### (2) Preparation of Reduced-sodium Curry Roux

Reduced-sodium curry roux was prepared according to the same procedure, except that the amount of sodium chloride was reduced to 7 g from the amount in the common curry roux in (1).

The sodium chloride equivalent per 100 g of this reduced-sodium curry roux was 7.7 g.

### (3) Preparation of Cyclic Dipeptide Aqueous Solution for Sensory Evaluation

Out of the cyclic dipeptides included in the heat-treated coriander prepared in 1.1. described above, which were confirmed to be increased in 1.2. above, an aqueous solution of the respective 14 cyclic dipeptides shown in the table described below was prepared. The concentration of the cyclic dipeptide in each aqueous solution was set to be equal to its concentration in the heat-treated coriander prepared in 1.1. described above, which was estimated from the ratio of the peak area of the cyclic dipeptide to the peak area of the internal standard (47 µg/g L-lysine-¹³C₆ monohydrochloride) confirmed in 1.2. described above.

### (4) Sensory Evaluation

Two dispersions of 44 g of the reduced-sodium curry roux in (2) dispersed in 300 g of hot water were prepared.

To one of them was added the heat-treated coriander or the powdered unheated coriander prepared in 1.1. described above, or the cyclic dipeptide aqueous solution (corresponding to the heat-treated coriander) prepared in (3) above, so that the final concentration was 0.2% (w/w), and a sensory evaluation was carried out.

Forty-four grams of the common curry roux in (1) was dispersed in 300 g of hot water.

The dispersion of reduced-sodium curry roux dispersed in hot water and the dispersion of common curry roux dispersed in hot water were used as comparative controls, and the strength of the flavor was evaluated by four evaluators on the basis of the following evaluation criteria from the viewpoint of "boosting of flavor." The term "boosting of flavor" in this experiment is an effect concerted by the combination of sodium chloride and other foodstuffs in curry roux, and is an aspect of "saltiness." Thus, the "flavor" in this experiment can be also expressed as "saltiness."

The scores of 1, 2, 3, 4 and 5 points for "boosting of flavor" were determined as follows, and the flavor of respective samples was evaluated in 0.1-point increments by the three evaluators, to give an average score.
1 point: Comparable flavor to that of reduced-sodium curry roux
2 points: Slightly stronger flavor than reduced-sodium curry roux
3 points: Stronger flavor than reduced-sodium curry roux
4 points: Much stronger flavor than reduced-sodium curry roux
5 points: Comparable strength of flavor to that of common curry roux

The average of the evaluated scores was defined as "F" when it was 1.0 or lower, "C" when it was 1.1 or higher and 1.9 or lower, "B" when it was 2.0 or higher and 2.5 or lower, "A" when it was 2.6 or higher and 2.9 or lower, and "AA" when it was 3.0 or higher.

The evaluation results are shown in the table described below. The dispersion of reduced-sodium curry roux dispersed in hot water to which the cyclic dipeptide of Examples 1 to 14 was added exhibited a stronger "boosting of flavor" in comparison with the dispersion of reduced-sodium curry roux to which the cyclic dipeptide was not added, and especially the dispersion of reduced-sodium curry roux dispersed in hot water to which the cyclic dipeptide of Examples 2, 3, 7, 11, 13 and 14 was added exhibited a comparable flavor to that of the dispersion of common curry roux dispersed in hot water. The dispersion of reduced-sodium curry roux dispersed in hot water to which the heat-treated coriander was added also exhibited stronger "boosting of flavor" in comparison with the dispersion of reduced-sodium curry roux to which the unheated coriander (control) was added.

**[Table 7]**

| Evaluation of " boosting of flavor" (cyclic dipeptides) | | | | | |
|---|---|---|---|---|---|
| No. | Cyclic dipeptide | Average | Evaluation | Compound ID | Coriander ID |
| Comp. Ex. 1 | no addition | 1.0 | F | - | - |
| Ex. 1 | cyclic (Ala-Leu) + cyclic (Ala-Ile) | 2.8 | A | 35 | 32 |
| Ex. 2 | cyclic (Thr-Pro) | 3.3 | AA | 17 | 14 |
| Ex. 3 | cyclic (Pro-His) | 3.0 | AA | 18 | 15 |
| Ex. 4 | cyclic (Ala-Pro) | 2.0 | B | 26 | 23 |
| Ex. 5 | cyclic (Arg-Pro) | 2.0 | B | 49 | 45 |
| Ex. 6 | cyclic (Phe-Pro) | 2.8 | A | 43 | 40 |
| Ex. 7 | cyclic (Phe-Ala) | 3.0 | AA | 36 | 33 |
| Ex. 8 | cyclic (Pro-Pro) +cyclic (hyPro-Pro) | 2.0 | B | 21 20 | 18 17 |
| Ex. 9 | cyclic (Leu-Val) + cyclic (Ile-Val) | 2.0 | B | 46 | 42 |
| Ex. 10 | cyclic (Gly-Val) | 2.3 | B | 24 | 21 |
| Ex. 11 | cyclic (Ala-Val) | 3.0 | AA | 30 | 27 |
| Ex. 12 | cyclic (Pro-Met) | 2.3 | B | 60 | 53 |
| Ex. 13 | cyclic (hyPro-Leu) + cyclic (hyPro-Ile) | 3.5 | AA | 58 42 | 51 39 |
| | cyclic (Pro-Leu) + cyclic (Pro-Ile) | | | | |
| Ex. 14 | cyclic (Pro-Va l) | 3.0 | AA | 32 | 29 |

**[Table 8]**

| Evaluation of "boosting of flavor" (coriander) | | | | |
|---|---|---|---|---|
| | Average | Evaluator 1 | Evaluator 2 | Evaluator 3 |
| control (unheated) | 2.5 | 2. 5 | 3.0 | 2.0 |
| heat-treatment | 3.3 | 3.0 | 3.5 | 3.5 |

### 2. Experiment 2: Flavor-enhancing Effect of Heat-treated Paprika

### 2. 1. Preparation of Heat-treated Paprika

Heat-treated paprika was prepared by heat-treating paprika powder under the conditions shown in the table described below. The heating values are values given by the integral of the CV value according to the aforesaid formula ("reference temperature" is 110 °C and "Z value" is 30 (°C)) with respect to the heating time (min), as previously described. The temperatures and time periods described in the heating condition column are maximum reached temperatures and their holding times, and the heating values were calculated on the basis of temperature-change over time, including the values of the temperature and time during temperature rise and fall.

**[Table 9]**

| | Heating condition | Heating value | Maturing condition | Aw | Temp. (° C) |
|---|---|---|---|---|---|
| Comp. Ex. 201 | unheated | 0 | | 0.5177 | 25.02 |
| Comp. Ex. 202 | unheated, matured | 0 | kept heated in air at 40° C for 8 days | 0.5177 | 25. 13 |
| Ex. 201 | 130° C for 30 min, w/o water | 168 | | 0. 6452 | 24. 9 |
| Ex. 202 | 130° C for 30 min, w/ water | 168 | | 0. 7871 | 24.99 |
| Ex. 203 | 130° C for 60 min, w/o water | 264 | | 0.6695 | 24. 84 |
| Ex. 204 | 130° C for 60 min, w/ water | 264 | | 0. 8001 | 24.92 |
| Ex. 205 | 130° C for 90 min, w/o water | 402 | | 0.6751 | 24. 93 |
| Ex. 206 | 130° C for 90 min, w/ water | 402 | | 0. 8042 | 24.94 |
| Ex. 207 | 130° C for 60 min, w/o water, matured | 264 | kept heated in air at 40° C for 8 days | 0.6576 | 24.98 |
| Ex. 208 | 130° C for 60 min, w/ water, matured | 264 | kept heated in air at 40° C for 8 days | 0.8009 | 25.02 |
| Ex. 209 | 140° C for 60 min, w/o water, matured | 586 | kept heated in air at 40° C for 8 days | 0.6882 | 25. 26 |
| Ex. 210 | 140° C for 60 min, w/ water, matured | 586 | kept heated in air at 40° C for 8 days | 0. 7997 | 25.08 |
| Ex. 211 | heated in oil at reached temp. of 90° C | 0.3 | | | |
| Ex. 212 | heated in oil at reached temp. of 100° C | 0.5 | | | |
| Ex. 213 | heated in oil at reached temp. of 110° C | 2.5 | | | |
| Ex. 214 | heated in oil at 130° C for 5 min | 32 | | | |
| Ex. 215 | heated in oil at 150° C for 5min | 101.6 | | | |
| Ex. 216 | heated in oil at 170° C for 5 min | 446. 7 | | | |

Comparative Example 201 is paprika powder without heat-treatment including heat sterilization.

Comparative Example 202 is paprika powder that was matured by keeping the paprika powder of Comparative Example 201 at 40 °C for 8 days by the same method as in Examples 207 to 210 described below.

Heating paprika powder for "w/o water" under a specified temperature and time period condition was carried out according to the following procedure. An aluminum foil pouch was filled with 100 g of paprika powder and sealed. The sealed pouch was heat-treated in a retort sterilizer under the specified temperature and time period condition, and then cooled in water. The heat-treatment in the retort sterilizer was carried out under a gauge pressure of 0.2 MPa.

Heating paprika powder for "w/ water" under a specified temperature and time period condition was carried out according to the following procedure. An aluminum foil pouch was filled with 100 g of paprika powder and 10 g of water, and sealed. The sealed pouch was heat-treated in a retort sterilizer under the specified temperature and time period condition, and then cooled in water. The heat-treatment in the retort sterilizer was carried out under a gauge pressure of 0.2 MPa.

For the paprika powder of Examples 207 to 210, the aluminum foil pouch was filled with the paprika powder heated under the specified condition, and sealed such that air was included therein. The sealed pouch was stored and matured at 40 °C for 8 days.

The paprika powder of Examples 211 to 216 was heated in oil according to the following procedure. One hundred grams of palm oil (melting point of 45 °C) was heated, and upon 80 °C was reached, 100 g of paprika powder was mixed therewith, and the resulting mixture was heated with stirring to the specified temperature shown in the table described above, held at the temperature for a specified time period, and then the mixture was cooled. Cooling was carried out down to about 60 °C with stirring to the extent that the paprika powder did not separate from the mixture, and then the mixture was kept cooled in a refrigerator until it solidified. Note that "reached temperature" in Examples 211 to 213 means that upon the mixture reached the specified temperature, heating was immediately stopped and cooling was started.

The water activity (Aw) of the paprika powder of Comparative Example 201 and Examples 201 to 210 was measured under the respective temperature conditions described in the table described above.

### 2.2. Flavor-enhancing Effect

Common and reduced-sodium curry rouxes were prepared according to the procedures described in (1) and (2) of 1.3. described above. Two dispersions of 44 g of the reduced-sodium curry roux in (2) of 1.3. described above dispersed in 300 g of hot water were prepared.

To one of them was added paprika powder of any of Comparative Examples or any of Examples so as to be in the final concentration of 0.0464% by mass.

Forty-four grams of the common curry roux in (1) of 1.3. described above was dispersed in 300 g of hot water.

The dispersion of reduced-sodium curry roux dispersed in hot water and the dispersion of common curry roux dispersed in hot water were used as comparative controls, and the strength of the flavor was evaluated by three evaluators (evaluators 1, 2 and 3) on the basis of the following evaluation criteria from the viewpoint of "middle fullness." The "flavor (middle fullness)" in this experiment is a middle flavor concerted by the combination of sodium chloride and other foodstuffs in curry roux, and is an aspect of "saltiness." Thus, the "flavor (middle fullness)" in this experiment can also be expressed as "saltiness (middle fullness)."

The scores of 1, 2, 3, 4 and 5 points for the flavor (middle fullness) were determined as follows, and the three evaluators evaluated the flavor of respective samples in 0.1-point increments, to give an average score.
1 point: Comparable flavor to that of reduced-sodium curry roux
2 points: Slightly stronger flavor than reduced-sodium curry roux
3 points: Stronger flavor than reduced-sodium curry roux
4 points: Much stronger flavor than reduced-sodium curry roux
5 points: Comparable strength of flavor to that of common curry roux

The average of evaluated scores was defined as "C" when it was higher than those of Comparative Examples 201 and 202 and 2.0 or lower, "B" when it was 2.1 or higher and 2.5 or lower, "A" when it was 2.6 or higher and 3.0 or lower, and "AA" when it was 3.1 or higher and 5.0 or lower.

The evaluation results are shown in the table described below. The heat-treated paprika of Examples 201 to 216 was confirmed to have a stronger effect of enhancing the "middle fullness" of the flavor in comparison with the paprika of Comparative Examples 201, 202.

**[Table 10]**

| Evaluation of "middle fullness" | | | | | |
|---|---|---|---|---|---|
| | Average | Evaluator 1 | Evaluator 2 | Evaluator 3 | Evaluation |
| Comp. Ex. 201 | 1.5 | 1.2 | 1.8 | 1.5 | - |
| Comp. Ex. 202 | 1.6 | 1.5 | 1.5 | 1. 7 | - |
| Ex. 201 | 1.9 | 2.0 | 1.8 | 2.0 | C |
| Ex. 202 | 2. 1 | 2.0 | 2. 0 | 2.3 | B |
| Ex. 203 | 3.0 | 3.5 | 2.0 | 3.5 | A |
| Ex. 204 | 3.3 | 3.0 | 3.0 | 4.0 | AA |
| Ex. 205 | 2.7 | 3.0 | 3.0 | 2.0 | A |
| Ex. 206 | 2.5 | 2. 5 | 3.0 | 2.0 | B |
| Ex. 207 | 2.8 | 3.0 | 2.5 | 3.0 | A |
| Ex. 208 | 3.1 | 3.0 | 3.5 | 2. 7 | AA |
| Ex.209 | 2.3 | 2.5 | 2.0 | 2.5 | B |
| Ex.210 | 2.4 | 2.3 | 2.7 | 2.2 | B |
| Ex. 211 | 3.0 | 2. 5 | 3.0 | 3.5 | A |
| Ex. 212 | 3.0 | 3.0 | 2.5 | 3.5 | A |
| Ex. 213 | 3.0 | 3.0 | 2.5 | 3.5 | A |
| Ex. 214 | 3.2 | 3.2 | 2.5 | 3.8 | AA |
| Ex. 215 | 3.2 | 3.5 | 2.5 | 3.5 | AA |
| Ex. 216 | 2. 7 | 3.2 | 2.0 | 3.0 | A |

### 2.3. Constituent Analysis

Constituents included in the paprika samples of Comparative Examples 201 and 202 and of Examples 201 to 216 were analyzed according to the following procedure.

### (1) LC-MS/MS Test Solution Preparation

Into a 10-mL test tube was taken 200 mg of a paprika sample (representing a mass converted to that of the paprika sample excluding oil or fat when the aforesaid paprika sample was a paprika sample heat-treated together with the oil or fat), and 5 mL of ultrapure water was added. The test tube was kept heated for 30 minutes in a thermostatic water bath set to 80 °C and then left to stand down to room temperature. To the test tube was added 5 mL of acetonitrile (FUJIFILM Wako Pure Chemicals), and furthermore, L-lysine-¹³C₆ monohydrochloride (FUJIFILM Wako Pure Chemicals) and ribitol (Fujifilm Wako Pure Chemicals) were added as an internal standard in Positive mode and an internal standard in Negative mode, respectively. L-lysine-¹³C₆ monohydrochloride and ribitol were added so as to be 47 µg/g and 99 µg/g with respect to the paprika sample (representing a mass converted to that of a paprika sample excluding oil or fat when the aforesaid paprika sample was a heat-treated paprika sample together with the oil or fat), respectively. The test tube was shaken with a high-speed shaker (CM-1000, TOKYO RIKAKIKAI CO., LTD.) at room temperature and 1,800 rpm for 30 minutes, and after centrifugation, 0.5 mL of the solution in the test tube was transferred to an ultrafiltration filter (Nanosep Centrifugal Filtration Device 3K, Nippon Paul). After centrifuging the ultrafiltration filter at room temperature and 15,000 rpm x 20 minutes, 0.5 mL of ultrapure water was added to a filtrate under the filter, which was then vortexed for 10 seconds. The solution after passing through a 0.2 µm filter was used as an LC-MS/MS specimen (n=2). Two hundred milligrams of the paprika sample described above means a mass converted to that of the paprika sample excluding oil or fat, means 200 mg as the mass of the heat-treated paprika sample of Examples 201 to 210, in which paprika only or a mixture of paprika and water was heat-treated, and refers to 400 mg as the mass of the heat-treated paprika sample of Examples 211 to 216, in which a mixture of paprika and oil or fat was heat-treated.

### (2) LC-MS/MS Analysis Condition

The analysis condition for LC-orbitrap-MS is shown below.

### Analytical Apparatus:

LC: Vanquish Flex (Thermo Fisher Scientific)
MS: ID-X (Thermo Fisher Scientific)

### Analysis column: Unison UK-C18, 3 µm [particle size], 250 mm [length] x 4.6 mm [inside diameter] (Imtakt)

### LC Condition:

Column temperature: 40 °C
Injection volume: 5 µL
Mode: ESI positive, ESI negative
Flow rate: 0.3 mL/min
Mobile phase:
   Liquid A 0.1% of formic acid solution (formic acid: LCMS grade, FUJIFILM Wako Pure Chemicals)
   Liquid B acetonitrile (LCMS grade, FUJIFILM Wako Pure Chemicals)
   Mobile phase composition - analysis time 70 min.

**[Table 11]**

| Composition of LC-MS/MS mobile phase | | | | | | | | | |
|---|---|---|---|---|---|---|---|---|---|
| | 0 min | 15 min | 35 min | 40 min | 53 min | 54 min | 59 min | 60 min | 70 min |
| Liquid A (%) | 100 | 100 | 70 | 50 | 50 | 0 | 0 | 100 | 100 |
| Liquid B (%) | 0 | 0 | 30 | 50 | 50 | 100 | 100 | 0 | 0 |

### MS Condition:

Ion source temperature: 230 °C, collision energy: 30 eV
Monitoring ions: shown in the table described below.

### (3) Data Analysis

From LC-MS/MS chromatogram, the precise mass of the precursor ion > the product ion (table described below) of respective constituents was extracted and the peak area was obtained. Constituents in respective specimens were compared by calculating the ratio of the peak area of product ions (= the peak area of the product ion of the respective constituents / the peak area of the product ion of the internal standard). In the table described below, A1 and A2 indicate two amino acids constituting respective cyclic dipeptides.

**[Table 12]**

| Constituents detected in LC-MS/MS analysis (other than cyclic dipeptides) and analysis condition (Positive mode) | | | |
|---|---|---|---|
| Constituent name | Retention time (min) | [M+H] | |
| | | Precursor Ion | Product Ion |
| internal standard: L-lysine-¹³C₆ | 8.0 | 153. 1327 | 89.0974 |
| 4-methyl-5-thiazoleethanol(sulfurol) | 35. 5 | 144.0477 | 113. 0293 |
| sulfurol acetate | 49.8 | 186.0583 | 126.0372 |

**[Table 13]**

| Constituents detected in LC-MS/MS analysis (cyclic dipeptides) and analysis condition (Positive mode) | | | | | | |
|---|---|---|---|---|---|---|
| Compound ID | Paprika ID | cyclic (A1-A2) | | Retention time (min) | [M+H] | |
| | | A1 | A2 | | Precursor Ion | Product Ion |
| 2 | 1 | Phe | Leu/Ile | 50.7 | 261.1598 | 120.0806 |
| 5 | 2 | Pro | Asn | 33.8 | 212.1030 | 212.1028 |
| 1 | 3 | Leu/Ile | Leu/Ile | 50.5 | 227.1755 | 86. 0962 |
| 3 | 4 | Thr | Leu/Ile | 38.9 | 215.1391 | 169. 1337 |
| 6 | 5 | Phe | Ser | 40.7 | 235.1078 | 120.0806 |
| 4 | 6 | Gly | His | 9.5 | 195.0877 | 122.0712 |
| 7 | 7 | Gly | Ser | 11.0 | 145.0608 | 85.0395 |
| 10 | 8 | Gly | Arg | 12.8 | 214.1299 | 155.0815 |
| 13 | 9 | Ala | His | 11.3 | 209.1034 | 110.0713 |
| 8 | 10 | Glu | His | 14.1 | 267.1088 | 110.0712 |
| 11 | 11 | Glu | Arg | 16. 0 | 286. 1510 | 227. 1022 |
| 14 | 12 | Ala | Arg | 15. 9 | 228. 1456 | 169. 0970 |
| 9 | 13 | Glu | Glu | 13. 0 | 259. 0925 | 195. 0761 |
| 12 | 14 | Glu | Gly | 18. 2 | 187. 0714 | 84. 0441 |
| 15 | 15 | Glu | Asp | 22. 1 | 245. 0769 | 84. 0441 |
| 18 | 16 | Pro | His | 29. 5 | 235. 1190 | 110. 0712 |
| 22 | 17 | Glu | Tyr | 34. 5 | 293. 1133 | 247. 1078 |
| 16 | 18 | Leu/I le | Asp | 41. 0 | 229. 1183 | 141. 1022 |
| 19 | 19 | Pro | Asp | 34. 7 | 213. 0870 | 125. 0706 |
| 23 | 20 | Val | Arg | 34. 4 | 256. 1769 | 197. 1284 |
| 17 | 21 | Thr | Pro | 35. 7 | 199. 1078 | 125. 0707 |
| 20 | 22 | hyPro | Pro | 35. 5 | 211. 1079 | 70. 0650 |
| 24 | 23 | Gly | Va l | 35. 8 | 157. 0972 | 72. 0805 |
| 26 | 24 | Ala | Pro | 36. 6 | 169. 0968 | 70. 0649 |
| 29 | 25 | Ala | Tyr | 37. 6 | 235. 1072 | 136. 0756 |
| 25 | 26 | Arg | Leu/Ile | 37. 0 | 270. 1925 | 211. 1438 |
| 27 | 27 | Leu/Ile | Ser | 37. 9 | 201. 1234 | 86. 0962 |
| 30 | 28 | Ala | Val | 38. 9 | 171. 1125 | 72. 0806 |
| 21 | 29 | Pro | Pro | 39. 2 | 195. 1128 | 70. 0649 |
| 28 | 30 | Gly | Leu/Ile | 40. 0 | 171. 1128 | 86. 0962 |
| 31 | 31 | Gly | Phe | 42. 1 | 205. 0972 | 120. 0806 |
| 34 | 32 | Pro | Tyr | 41. 9 | 261. 1234 | 136. 0756 |
| 37 | 33 | Phe | Asp | 42. 6 | 263. 1027 | 175. 0863 |
| 32 | 34 | Pro | Val | 42. 9 | 197. 1285 | 70. 0650 |
| 35 | 35 | Ala | Leu/Ile | 43. 5 | 185. 1285 | 86. 0963 |
| 38 | 36 | Val | Tyr | 43. 9 | 263. 1391 | 136. 0756 |
| 33 | 37 | Tyr | Ser | 35. 6 | 251. 1027 | 107. 0487 |
| 36 | 38 | Phe | Ala | 44. 9 | 219. 1128 | 120. 0806 |
| 39 | 39 | Val | Val | 45. 9 | 199. 1442 | 72. 0806 |
| 42 | 40 | Pro | Leu/Ile | 46. 9 | 211. 1442 | 70. 0650 |
| 45 | 41 | Phe | Tyr | 47.6 | 311. 1391 | 136. 0754 |
| 40 | 42 | Phe | Thr | 42. 8 | 249. 1234 | 91. 0542 |
| 43 | 43 | Phe | Pro | 48. 3 | 245. 1285 | 120. 0806 |
| 46 | 44 | Leu/Ile | Val | 48. 5 | 213. 1599 | 72. 0806 |
| 41 | 45 | Val | Phe | 49. 5 | 247. 1442 | 120. 0806 |
| 44 | 46 | Tyr | Asp | 48. 7 | 279. 0976 | 136. 0756 |
| 51 | 47 | Ala | Asp | 17. 3 | 187. 0714 | 99. 0550 |
| 52 | 48 | Val | Ser | 33. 9 | 187. 1078 | 72.0807 |

**[Table 14]**

| Constituents detected in LC-MS/MS analysis and analysis condition (Negative mode) | | | |
|---|---|---|---|
| Constituent name | Retention time (min) | [M-H] | |
| | | Precursor Ion | Product Ion |
| internal standard: ribitol | 9. 7 | 151. 0607 | 71. 0138 |
| tartaric acid | 10.6 | 149. 0086 | 72. 9931 |
| *trans-*aconitic acid | 33. 6 | 173. 0091 | 111. 0087 |

The ratios of the peak area of cyclic peptides, organic acids (tartaric acid and trans-aconitic acid), sulfurol and sulfurol acetate detected in LC-MS/MS specimens prepared from the respective samples, to the peak area of the internal standard are shown in Figures 4 to 16. Bars in the figures represent standard deviations.

The results shown in Figures 4 to 16 indicate that the heat-treated paprika of Examples 201 to 216 included a larger amount of cyclic (Phe-Leu/Ile), cyclic (Pro-Asn), cyclic (Leu/Ile-Leu/Ile), cyclic (Thr-Leu/Ile), cyclic (Phe-Ser), cyclic (Gly-His), cyclic (Gly-Ser), cyclic (Gly-Arg), cyclic (Ala-His), cyclic (Glu-His), cyclic (Glu-Arg), cyclic (Ala-Arg), cyclic (Glu-Glu), cyclic (Glu-Gly), cyclic (Glu-Asp), cyclic (Pro-His), cyclic (Glu-Tyr), cyclic (Leu/Ile-Asp), cyclic (Pro-Asp), cyclic (Val-Arg), cyclic (Thr-Pro), cyclic (hyPro-Pro), cyclic (Gly-Val), cyclic (Ala-Pro), cyclic (Ala-Tyr), cyclic (Arg-Leu/Ile), cyclic (Leu/Ile-Ser), cyclic (Ala-Val), cyclic (Pro-Pro), cyclic (Gly-Leu/Ile), cyclic (Gly-Phe), cyclic (Pro-Tyr), cyclic (Phe-Asp), cyclic (Pro-Val), cyclic (Ala-Leu/Ile), cyclic (Val-Tyr), cyclic (Tyr-Ser), cyclic (Phe-Ala), cyclic (Val-Val), cyclic (Pro-Leu/Ile), cyclic (Phe-Tyr), cyclic (Phe-Thr), cyclic (Phe-Pro), cyclic (Leu/Ile-Val), cyclic (Val-Phe), cyclic (Tyr-Asp), cyclic (Ala-Asp), cyclic (Val-Ser), sulfurol, sulfurol acetate, tartaric acid and trans-aconitic acid in comparison with the non-heat-treated paprika of Comparative Examples 201 and 202. The amount of these constituents showed a tendency to correlate with the strength of the flavor-enhancing effect. In particular, cyclic (Gly-His), cyclic (Gly-Ser), cyclic (hyPro-Pro), cyclic (Gly-Val), cyclic (Tyr-Asp) and cyclic (Ala-Asp) are constituents that are not included in the unheated paprika (below detection limit) and are specific to the heat-treated paprika.

### 2.4 Flavor-enhancing Effects on Various Foodstuffs

### (1) Sample Preparation

Foodstuffs shown in the "basic taste", "dashi ingredient", "seasoning" and "ingredient" columns of the table described below were each added to water and diluted so as to be in the concentrations (% (w/w)) described in the table described below, to prepare foodstuff dilutions. The heat-treated paprika powder of Example 203 was mixed with each of the aforesaid foodstuff dilutions so that the heat-treated paprika powder was in the final concentration of 0.05% (w/w), to prepare a sample. The aforesaid foodstuff dilutions without the addition of paprika powder were used as negative control samples. For the respective foodstuffs, a foodstuff dilution in approximately 1.2 times the concentration shown in the table described below was also prepared as a positive control sample.

Food products such as curry shown in the "food product" column of the table described below were prepared using commercially available instant food kits. The respective food products were prepared with approximately 1.2 times the amount of water specified in the aforesaid kits in order to facilitate evaluation of flavor-enhancement. The heated paprika powder of Example 203 was mixed with each of the above-described foodstuff dilutions so that the heat-treated paprika powder was in a final concentration of 0.03 to 0.07% (w/w), to prepare a sample. The aforesaid respective food products without the addition of paprika powder were used as negative control samples. The respective food products were also prepared as positive control samples by using the amount of water specified in the aforesaid kits.

### (2) Sensory Evaluation

Three evaluators (evaluators 1, 2 and 3) tasted the sample prepared from the respective foodstuffs and evaluated the strength of the flavor of the sample.

The scores of 1, 2, 3, 4 and 5 points were determined as follows. The strength of the flavor of the respective samples was evaluated in 0.5-point increments by the three evaluators, to give an average score.
1 point: Comparable flavor to that of negative control sample
2 points: Slightly stronger flavor than negative control sample
3 points: Slightly stronger flavor than negative control sample
4 points: Slightly stronger flavor than negative control sample
5 points: Comparable strength of flavor to that of positive control sample

The average of the evaluated scores was defined as "C" when it was higher than 1.0 point (negative control sample) and 2.0 or lower, "B" when it was 2.1 or higher and 2.5 or lower, "A" when it was 2.6 or higher and 3.0 or lower, and "AA" when it was 3.1 or higher and 5.0 or lower.

The evaluation results are shown in the table described below. The heat-treated paprika powder of Example 203 was confirmed to have a strong effect of enhancing the flavor of various foodstuffs.

**[Table 15]**

| | | | Foodstuff concentrat ion | Example 203 (papri ka 130° C for 60 min. w/o water) | | | | |
|---|---|---|---|---|---|---|---|---|
| | | | | Average | Evaluator 1 | Evaluator 2 | Evaluator 3 | Evaluation |
| Basic taste | saltiness | sodium chloride | 0.5% | 4.0 | 4. 0 | 4.0 | 4.0 | AA |
| | sweetness | granulated sugar | 1.0% | 4.0 | 4. 0 | 4.0 | 4.0 | AA |
| | sourness | tartaric acid | 0.05% | 2.0 | 1.0 | 4.0 | 1.0 | C |
| | *umami* | mono sodium glutamate (MSG) | 0.25% | 2.0 | 2. 5 | 1.0 | 2. 5 | C |
| | | disodium succinate | 0.1% | 2. 5 | 1.0 | 4.0 | 2. 5 | B |
| | | sodium inosinate + sodium guanylate | each 0.05% | 2.0 | 1.0 | 2.5 | 2. 5 | C |
| | sweet *umami* | glycine + alanine | each 0.125% | 1.5 | 1.0 | 2. 5 | 1.0 | C |
| | pungency | chili pepper | 0.01% | 2.0 | 1.0 | 4.0 | 1.0 | C |
| | | black pepper | 0.05% | 2. 0 | 1.0 | 1 0 | 4. 0 | C |
| | | | | | | | | |
| *Dashi* ingredient | beef extract | | 0.5% | 1.5 | 1.0 | 1.0 | 2. 5 | C |
| | chicken extract | | 0.5% | 2. 5 | 1.0 | 4. 0 | 2.5 | B |
| | pork extract | | 0.5% | 1.5 | 1.0 | 1.0 | 2.5 | C |
| | bonito extract | | 0.5% | 1.5 | 1.0 | 1.0 | 2.5 | C |
| | small dried sardine extract | | 0.5% | 2.5 | 1.0 | 2.5 | 4.0 | B |
| | tomato paste | | 1.5% | 2. 5 | 1.0 | 2.5 | 4. 0 | B |
| | garlic extract | | 0.5% | 2.0 | 2.5 | 1.0 | 2.5 | C |
| | onion extract | | | 3.0 | 4.0 | 2.5 | | A |
| | | | | | | | | |
| Seasoning | soy sauce | | 1.2% | 2. 5 | 1.0 | 4.0 | 2. 5 | B |
| | *miso* paste | | 3.3% | 2. 5 | 1.0 | 4.0 | 2.5 | B |
| | ketchup | | 6.0% | 3.0 | 2. 5 | 4.0 | 2. 5 | A |
| | worcestershire sauce | | 2.2% | 1.5 | 1.0 | 2. 5 | 1.0 | C |
| | mayonnaise | | 10.0% | 1.5 | 1.0 | 1.0 | 2.5 | C |
| | noodle soup base | | 1.65% | 2.5 | 1.0 | 4.0 | 2.5 | B |
| | cheese | | 1.65% | 2. 5 | 4.0 | 1.0 | 2. 5 | B |
| Ingredient | caramel | | 0.07% | 1.5 | 1.0 | 2.5 | 1.0 | C |
| | banana paste | | 2.5% | 1 5 | 1.0 | 2.5 | 1.0 | C |
| | apple paste | | 2.5% | 2.0 | 1.0 | 2.5 | 2.5 | C |
| | honey | | 1.25% | 2.0 | 1.0 | 2.5 | 2.5 | C |
| | soybean skimmed | | 1.5% | 1.5 | 2. 5 | 1.0 | 1.0 | C |
| | full-fat powdered milk | | 1.5% | 1.5 | 2. 5 | 1.0 | 1.0 | C |
| | roasted skimmed milk powder | | 1.5% | 3.0 | 2.5 | 4.0 | 2. 5 | A |
| | yeast extract (main ingredient: baker s yeast) | | 0.1% | 2.0 | 1.0 | 4.0 | 1.0 | C |
| | protein hydrolysate | | 0.1% | 2.0 | 2.5 | 1.0 | 2.5 | C |
| | curry powder A | | 0.5% | 1.5 | 2. 5 | 1.0 | 1.0 | C |
| | curry powder B | | 0.5% | 1.5 | 1.0 | 2.5 | 1.0 | C |
| | | | | | | | | |
| Food product | curry (medium-hot) | | | 3. 5 | 4 | 4 | 2. 5 | AA |
| | cream stew | | | 3 | 4 | 4 | 1 | A |
| | spaghetti with meat sauce | | | 3.5 | 4 | 4 | 2. 5 | AA |
| | consomme soup with onion extract | | | 3 | 2. 5 | 4 | 2. 5 | A |
| | *miso* soup (ingredients: *tofu* and *wakame* | | | 2 | 1 | 2.5 | 2.5 | C |
| | *Sanuki* udon noodle | | | 2.5 | 1 | 4 | 2.5 | B |
| | Ramen noodle with soy sauce | | | 3 | 4 | 2. 5 | 2.5 | A |

### 3. Experiment 3: Flavor-enhancing Effect of Heat-treated Cumin

### 3.1. Preparation of Heat-treated Cumin

Whole seed of cumin (cumin seed) was heat-treated under the conditions described in the table described below. The heating values are values given by the integral of the CV value according to the aforesaid formula ("reference temperature" is 110 °C and "Z value" is 30 (°C)) with respect to the heating time (min), as previously described. The temperatures and time periods described in the heating condition column are maximum reached temperatures and their holding times, and the heating values were calculated on the basis of temperature-change over time, including the values of the temperature and time during temperature rise and fall.

**[Table 16]**

| | Heating condition | Heating value | Maturing condition | Aw | temp. (° C) |
|---|---|---|---|---|---|
| Comp. Ex. 301 | unheated | 0 | | 0.5439 | 25.08 |
| Ex. 301 | 120° C for 20 min, w/o water | 53 | | 0. 6016 | 25. 11 |
| Ex. 302 | 120° C for 20 min, w/ water | 53 | | 0. 8063 | 25 |
| Ex. 303 | 120° C for 30 min, w/o water | 74 | | 0. 6021 | 25. 14 |
| Ex. 304 | 120° C for 30 min, w/ water | 74 | | 0. 7991 | 24. 98 |
| Ex. 305 | 130° C for 30 min, w/o water | 168 | | 0. 6019 | 25. 01 |
| Ex. 306 | 130° C for 30 min, w/ water | 168 | | 0. 8069 | 24. 95 |
| Ex. 307 | 130° C for 30 min, w/ water, matured (pulverized → matured) | 168 | kept heated in air at 40° C for 8 days | 0.8187 | 24. 9 |
| Ex. 308 | 130° C for 30 min, w/o water, matured (pulverized → matured) | 168 | kept heated in air at 40° C for 8 days | 0.6253 | 24. 91 |
| Ex. 309 | 130° C for 60 min, w/o water | 264 | | 0.6548 | 25.04 |
| Ex. 310 | 130° C for 60 min, w/ water | 264 | | 0. 7837 | 25.02 |
| Ex. 311 | 140° C for 30 min, w/o water | 407 | | | |
| Ex. 312 | 140° C for 30 min, w/ water | 407 | | | |
| Ex. 313 | 140° C for 30 min, w/ water, matured (pulverized → matured) | 407 | kept heated in air at 40° C for 8 days | 0. 7995 | 24. 97 |
| Ex. 314 | 140° C for 30 min, w/o water, matured (pulverized → matured) | 407 | kept heated in air at 40° C for 8 days | 0.6234 | 25.082 |
| Ex. 315 | heated in oil at reached temp. of 100° C | 1 | | | |
| Ex. 316 | heated in oil at 130° C for 5 min | 34 | | | |
| Ex. 317 | heated in oil at 150° C for 5 min | 183 | | | |
| Ex. 318 | heated in oil at 170° C for 5 min | 577 | | | |
| Ex. 319 | heated in oil at 200° C for 5 min | 4340 | | | |

Comparative Example 301 is cumin seed without heat-treatment including heat sterilization.

Heating cumin seed for "w/o water" under a specified temperature and time period condition was carried out according to the following procedure. An aluminum foil pouch was filled with 100 g of cumin seed and sealed. The sealed pouch was heat-treated in a retort sterilizer under the specified temperature and time period condition, and then cooled in water. The heat-treatment in the retort sterilizer was carried out under a gauge pressure of 0.2 MPa.

Heating cumin seed for "w/ water" under a specified temperature and time period condition was carried out according to the following procedure.

An aluminum foil pouch was filled with 100 g of cumin seed and 10 g of water and sealed. The sealed pouch was heat-treated in a retort sterilizer under the specified temperature and time period condition, and then cooled in water. The heat-treatment in the retort sterilizer was carried out under a gauge pressure of 0.2 MPa.

The cumin seed of Examples 307, 308, 313 and 314 was, after heating, pulverized and matured according to the following procedure.

The cumin seed after heating was pulverized into powder using a stamp mill for 3 minutes per 20 g. An aluminum foil pouch was filled with the product, and sealed such that air was included therein. The sealed pouch was stored and matured at 40 °C for 8 days.

The cumin of Comparative Example and Examples other than Examples 307, 308, 313 and 314 was also pulverized into powder under the same condition and used as a sample in Water Activity Measurement, Confirmation of Flavor-enhancing Effect and Constituent Analysis below. The cumin of Examples 307, 308, 313 and 314 was used as a sample as is after maturing.

Examples 315 to 319 are pulverized products of cumin seed heated in oil according to the following procedure.

The unheated cumin seed was pulverized into powder using a stamp mill for 5 minutes per 75 g.

One hundred grams of palm oil (melting point of 45 °C) was heated, and upon 80 °C was reached, 100 g of the pulverized cumin seed product was mixed therewith, and the resulting mixture was heated with stirring to the specified temperature indicated in the table described above, held at the temperature for a specified time period, and then the mixture was cooled. Cooling was carried out down to about 60 °C with stirring to the extent that the pulverized cumin seed product did not separate from the mixture, and then the mixture was kept cooled in a refrigerator until it solidified. Note that "reached temperature" in Example 315 means that upon the mixture reached the specified temperature, heating was immediately stopped and cooling was started.

The water activity (Aw) of the cumin of Comparative Example 301 and Examples 301 to 314 was measured under the respective temperature conditions shown in the table described above.

### 3.2. Flavor-enhancing Effect

Common and reduced-sodium curry rouxes were prepared according to the procedures described in (1) and (2) of 1.3. described above. Two dispersions of 44 g of the reduced-sodium curry roux in (2) of 1.3. described above dispersed in 300 g of hot water were prepared.

To one of them was added cumin of Comparative Example or any of Examples so as to be in the final concentration of 0.0619% by mass.

Forty-four grams of the common curry roux in (1) was dispersed in 300 g of hot water.

The dispersion of reduced-sodium curry roux dispersed in hot water and the dispersion of common curry roux dispersed in hot water were used as comparative controls, and the strength of the flavor was evaluated by three evaluators (evaluators 1, 2 and 3) on the basis of the following evaluation criteria from the viewpoint of "top sharp saltiness" and "middle fullness." The "flavor (top sharp saltiness)" and "flavor (middle fullness)" in this experiment are top and middle flavors each concerted by the combination of sodium chloride and other foodstuffs in curry roux, and are aspects of "saltiness." Thus, the "flavor (top sharp saltiness)" and the "flavor (middle fullness)" in this experiment can also be expressed as "saltiness (top sharp saltiness)" and "saltiness (middle fullness)", respectively.

The scores of 1, 2, 3, 4 and 5 points for the flavors ("top sharp saltiness" and "middle fullness") were determined as follows, and the three evaluators evaluated the flavor of respective samples in 0.1-point increments, to give an average score.
1 point: Comparable flavor to that of reduced-sodium curry roux
2 points: Slightly stronger flavor than reduced-sodium curry roux
3 points: Stronger flavor than reduced-sodium curry roux
4 points: Much stronger flavor than reduced-sodium curry roux
5 points: Comparable strength of flavor to that of common curry roux

For both evaluation items, "top sharp saltiness" and "middle fullness", the average of the evaluated scores was defined as "C" when it was higher than those of Comparative Example 301 and 2.0 or lower, "B" when it was 2.1 or higher and 2.5 or lower, "A" when it was 2.6 or higher.

The evaluation results are shown in the table described below.

The heat-treated cumin of Examples 301 to 319 was confirmed to have a stronger effect of enhancing flavor in comparison with the cumin of Comparative Example 301, from the viewpoint of both "top sharp saltiness" and "middle fullness."

**[Table 17]**

| Evaluation of "top sharp saltiness (*shiokado*)" | | | | | |
|---|---|---|---|---|---|
| | Average | Evaluator 1 | Evaluator 2 | Evaluator 3 | Evaluation |
| Comp. Ex. 301 | 1.5 | 1.5 | 2.0 | 1.0 | - |
| Ex. 301 | 2.0 | 2.0 | 2.0 | 2.0 | C |
| Ex. 302 | 1.7 | 1.5 | 2.0 | 1.5 | C |
| Ex. 303 | 2.2 | 2.5 | 2.5 | 1.5 | B |
| Ex. 304 | 2.2 | 2.5 | 2.5 | 1.5 | B |
| Ex. 305 | 2. 8 | 3.0 | 2.5 | 3.0 | A |
| Ex. 306 | 2. 7 | 2.5 | 2.0 | 3.5 | A |
| Ex. 307 | 2. 5 | 2.8 | 2.5 | 2.2 | B |
| Ex. 308 | 2. 5 | 3.0 | 2.0 | 2.5 | B |
| Ex. 309 | 2. 8 | 2.5 | 3.0 | 2.8 | A |
| Ex. 310 | 2.0 | 2.0 | 2.0 | 2.0 | C |
| Ex. 311 | 2. 2 | 2.2 | 2.0 | 2.5 | B |
| Ex. 312 | 1.9 | 2.0 | 1.8 | 2.0 | C |
| Ex. 313 | 2. 5 | 2.5 | 3.0 | 2.0 | B |
| Ex. 314 | 2. 5 | 2. 7 | 2. 8 | 2.0 | B |
| Ex. 315 | 2. 2 | 2.0 | 2.0 | 2.5 | B |
| Ex. 316 | 2. 2 | 2.0 | 2.5 | 2.0 | B |
| Ex. 317 | 3.2 | 3.5 | 3.0 | 3.2 | AA |
| Ex. 318 | 2. 8 | 3.0 | 2.5 | 2.8 | A |
| Ex. 319 | 2.3 | 2.5 | 2.0 | 2.5 | B |

**[Table 18]**

| Evaluation of "middle fullness" | | | | | |
|---|---|---|---|---|---|
| | Average | Evaluator 1 | Evaluator 2 | Evaluator 3 | Evaluation |
| Comp. Ex. 301 | 1.1 | 1.0 | 1.2 | 1.1 | - |
| Ex. 301 | 1.2 | 1.0 | 1.5 | 1.1 | C |
| Ex. 302 | 1.3 | 1.1 | 1.5 | 1.3 | C |
| Ex. 303 | 1.3 | 1.1 | 1.5 | 1.3 | C |
| Ex. 304 | 1.5 | 1.2 | 1.8 | 1.4 | C |
| Ex. 305 | 1.6 | 1.5 | 1.8 | 1.5 | C |
| Ex. 306 | 1.8 | 2.0 | 1.8 | 1.5 | C |
| Ex. 307 | 2. 2 | 2.0 | 2.0 | 2.5 | B |
| Ex. 308 | 1.8 | 2.0 | 1.5 | 2.0 | C |
| Ex. 309 | 2. 1 | 2.5 | 1.8 | 2.0 | B |
| Ex. 310 | 2.3 | 2.5 | 1.5 | 3.0 | B |
| Ex. 311 | 1.9 | 2.0 | 2.3 | 1.5 | C |
| Ex. 312 | 2.4 | 2.5 | 2.3 | 2.5 | B |
| Ex. 313 | 2. 8 | 3.0 | 2.0 | 3.3 | A |
| Ex. 314 | 2. 5 | 2.5 | 2.0 | 3.0 | A |
| Ex. 315 | 2.0 | 2.0 | 2.0 | 2.0 | C |
| Ex. 316 | 2.3 | 3.0 | 2.5 | 1.5 | B |
| Ex. 317 | 2. 8 | 3.0 | 2.8 | 2.5 | A |
| Ex. 318 | 2.6 | 3.0 | 2.5 | 2.3 | A |
| Ex. 319 | 2. 2 | 2.5 | 2.0 | 2.0 | B |

### 3.3. Constituent Analysis

Constituents included in the cumin (cumin sample) of Comparative Example 301 and of Examples 301 to 319 were analyzed according to the following procedure.

### 3.3.1. Constituent Analysis by LC-MS/MS

### (1) LC-MS/MS Test Solution Preparation

Into a 10-mL test tube was taken 200 mg of a cumin sample (representing a mass converted to that of the cumin sample excluding oil or fat when the aforesaid cumin sample was a cumin sample heat-treated together with the oil or fat), and 5 mL of ultrapure water was added. The test tube was kept heated for 30 minutes in a thermostatic water bath set to 80 °C and then left to stand down to room temperature. To the test tube was added 5 mL of acetonitrile (FUJIFILM Wako Pure Chemicals), and furthermore, L-lysine-¹³C₆ monohydrochloride (FUJIFILM Wako Pure Chemicals) and ribitol (Fujifilm Wako Pure Chemicals) were added as an internal standard in Positive mode and an internal standard in Negative mode, respectively. L-lysine-¹³C₆ monohydrochloride and ribitol were added so as to be 47 µg/g and 99 µg/g with respect to the cumin sample (representing a mass converted to that of the cumin sample excluding oil or fat when the aforesaid cumin sample was a cumin sample heat-treated together with the oil or fat), respectively. The test tube was shaken with a high-speed shaker (CM-1000, TOKYO RIKAKIKAI CO., LTD.) at room temperature and 1,800 rpm for 30 minutes, and after centrifugation, 0.5 mL of the solution in the test tube was transferred to an ultrafiltration filter (Nanosep Centrifugal Filtration Device 3K, Nippon Paul). After centrifuging the ultrafiltration filter at room temperature and 15,000 rpm x 20 minutes, 0.5 mL of ultrapure water was added to a filtrate under the filter, which was then vortexed for 10 seconds. The solution after passing through a 0.2 µm filter was used as an LC-MS/MS specimen (n=2). Two hundred milligrams of the cumin sample described above means a mass converted to that of the cumin sample excluding oil or fat, means 200 mg as the mass of the heat-treated cumin sample of Examples 301 to 314, in which cumin only or a mixture of cumin and water was heat-treated, and refers to 400 mg as the mass of the heat-treated cumin sample of Examples 315 to 319, in which a mixture of cumin and oil or fat was heat-treated.

### (2) LC-MS/MS Analysis Condition

LC-MS/MS analysis was carried out under the condition described in (2) of 1.2. described above.

### (3) Data Analysis

From LC-MS/MS ion chromatogram, the precise mass of the precursor ion > the product ion (table described below) of respective constituents was extracted and the peak area was obtained. Constituents in respective specimens were compared by calculating the ratio of the peak area of product ions (= the peak area of the product ion of respective constituents / the peak area of the product ion of the internal standard). In the table described below, A1 and A2 indicate two amino acids constituting respective cyclic dipeptides.

**[Table 19]**

| Constituents detected in LC-MS/MS analysis (other than cyclic dipeptides) and analysis condition (Positive mode) | | | |
|---|---|---|---|
| Constituent name | Retention time (min) | [M+H] | |
| | | Precursor Ion | Product Ion |
| internal standard: L-lysine-¹³C₆ | 8.0 | 153. 1327 | 89.0974 |
| 4-methyl-5-thiazoleethanol (sulfurol) | 35. 5 | 144.0477 | 113. 0293 |
| sulfurol acetate | 49. 8 | 186. 0583 | 126. 0372 |

**[Table 20]**

| Constituents detected in LC-MS/MS analysis (cyclic dipeptides) and analysis condition (Positive mode) | | | | | | |
|---|---|---|---|---|---|---|
| Compound ID | Cumin ID | cyclic (A1-A2) | | Retention time (min) | [M+H] | |
| | | A1 | A2 | | Precursor Ion | Product Ion |
| 47 | 1 | Phe | Phe | 51.6 | 295. 1442 | 120.0806 |
| 2 | 2 | Phe | Leu/I le | 50. 7 | 261. 1598 | 120. 0806 |
| 46 | 3 | Leu/Ile | Val | 48.5 | 213. 1599 | 72. 0806 |
| 43 | 4 | Phe | Pro | 48. 3 | 245. 1285 | 120. 0806 |
| 45 | 5 | Phe | Tyr | 47. 6 | 311. 1391 | 136. 0754 |
| 42 | 6 | Pro | Leu/Ile | 46. 9 | 211. 1442 | 70. 0650 |
| 39 | 7 | Val | Val | 45. 9 | 199. 1442 | 72. 0806 |
| 36 | 8 | Phe | Ala | 44. 9 | 219. 1128 | 120. 0806 |
| 33 | 9 | Tyr | Ser | 35. 6 | 251. 1027 | 107. 0487 |
| 32 | 10 | Pro | Val | 42. 9 | 197. 1285 | 70. 0650 |
| 34 | 11 | Pro | Tyr | 41. 9 | 261. 1234 | 136. 0756 |
| 21 | 12 | Pro | Pro | 39. 2 | 195. 1128 | 70. 0649 |
| 27 | 13 | Leu/Ile | Ser | 37. 9 | 201. 1234 | 86. 0962 |
| 25 | 14 | Arg | Leu/Ile | 37.0 | 270. 1925 | 211. 1438 |
| 29 | 15 | Ala | Tyr | 37. 6 | 235. 1072 | 136. 0756 |
| 48 | 16 | Gly | Tyr | 36. 4 | 221. 0921 | 107. 0487 |
| 26 | 17 | Ala | Pro | 36. 6 | 169. 0968 | 70. 0649 |
| 24 | 18 | Gly | Val | 35.8 | 157. 0972 | 72. 0805 |
| 20 | 19 | hyPro | Pro | 35.5 | 211. 1079 | 70. 0650 |
| 17 | 20 | Thr | Pro | 35. 7 | 199. 1078 | 125. 0707 |
| 23 | 21 | Val | Arg | 34.4 | 256. 1769 | 197. 1284 |
| 19 | 22 | Pro | Asp | 34. 7 | 213.0870 | 125.0706 |
| 49 | 23 | Arg | Pro | 34. 2 | 254. 1607 | 195. 1128 |
| 22 | 24 | Glu | Tyr | 34.5 | 293. 1133 | 247. 1078 |
| 18 | 25 | Pro | His | 29. 5 | 235. 1190 | 110. 0712 |
| 15 | 26 | Glu | Asp | 22. 1 | 245. 0769 | 84. 0441 |
| 10 | 27 | Gly | Arg | 12.8 | 214. 1299 | 155. 0815 |
| 4 | 28 | Gly | His | 9. 5 | 195. 0877 | 122. 0712 |
| 1 | 29 | Leu/Ile | Leu/Ile | 50. 5 | 227. 1755 | 86. 0962 |
| 9 | 30 | Glu | Glu | 13. 0 | 259. 0925 | 195. 0761 |
| 16 | 31 | Leu/Ile | Asp | 41.0 | 229.1183 | 141.1022 |
| 37 | 32 | Phe | Asp | 42. 6 | 263. 1027 | 175.0863 |

**[Table 21]**

| Constituents detected in LC-MS/MS analysis and analysis condition (Negative mode) | | | |
|---|---|---|---|
| Constituent name | retention time (min) | [M-H] | |
| | | Precursor Ion | Product Ion |
| internal standard: ribitol | 9. 7 | 151. 0607 | 71. 0138 |
| tartaric acid | 10. 6 | 149. 0086 | 72. 9931 |
| malic acid | 13. 1 | 133.0142 | 71. 0138 |
| citric acid | 19. 0 | 191. 0197 | 111. 0087 |
| cis-aconitic acid | 26. 2 | 173. 0091 | 111.0087 |
| *trans-*aconitic acid | 33.6 | 173. 0091 | 111.0087 |

### 3.3.2. Constituent Analysis by GC-MS

### (1) GC-MS Test Solution Preparation

Into a 10-mL test tube was taken 15 mg of a cumin sample (representing a mass converted to that of the cumin sample excluding oil or fat when the aforesaid cumin sample was a heat-treated cumin sample heat-treated together with the oil or fat), and 5 mL of acetone (FUJIFILM Wako Pure Chemicals) and 5 mL of methanol (FUJIFILM Wako Pure Chemicals) were added. As an internal standard, 4-methylthiazole (TOKYO CHEMICAL INDUSTRY CO., LTD) was added so as to be 625 µg/g with respect to the cumin sample (mass converted as cumin). The test tube was shaken with a high-speed shaker (CM-1000, TOKYO RIKAKIKAI CO., LTD.) at room temperature and 1,800 rpm for 30 minutes. After stirring, centrifugation was carried out, and after centrifugation 0.1 mL of the solution in the test tube was taken into a GC-MS vial, and 1 mL of acetone was further added, which was used as a GC-MS specimen (n=2). Fifteen milligrams of the cumin sample described above means a mass converted to that of the cumin sample excluding oil or fat, means 15 mg as the mass of the heat-treated cumin sample of Examples 301 to 314, in which cumin only or a mixture of cumin and water was heat-treated, and refers to 30 mg as the mass of the heat-treated cumin sample of Examples 315 to 319, in which a mixture of cumin and oil or fat was heat-treated.

### (2) GC-MS Analysis Condition

The analysis condition for GC-orbitrap-MS is shown below.

### Analytical Apparatus:

GC: TRACE1310 (Thermo Fisher Scientific)
MS: QExactiveGC (Thermo Fisher Scientific)

### Analysis column: TG-WAXMS [length] 60 m [inner diameter] 0.25 mm [film thickness] 0.25 µm (Thermo Fisher Scientific)

Autosampler: TRIPLUS RSH (Thermo Fisher Scientific)

### GC condition:

Injection method: Liquid injection
Injection volume: 1 µL
   Gas: helium, 130 kPa (pressure)
   Inlet temperature: 240 °C
   Oven temperature: 40 °C (1 minute hold) - 10 °C/min - 110 °C - 2 °C/min - 180 °C - 3 °C/min - 240 °C - 10 °C/min-250 °C (6 min hold), 70 min in total
MS Condition:
   Transfer temperature: 240 °C
   Ion source temperature: 230 °C
   Ionization method: EI positive
   MS scan: m/z 30-450
   Monitoring ions: shown in the table described below.

### (3) Data Analysis

From GC-MS chromatogram, the precise mass of respective constituents (table described below) was extracted and the peak area was obtained. Constituents in respective specimen were compared by calculating the ratio of the peak area (= the peak area of the respective constituents / the peak area of the internal standard).

**[Table 22]**

| Constituents detected in GC-MS analysis and analysis condition | | |
|---|---|---|
| Constituent name | Retention time (min) | Precise mass |
| internal standard: 4-methylthiazole | 13.2 | 99.0137 |
| *α*-terpinene-7-al | 32.8 | 79.0543 |
| carveol | 34. 2 | 109. 0648 |
| nerol idol | 43. 6 | 67.0543 |

### 3.3.3. Results of Constituent Analysis

The ratios of the peak area of cyclic peptides, organic acids (tartaric acid, malic acid, citric acid, cis-aconitic acid and trans-aconitic acid), sulfurol, sulfurol acetate, carveol, nerolidol and α-terpinene-7-acetate detected in the specimen prepared from respective samples, to the peak area of the internal standard are shown in Figures 17 to 31. Bars in the figures represent standard deviations.

The results shown in Figures 17 to 31 indicate that the heat-treated cumin of Examples 301 to 314 included a larger amount of cyclic (Phe-Phe), cyclic (Phe-Leu/Ile), cyclic (Leu/Ile-Val), cyclic (Phe-Pro), cyclic (Phe-Tyr), cyclic (Pro-Leu/Ile), cyclic (Val-Val), cyclic (Phe-Ala), cyclic (Tyr-Ser), cyclic (Pro-Val), cyclic (Pro-Tyr), cyclic (Pro-Pro), cyclic (Leu/Ile-Ser), cyclic (Arg-Leu/Ile), cyclic (Ala-Tyr), cyclic (Gly-Tyr), cyclic (Ala-Pro), cyclic (Gly-Val), cyclic (hyPro-Pro), cyclic (Thr-Pro), cyclic (Val-Arg), cyclic (Pro-Asp), cyclic (Arg-Pro), cyclic (Glu-Tyr), cyclic (Pro-His), cyclic (Glu-Asp), cyclic (Gly-Arg), cyclic (Gly-His), cyclic (Leu/Ile-Leu/Ile), cyclic (Glu-Glu), cyclic (Leu/Ile-Asp), cyclic (Phe-Asp), tartaric acid, malic acid, citric acid, cis-aconitic acid, trans-aconitic acid, sulfurol, sulfurol acetate, carveol, Nerolidol and α-terpinene-7-al in comparison with the unheated cumin of Comparative Example 301. The heat-treated cumin of Examples 305 to 314 among others, which was heat-treated at 130 °C or 140 °C, exhibited especially significant increase in the aforesaid constituents. In particular, cyclic (Phe-Tyr), cyclic (Phe-Ala), cyclic (Tyr-Ser), cyclic (Leu/Ile-Ser), cyclic (Ala-Tyr), cyclic (Gly-Tyr), cyclic (Ala-Pro), cyclic (Gly-Val), cyclic (hyPro-Pro) and cyclic (Glu-Glu) are constituents specific to the heat-treated cumin, which are not present in the unheated cumin (below detection limit).

### 3.4. Flavor-enhancing Effect on Various Foodstuffs

### (1) Sample Preparation

A sample of each of the foodstuff dilutions or of the food products shown in the table described below to which the heat-treated cumin of Example 305 was added, and its negative and positive control samples, were prepared in such a way as to add the heat-treated cumin of Example 305, instead of the heat-treated paprika powder of Example 203, in the method in (1) of 2.4. described above, so that the final concentration of the heat-treated cumin was 0.05% (w/w) in the foodstuff dilution samples or 0.03 to 0.07% (w/w) in the food product samples.

### (2) Sensory evaluation

Three evaluators tasted the samples prepared from the respective foodstuffs and evaluated the strength of the flavor of the samples. The criteria and method for the evaluation are as described in (2) of 2.4. described above.

The evaluation results are shown in the table described below. The heat-treated cumin of Example 305 was confirmed to have a strong effect of enhancing the flavor of various foodstuffs.

**[Table 23]**

| | | | Foodstuff concentrat ion | Example 305 (cumin 130° C for 30 min. w/o water) | | | | |
|---|---|---|---|---|---|---|---|---|
| | | | | Average | Evaluator 1 | Evaluator 2 | Evaluator 3 | Evaluation |
| Basic taste | saltiness | sodium chloride | 0.5% | 4.0 | 4. 0 | 4. 0 | 4.0 | AA |
| | sweetness | granulated sugar | 1.0% | 1.5 | 1.0 | 2. 5 | 1.0 | C |
| | sourness | citric acid | 0.05% | 3.5 | 4. 0 | 4. 0 | 2. 5 | AA |
| | | tartaric acid | 0.05% | 3 0 | 4.0 | 4.0 | 1.0 | A |
| | *umami* | mono sodium glutamate (MSG) | 0.25% | 2.0 | 1.0 | 4.0 | 1.0 | C |
| | | disodium succinate | 0.1% | 2.5 | 1.0 | 4.0 | 2.5 | B |
| | | sodium inosinate | 0.1% | 2. 0 | 1.0 | 1.0 | 4.0 | C |
| | | sodium inosinate + sodium guanylate | each 0.05% | 3. 0 | 1.0 | 4.0 | 4.0 | A |
| | sweet *umami* | glycine + alanine | each 0.125% | 1.5 | 1.0 | 2.5 | 1.0 | C |
| | pungency | chili pepper | 0.01% | 2.0 | 1.0 | 4.0 | 1.0 | C |
| | | black pepper | 0.05% | 2.0 | 1.0 | 1.0 | 4.0 | C |
| | | | | | | | | |
| *Dashi* ingredient | beef extract | | 0.5% | 2.2 | 1.0 | 4.5 | 1.0 | B |
| | chicken extract | | 0.5% | 2.5 | 1.0 | 4.0 | 2.5 | B |
| | pork extract | | 0.5% | 1.5 | 1.0 | 1.0 | 2.5 | C |
| | bonito extract | | 0.5% | 1.5 | 1.0 | 1.0 | 2.5 | C |
| | small dried sardine extract | | 0.5% | 2. 5 | 1.0 | 2.5 | 4. 0 | B |
| | tomato paste | | 1.5% | 2.5 | 1.0 | 2. 5 | 4.0 | B |
| | garlic extract | | 0.5% | 2.0 | 2.5 | 1.0 | 2.5 | C |
| | onion extract | | 0.5% | 2.5 | 1.0 | 4.0 | 2.5 | B |
| | | | | | | | | |
| Seasoning | soy sauce | | 1.2% | 3 0 | 1.0 | 4.0 | 4.0 | A |
| | *miso* paste | | 3.3% | 2.5 | 1.0 | 4.0 | 2.5 | B |
| | ketchup | | 6.0% | 2.5 | 1.0 | 4. 0 | 2.5 | B |
| | worcestershire sauce | | 2.2% | 2.5 | 1.0 | 2.5 | 4.0 | B |
| | mayonnaise | | 10.0% | 2.5 | 2.5 | 1.0 | 4. 0 | B |
| | noodle soup base | | 1.65% | 2.5 | 1.0 | 4.0 | 2.5 | B |
| | cheese | | 1.65% | 2.5 | 4 0 | 1.0 | 2.5 | B |
| Ingredient | caramel | | 0.07% | 1.5 | 1.0 | 2.5 | 1.0 | C |
| | banana paste | | 2.5% | 2.0 | 1.0 | 2. 5 | 2.5 | C |
| | apple paste | | 2.5% | 1.5 | 1.0 | 1.0 | 2.5 | C |
| | honey | | 1.25% | 2.0 | 1.0 | 2.5 | 2.5 | C |
| | roasted skimmed milk powder | | 1.5% | 2. 0 | 2. 5 | 1.0 | 2.5 | C |
| | veast extract (main ingredient: baker's | | 0.1% | 2.5 | 1.0 | 4.0 | 2.5 | B |
| | protein hydrolysate | | 0.1% | 1.5 | 1.0 | 1.0 | 2.5 | C |
| | curry powder A | | 0.5% | 1.5 | 1.0 | 1.0 | 2.5 | C |
| | | | | | | | | |
| Food product | curry (medium-hot) | | | 3.0 | 4.0 | 2. 5 | 2. 5 | A |
| | cream stew | | | 2.5 | 4.0 | 2.5 | 1.0 | B |
| | spaghetti with meat sauce | | | 3.0 | 2.5 | 4.0 | 2.5 | A |
| | consomme soup with onion extract | | | 2.5 | 2. 5 | 2.5 | 2. 5 | B |
| | *miso* soup (ingredients: *tofu* and *wakame* | | | 2.5 | 1.0 | 2.5 | 4.0 | B |
| | *Sanuki* udon noodle | | | 2.0 | 1.0 | 2.5 | 2.5 | C |
| | Ramen noodle with soy sauce | | | 3.5 | 4.0 | 2.5 | 4.0 | AA |

### 4. Experiment 4: Flavor-Enhancing Effect of Heat-treated Asafoetida

### 4.1 Preparation of Heat-treated Asafoetida

The asafoetida powder used in the following experiment includes 12% by mass of asafoetida (resin), 60% by mass of gum arabic and 28% by mass of rice flour. The asafoetida powder is a product made by dissolving asafoetida, mixing it with gum arabic and rice flour, drying the mixture, and then powdering the mixture. The aforesaid asafoetida powder was heat-treated under the conditions shown in the table described below. The heating values are values given by the integral of the CV value according to the aforesaid formula ("reference temperature" is 110 °C and "Z value" is 30 (°C)) with respect to the heating time (min), as previously described. The temperatures and time periods described in the heating condition column are maximum reached temperatures and their holding times, and the heating values were calculated on the basis of temperature-change over time, including the values of the temperature and time during temperature rise and fall.

**[Table 24]**

| | Heating condition | Heatin g value | Aw | Temp. (° C) |
|---|---|---|---|---|
| Comp. Ex. 401 | unheated | 0 | 0.4684 | 25. 12 |
| Ex. 401 | 130° C for 30 min, w/o water | 168 | - | - |
| Ex. 402 | heated in oil at 110° C for 5 min | 8 | - | - |
| Ex. 403 | heated in oil at 130° C for 5 min | 27 | - | - |
| Ex. 404 | heated in oil at reached temp. of 140° C | 12 | - | - |

Comparative Example 401 is asafoetida powder without heat-treatment including heat sterilization.

Heating the asafoetida powder of Example 401 (130 °C for 30 min w/o water) was carried out according to the following procedure. An aluminum foil pouch was filled with 100 g of asafoetida powder and sealed. The sealed pouch was heat-treated in a retort sterilizer under the specified temperature and time period condition, and then cooled in water. The heat-treatment in the retort sterilizer was carried out under a gauge pressure of 0.2 MPa.

Heating asafoetida powder in oil in Examples 402, 403, or 404 was carried out according to the following procedure. Asafoetida powder (12% by mass of asafoetida) and palm oil (melting point of 45 °C) were mixed at a mass ratio of 50:50, heated with stirring under the specified temperature and time period condition, and then cooled, to obtain heated-in-oil asafoetida that was a curry-roux-like solid at room temperature.

The water activity (Aw) of the asafoetida powder of Comparative Example 401 was measured under the temperature condition shown in the table described above.

### 4.2. Flavor-Enhancing Effect

Common and reduced-sodium curry rouxes were prepared according to the procedures described in (1) and (2) of 1.3. described above. Two dispersions of 44 g of the reduced-sodium curry roux in (2) of 1.3. described above dispersed in 300 g of hot water were prepared.

To one of them was added asafoetida of Comparative Example or any of Examples so as to be in the final concentration of 0.00077% by mass. The added amount of the asafoetida heated in oil of Examples 402, 403 or 404 is an added amount including oil or fat.

Forty-four grams of the common curry roux in (1) of 1.3. described above was dispersed in 300 g of hot water.

The dispersion of reduced-sodium curry roux dispersed in hot water and the dispersion of common curry roux dispersed in hot water were used as comparative controls, and the strength of the flavor was evaluated by three evaluators (evaluators 1, 2 and 3) on the basis of the following evaluation criteria from the viewpoint of "boosting of flavor." The term "boosting of flavor" in this experiment is an effect concerted by the combination of sodium chloride and other foodstuffs in curry roux, and is an aspect of "saltiness." Thus, the "flavor" in this experiment can be also expressed as "saltiness."

The scores of 1, 2, 3, 4 and 5 points for "boosting of flavor" were determined as follows, and the flavor of respective samples was evaluated in 0.1-point increments by the three evaluators, to give an average score.
1 point: Comparable flavor to that of reduced-sodium curry roux
2 points: Slightly stronger flavor than reduced-sodium curry roux
3 points: Stronger flavor than reduced-sodium curry roux
4 points: Much stronger flavor than reduced-sodium curry roux
5 points: Comparable strength of flavor to that of common curry roux

The average of the evaluated scores was defined as "C" when it was higher than that of Comparative Example 401 and 2.0 or lower, "B" when it was 2.1 or higher and 2.5 or lower, "A" when it was 2.6 or higher and 3.0 or lower, and "AA" when it was 3.1 or higher and 5.0 or lower.

The evaluation results are shown in the table described below. The heat-treated asafoetida of Examples 401 to 404 was confirmed to have a stronger effect of enhancing "boosting of flavor" of the flavor in comparison with the asafoetida of Comparative Example 401.

**[Table 25]**

| Evaluation of "boosting of flavor" | | | | | |
|---|---|---|---|---|---|
| | Averag e | Evaluator 1 | Evaluator 2 | Evaluator 3 | Evaluation |
| Comp. Ex. 401 | 2.0 | 2.0 | 2.0 | 2.0 | - |
| Ex. 401 | 2. 7 | 2.5 | 3.0 | 2.5 | A |
| Ex. 402 | 2. 9 | 3.3 | 3.0 | 2.5 | A |
| Ex. 403 | 3. 7 | 3.0 | 4.0 | 4.0 | AA |
| Ex. 404 | 2. 8 | 2.8 | 2. 5 | 3.0 | A |

### 4.3. Constituent Analysis

Constituents in the asafoetida of Comparative Example 401 and Examples 401 to 404 were analyzed according to the following procedure.

### (1) LC-MS/MS Test Solution Preparation

Into a 10-mL test tube was taken 200 mg of the asafoetida of Comparative Example 401 or Example 401, or 400 mg of heated-in-oil asafoetida of Examples 402, 403 or 404 (200 mg as a mass converted under the assumption that the asafoetida resin content was 12% by mass), and 5 mL of ultrapure water was added. The test tube was kept heated for 30 minutes in a thermostatic water bath set to 80 °C and then left to stand down to room temperature. To the test tube was added 5 mL of acetonitrile (FUJIFILM Wako Pure Chemicals), and furthermore, L-lysine-¹³C₆ monohydrochloride (FUJIFILM Wako Pure Chemicals) was added as an internal standard in Positive mode so as to be 47 µg/g with respect to asafoetida (mass converted under the assumption that the asafoetida resin content was 12% by mass for the heated-in-oil asafoetida fat of Examples 402, 403, 404), and ribitol (Fujifilm Wako Pure Chemicals) was added as the internal standard in Negative mode so as to be 99 µg/g with respect to asafoetida (mass converted under the assumption that the asafoetida resin content was 12% by mass for the heated-in-oil asafoetida of Examples 402, 403, 404). The test tube was shaken with a high-speed shaker (CM-1000, TOKYO RIKAKIKAI CO., LTD.) at room temperature and 1,800 rpm for 30 minutes, and after centrifugation, 0.5 mL of the solution in the test tube was transferred to an ultrafiltration filter (Nanosep Centrifugal Filtration Device 3K, Nippon Paul). After centrifuging the ultrafiltration filter at room temperature and 15,000 rpm x 20 minutes, 0.3 mL of the filtrate under the filter was loaded onto a solid phase extraction column InertSep C18 (100 mg/l mL, GL Science) and an eluate was collected. InertSep C18 was conditioned with 1 mL of 50% (w/w) acetonitrile water before loading the filtrate. Then, 0.5 mL of acetonitrile was loaded into InertSep C18 and an eluate was collected. To the eluate was added 1.5 mL of ultrapure water, which was then vortexed for 10 seconds. The solution after passing through a 0.2 µm filter was used as an LC-MS/MS specimen (n=2).

### (2) LC-MS/MS Analysis Condition

LC-MS/MS analysis was carried out under the condition described in (2) of 1.2. described above.

### (3) Data Analysis

From LC-MS/MS chromatogram, the precise mass of the precursor ion > the product ion (table described below) of respective constituents was extracted and the peak area was obtained. Constituents in respective specimens were compared by calculating the ratio of the peak area of product ions (= the peak area of the product ion of the respective constituents / the peak area of the product ion of the internal standard). In the table described below, A1 and A2 indicate two amino acids constituting respective cyclic dipeptides.

**[Table 26]**

| Constituents detected in LC-MS/MS analysis (other than cyclic dipeptides) and analysis condition (Positive mode) | | | |
|---|---|---|---|
| Constituent name | Retention time (min) | [M+H] | |
| | | Precursor Ion | Product Ion |
| internal standard: L-lysine-¹³C₆ | 8.0 | 153. 1327 | 89.0974 |
| 4-methyl-5-thiazoleethanol(sulfurol) | 35. 5 | 144.0477 | 113. 0293 |

**[Table 27]**

| Constituents detected in LC-MS/MS analysis (cyclic dipeptides) and analysis condition (Positive mode) | | | | | | |
|---|---|---|---|---|---|---|
| Compound ID | Asafoetida ID | cyclic (A1-A2) | | Retention time (min) | [M+H] | |
| | | A1 | A2 | | Precursor Ion | Product Ion |
| 50 | 1 | Gly | Thr | 12.6 | 159.0765 | 113.0710 |
| 4 | 2 | Gly | His | 9. 5 | 195. 0877 | 122.0712 |
| 51 | 3 | Ala | Asp | 17.3 | 187.0714 | 99. 0550 |
| 52 | 4 | Val | Ser | 33. 9 | 187. 1078 | 72. 0807 |
| 10 | 5 | Gly | Arg | 12.8 | 214. 1299 | 155. 0815 |
| 13 | 6 | Ala | His | 11.3 | 209. 1034 | 110. 0713 |
| 15 | 7 | Glu | Asp | 22. 1 | 245. 0769 | 84. 0441 |
| 47 | 8 | Phe | Phe | 51.6 | 295. 1442 | 120. 0806 |
| 1 | 9 | Leu/I le | Leu/Ile | 50. 5 | 227. 1755 | 86. 0962 |
| 14 | 10 | Ala | Arg | 15. 9 | 228. 1456 | 169. 0970 |
| 46 | 11 | Leu/I le | Val | 48. 5 | 213. 1599 | 72. 0806 |
| 43 | 12 | Phe | Pro | 48. 3 | 245. 1285 | 120. 0806 |
| 2 | 13 | Phe | Leu/Ile | 50. 7 | 261. 1598 | 120. 0806 |
| 21 | 14 | Pro | Pro | 39. 2 | 195. 1128 | 70. 0649 |
| 53 | 15 | Glu | Phe | 46. 1 | 277. 1183 | 120. 0806 |
| 25 | 16 | Arg | Leu/Ile | 37.0 | 270. 1925 | 211. 1438 |
| 42 | 17 | Pro | Leu/Ile | 46. 9 | 211. 1442 | 70.0650 |
| 55 | 18 | Pro | Glu | 36. 7 | 227. 1027 | 84. 0443 |
| 54 | 19 | Glu | Leu/Ile | 44.5 | 243. 1340 | 86. 0962 |
| 26 | 20 | Ala | Pro | 36. 6 | 169. 0968 | 70. 0649 |
| 32 | 21 | Pro | Va l | 42. 9 | 197. 1285 | 70. 0650 |
| 18 | 22 | Pro | His | 29. 5 | 235. 1190 | 110.0712 |

**[Table 28]**

| Constituents detected in LC-MS/MS analysis and analysis condition (Negative mode) | | | |
|---|---|---|---|
| Constituent name | Retention time (min) | [M-H] | |
| | | Precursor Ion | Product Ion |
| internal standard: ribitol | 9. 7 | 151. 0607 | 71. 0138 |
| tartaric acid | 10.6 | 149.0086 | 72. 9931 |
| malic acid | 13. 1 | 133.0142 | 71. 0138 |
| citric acid | 19.0 | 191.0197 | 111.0087 |

The ratios of the peak area of cyclic peptides, organic acids (tartaric acid, malic acid, citric acid) and sulfurol detected in LC-MS/MS specimens prepared from the respective samples, to the peak area of the internal standard are shown in Figures 32 to 38. Bars in the figures represent standard deviations.

The results shown in Figures 32 to 38 indicate that the heat-treated asafoetida of Examples 401 to 404 included a larger amount of cyclic (Gly-Thr), cyclic (Gly-His), cyclic (Ala -Asp), cyclic (Val-Ser), cyclic (Gly-Arg), cyclic (Ala-His), cyclic (Glu-Asp), cyclic (Phe -Phe), cyclic (Leu/Ile-Leu/Ile), cyclic (Ala-Arg), cyclic (Leu/Ile-Val), cyclic (Phe-Pro), cyclic (Phe-Leu/Ile), cyclic (Pro-Pro), cyclic (Glu-Phe), cyclic (Arg-Leu/Ile), cyclic (Pro-Leu/Ile), cyclic (Pro-Glu), cyclic (Glu-Leu/Ile), cyclic (Ala-Pro), cyclic (Pro-Val), cyclic (Pro-His), tartaric acid, malic acid, citric acid and sulfurol in comparison with the unheated asafoetida of Comparative Example 401. In particular, the above-described constituents were significantly increased in the aforesaid heated-in-oil asafoetida of Examples 402 to 404 that exhibited a strong flavor-enhancing effect. The amount of these constituents showed a tendency to correlate with the strength of the flavor-enhancing effect. In particular, cyclic (Val-Ser), cyclic (Pro-Pro) and cyclic (Pro-Glu) are constituents that are not included in unheated asafoetida (below detection limit) and are specific to heat-treated asafoetida.

### 4.4. Flavor-Enhancing Effect on Various Foodstuffs

### (1) Sample Preparation

A sample of each of the foodstuff dilutions or of the food products shown in the table described below in which the heat-treated asafoetida of Example 403 was added, and its negative and positive control samples, were prepared in such a way as to add the heat-treated asafoetida from Example 403, instead of the heat-treated paprika powder from Example 203, in the method in (1) of 2.4. described above, so that the final concentration of the heat-treated asafoetida was 0.025% (w/w) in the foodstuff dilution sample or 0.015 to 0.035% (w/w) in the food product sample.

### (2) Sensory Evaluation

Three evaluators tasted the samples prepared from the respective foodstuffs and evaluated the strength of the flavor of the samples. The criteria and method for the evaluation are as described in (2) of 2.4. described above.

The evaluation results are shown in the table described below. The heat-treated asafoetida of Example 403 was confirmed to have a stronger effect of enhancing the flavor of various foodstuffs.

**[Table 29]**

| | | | Foodstuff concentrat ion | Example 4 03 (asafoet ida heated 5 min) in oil at 130° C for | | | | |
|---|---|---|---|---|---|---|---|---|
| | | | | Average | Evaluator 1 | Evaluator 2 | Evaluator 3 | Evaluation |
| Basic taste | saltiness | sodium chloride | 0.5% | 4. 0 | 4.0 | 4. 0 | 4.0 | AA |
| | sweetness | granulated sugar | 1.0% | 2. 5 | 4.0 | 2. 5 | 1.0 | B |
| | sourness | citric acid | 0.05% | 3. 0 | 1.0 | 4. 0 | 4.0 | A |
| | | tartaric acid | 0.05% | 2. 5 | 4.0 | 2. 5 | 1.0 | B |
| | bitterness | naringin | 0.05% | 3. 2 | 1.0 | 4. 0 | 4.5 | AA |
| | *umami* | mono sodium glutamate (MSG) | 0.25% | 2. 5 | 2.5 | 4. 0 | 1.0 | B |
| | | sodium L-aspartate | 0.25% | 2. 0 | 1.0 | 1.0 | 4.0 | C |
| | | disodium succinate | 0.1% | 3. 5 | 2.5 | 4. 0 | 4.0 | AA |
| | | sodium inosinate | 0.1% | 3. 0 | 1.0 | 4. 0 | 4.0 | A |
| | | sodium inosinate + sodium guanylate | each 0.05% | 2. 5 | 1.0 | 4. 0 | 2.5 | B |
| | sweet *umami* | glycine + alanine | each 0. 125% | 1.5 | 1.0 | 2. 5 | 1.0 | C |
| | pungency | chili pepper | 0.01% | 2. 0 | 1.0 | 1.0 | 4.0 | C |
| | | black pepper | 0.05% | 4. 0 | 4.0 | 4. 0 | 4.0 | AA |
| | | | | | | | | |
| *Dashi* ingredient | beef extract | | 0.5% | 3.5 | 2. 5 | 4.0 | 4.0 | AA |
| | chicken extract | | 0.5% | 1.5 | 1.0 | 1.0 | 2.5 | C |
| | pork extract | | 0.5% | 3.7 | 2. 5 | 4.0 | 4.5 | AA |
| | bonito extract | | 0.5% | 3.0 | 1.0 | 4.0 | 4.0 | A |
| | small dried sardine extract | | 0.5% | 3.5 | 2.5 | 4.0 | 4.0 | AA |
| | tomato paste | | 1.5% | 3. 5 | 2.5 | 4.0 | 4.0 | AA |
| | garlic extract | | 0.5% | 3.5 | 4.0 | 2.5 | 4.0 | AA |
| | onion extract | | 0.5% | 4.0 | 4.0 | 4.0 | 4.0 | AA |
| | | | | | | | | |
| Seasoning | soy sauce | | 1.2% | 2. 0 | 1.0 | 4.0 | 1.0 | C |
| | *miso* paste | | 3.3% | 3. 0 | 1.0 | 4.0 | 4.0 | A |
| | ketchup | | 6.0% | 2. 7 | 1.0 | 4. 5 | 2. 5 | B |
| | worcestershire sauce | | 2.2% | 2. 5 | 2.5 | 1.0 | 4.0 | B |
| | mayonnaise | | 10.0% | 3. 2 | 1.0 | 4. 5 | 4.0 | AA |
| | noodle soup base | | 1.65% | 2.0 | 1.0 | 4.0 | 1.0 | C |
| | cheese | | 1.65% | 4.0 | 4.0 | 4.0 | 4.0 | AA |
| Ingredient | caramel | | 0.07% | 2.5 | 2.5 | 1.0 | 4.0 | B |
| | banana paste | | 2.5% | 1.5 | 1.0 | 1.0 | 2.5 | C |
| | honey | | 1.25% | 2.0 | 1.0 | 4.0 | 1.0 | C |
| | soybean skimmed | | 1.5% | 2. 5 | 1.0 | 4. 0 | 2.5 | B |
| | full-fat powdered milk | | 1.5% | 3.5 | 2.5 | 4.0 | 4.0 | AA |
| | roasted skimmed milk powder | | 1.5% | 2.0 | 1.0 | 4.0 | 1.0 | C |
| | yeast extract (main ingredient: | | 0.1% | 4.0 | 4.0 | 4.0 | 4.0 | AA |
| | protein hydrolysate | | 0.1% | 2.5 | 2.5 | 4. 0 | 1.0 | B |
| | curry powder A | | 0.5% | 2.5 | 2.5 | 1.0 | 4.0 | B |
| | curry powder B | | 0.5% | 2.0 | 1.0 | 1.0 | 4.0 | C |
| | | | | | | | | |
| Food product | curry (medium-hot) | | | 4.3 | 4.5 | 4.5 | 4.0 | AA |
| | cream stew | | | 4.0 | 4.0 | 4.0 | 4.0 | AA |
| | spaghetti with meat sauce | | | 3.5 | 4.0 | 4.0 | 2.5 | AA |
| | consomme soup with onion extract | | | 3.5 | 4.0 | 4.0 | 2. 5 | AA |
| | *miso* soup (ingredients: *tofu* and | | | 3.5 | 2. 5 | 4. 0 | 4.0 | AA |
| | *Sanuki* udon noodle | | | 3.0 | 1.0 | 4. 0 | 4.0 | A |
| | Ramen noodle with soy sauce | | | 3.5 | 4.0 | 4. 0 | 2. 5 | AA |

### 5. Cyclic dipeptide in Correlation with Strength of Flavor-enhancing Effect

Experiments 1 to 4 described above confirmed that heat-treated coriander, paprika, cumin and asafoetida had the flavor-enhancing effect in comparison with unheated ones. Experiments 1 to 4 described above further confirmed that the amount of a plurality of cyclic dipeptides was increased in heat-treated coriander, paprika, cumin and asafoetida in comparison with unheated ones.

The table described below shows 64 cyclic dipeptides that were found to be increased in heat-treated coriander, paprika, cumin and asafoetida in comparison with unheated ones. As described in Experiment 1, a "compound ID" was given to each cyclic dipeptide and a "coriander ID" was given to a cyclic dipeptide that was found to be increased in the heat-treated coriander. Similarly, a "paprika ID" was given to a cyclic dipeptide that was confirmed to be increased in the heat-treated paprika, a "cumin ID" was given to a cyclic dipeptide that was confirmed to be increased in the heat-treated cumin, and an "asafoetida ID" was given to a cyclic dipeptide that was confirmed to be increased in the heat-treated asafoetida. In the table described below, A1 and A2 specified by the "compound ID" indicate two amino acids constituting respective cyclic dipeptides.

**[Table 30]**

| Compound ID | A1 | A2 | Coriander ID | Paprika ID | Cumin ID | Asafoetida ID |
|---|---|---|---|---|---|---|
| 1 | Leu/Ile | Leu/Ile | 1 | 3 | 29 | 9 |
| 2 | Phe | Leu/Ile | 2 | 1 | 2 | 13 |
| 3 | Thr | Leu/Ile | 3 | 4 | | |
| 4 | Gly | His | 4 | 6 | 28 | 2 |
| 5 | Pro | Asn | | 2 | | |
| 6 | Phe | Ser | | 5 | | |
| 7 | Gly | Ser | 5 | 7 | | |
| 8 | Glu | His | 6 | 10 | | |
| 9 | Glu | Glu | | 13 | 30 | |
| 10 | Gly | Arg | 7 | 8 | 27 | 5 |
| 11 | Glu | Arg | 8 | 11 | | |
| 12 | Glu | Gly | 9 | 14 | | |
| 13 | Ala | His | 10 | 9 | | 6 |
| 14 | Ala | Arg | 11 | 12 | | 10 |
| 15 | Glu | Asp | 12 | 15 | 26 | 7 |
| 16 | Leu/Ile | Asp | 13 | 18 | 31 | |
| 17 | Thr | Pro | 14 | 21 | 20 | |
| 18 | Pro | His | 15 | 16 | 25 | 22 |
| 19 | Pro | Asp | 16 | 19 | 22 | |
| 20 | hyPro | Pro | 17 | 22 | 19 | |
| 21 | Pro | Pro | 18 | 29 | 12 | 14 |
| 22 | Glu | Tyr | 19 | 17 | 24 | |
| 23 | Val | Arg | 20 | 20 | 21 | |
| 24 | Gly | Val | 21 | 23 | 18 | |
| 25 | Arg | Leu/Ile | 22 | 26 | 14 | 16 |
| 26 | Ala | Pro | 23 | 24 | 17 | 20 |
| 27 | Leu/Ile | Ser | 24 | 27 | 13 | |
| 28 | Gly | Leu/Ile | 25 | 30 | | |
| 29 | Ala | Tyr | 26 | 25 | 15 | |
| 30 | Ala | Val | 27 | 28 | | |
| 31 | Gly | Phe | 28 | 31 | | |
| 32 | Pro | Val | 29 | 34 | 10 | 21 |
| 33 | Tyr | Ser | 30 | 37 | 9 | |
| 34 | Pro | Tyr | 31 | 32 | 11 | |
| 35 | Ala | Leu/Ile | 32 | 35 | | |
| 36 | Phe | Ala | 33 | 38 | 8 | |
| 37 | Phe | Asp | 34 | 33 | 32 | |
| 38 | Val | Tyr | 35 | 36 | | |
| 39 | Val | Val | 36 | 39 | 7 | |
| 40 | Phe | Thr | 37 | 42 | | |
| 41 | Val | Phe | 38 | 45 | | |
| 42 | Pro | Leu/Ile | 39 | 40 | 6 | 17 |
| 43 | Phe | Pro | 40 | 43 | 4 | 12 |
| 44 | Tyr | Asp | | 46 | | |
| 45 | Phe | Tyr | 41 | 41 | 5 | |
| 46 | Leu/Ile | Val | 42 | 44 | 3 | 11 |
| 47 | Phe | Phe | 43 | | 1 | 8 |
| 48 | Gly | Tyr | 44 | | 16 | |
| 49 | Arg | Pro | 45 | | 23 | |
| 50 | Gly | Thr | 60 | | | 1 |
| 51 | Ala | Asp | 58 | 47 | | 3 |
| 52 | Val | Ser | 59 | 48 | | 4 |
| 53 | Glu | Phe | 46 | | | 15 |
| 54 | Glu | Leu/Ile | 47 | | | 19 |
| 55 | Pro | Glu | 48 | | | 18 |
| 56 | Pro | Gly | 49 | | | |
| 57 | Tyr | His | 50 | | | |
| 58 | hyPro | Leu/Ile | 51 | | | |
| 59 | Leu/Ile | His | 52 | | | |
| 60 | Pro | Met | 53 | | | |
| 61 | Gly | Gly | 54 | | | |
| 62 | Leu/Ile | Met | 55 | | | |
| 63 | Ala | Asn | 56 | | | |
| 64 | Gly | Ala | 57 | | | |

### 6. Experiment 6: Flavor-enhancing Effect of Cyclic Dipeptide

### (1) Preparation of Cyclic Dipeptide Aqueous Solution for Sensory Evaluation

An aqueous solution in which the concentration of each of the cyclic dipeptides shown in the table described below is set to be the same as its concentration in the heat-treated coriander prepared in 1.1. described above, as estimated from the ratio of the peak area of the cyclic dipeptides to the peak area of the internal standard (47 µg/g of L-lysine-¹³C₆ monohydrochloride) (hereinafter referred to as "heat-treated coriander equivalent aqueous solution") was prepared. An aqueous solution in which the concentration of each of the cyclic dipeptides is set to be the same as its concentration in the heat-treated paprika of Example 203 prepared in 2.1 described above (hereinafter referred to as "heat-treated paprika equivalent aqueous solution") was also prepared. Cyclic dipeptides prepared by the applicant were used in this experiment. As a cyclic dipeptide comprising Leu/Ile, a mixture comprising equal parts of cyclic dipeptide comprising Leu and cyclic dipeptide comprising Ile was used.

### (2) Preparation of Evaluation Sample

Common and reduced-sodium curry rouxes were prepared according to the procedures described in (1) and (2) of 1.3. described above.

Two dispersions of 44 g of the aforesaid reduced-sodium curry roux dispersed in 300 g of hot water were prepared. To one of them was added the heat-treated coriander equivalent solution or heat-treated paprika equivalent aqueous solution of the individual cyclic dipeptides shown in the table described below so as to be in the final concentration of 0.5% (w/w) or 1.0% (w/w), respectively.

Forty-four grams of the aforesaid common curry roux was dispersed in 300 g of hot water.

The dispersion of reduced-sodium curry roux dispersed in hot water and the dispersion of common curry roux dispersed in hot water were used as comparative controls, and the strength of the flavor was evaluated by three evaluators on the basis of the following evaluation criteria from the viewpoint of "top sharp saltiness", "middle fullness (enhanced thickness) and "boosting of last flavor (aftertaste)."

The scores of 1, 2, 3, 4 and 5 points for "top sharp saltiness", "middle fullness (enhanced thickness)" and "boosting of last flavor (aftertaste)" were determined as follows, and the flavor of respective samples was evaluated in 0.1-point increments by three evaluators, to give an average score.
1 point: Comparable flavor to that of reduced-sodium curry roux
2 points: Slightly stronger flavor than reduced-sodium curry roux
3 points: Stronger flavor than reduced-sodium curry roux
4 points: Much stronger flavor than reduced-sodium curry roux
5 points: Comparable strength of flavor to that of common curry roux

The average of the evaluated scores was defined as "F" when it was 1.0 or lower, "C" when it was 1.1 or higher and 1.9 or lower, "B" when it was 2.0 or higher and 2.5 or lower, "A" when it was 2.6 or higher and 2.9 or lower, and "AA" when it was 3.0 or higher.

The evaluation results are shown in the table described below. In the table described below, "ID" refers to the compound ID described above. The items of "coriander 0.5%" and "coriander 1.0%" refer to the addition of the aforesaid heat-treated coriander equivalent aqueous solution of cyclic dipeptide so that the final concentrations may be 0.5% (w/w) and 1.0% (w/w), respectively. The items of "paprika 0.5%" and "paprika 1.0%" refer to the addition of the aforesaid heat-treated paprika equivalent aqueous solution of cyclic dipeptide so that the final concentration may be 0.5% (w/w) and 1.0% (w/w), respectively.

The dispersion of reduced-sodium curry roux dispersed in hot water to which each of the cyclic dipeptide was added exhibited stronger "top sharp saltiness", "middle fullness (enhanced thickness)" and "boosting of last flavor (aftertaste)" in comparison with the dispersion of reduced-sodium curry roux to which the cyclic dipeptides were not added.

**[Table 31]**

| cyclic dipeptide | ID | Additive amount | Top sharp saltiness | | Middle fullness | | Basting of last flavor | |
|---|---|---|---|---|---|---|---|---|
| | | | Average | Evaluation | Average | Evaluation | Average | Evaluation |
| no addition | | - | 1.0 | F | 1.0 | F | 1.0 | F |
| cyclic (Pro-Met) | 60 | coriander 0.5% | 3.0 | AA | 3.2 | AA | 3.0 | AA |
| cyclic (Glu-His) | 8 | coriander 0.5% | 3.2 | AA | 3.3 | AA | 3.0 | AA |
| cyclic (Ala-His) | 13 | coriander 0.5% | 2.7 | A | 3.2 | AA | 3.3 | AA |
| cyclic (Ala-Asp) | 51 | paprika 0.5% | 3.0 | AA | 3.3 | AA | 3.2 | AA |
| cyclic (Phe-Asp) | 37 | paprika 0.5% | 3.0 | AA | 2.8 | A | 2.7 | A |
| cyclic (Val-Phe) | 41 | paprika 0.5% | 2.8 | A | 3.2 | AA | 3.3 | AA |
| cyclic (Gly-His) | 4 | coriander 0.5% | 2.8 | A | 3.3 | AA | 3.5 | AA |
| cyclic (Tyr-His) | 57 | coriander 0.5% | 2.3 | B | 2.5 | B | 2.8 | A |
| cyclic (Leu/Ile-His) | 59 | coriander 0.5% | 3.3 | AA | 3.2 | AA | 2.8 | A |
| cyclic (Gly-Thr) | 50 | coriander 0.5% | 3.3 | AA | 3.2 | AA | 3.2 | AA |
| cyclic (Gly-Phe) | 31 | paprika 0.5% | 2.7 | A | 3.2 | AA | 3.2 | AA |
| cyclic (Leu/Ile-Val) | 46 | coriander 0.5% | 2.5 | B | 2.8 | A | 3.0 | AA |
| cyclic (Glu-Gly) | 12 | coriander 0.5% | 2.2 | B | 2.8 | A | 2.8 | A |
| cyclic (Gly-Leu/Ile) | 28 | paprika 0.5% | 3.0 | AA | 2.7 | A | 3.0 | AA |
| cyclic (Glu-Tyr) | 22 | paprika 0.5% | 2.3 | B | 2.7 | A | 2.5 | B |
| cyclic (Pro-His) | 18 | coriander 0.5% | 2.2 | B | 2.5 | B | 2.5 | B |
| cyclic (Glu-Phe) | 53 | coriander 0.5% | 3.0 | AA | 2.8 | A | 2.8 | A |
| cyclic (Val-Arg) | 23 | coriander 0.5% | 2.7 | A | 3.3 | AA | 3.7 | AA |
| cyclic (Glu-Leu/Ile) | 54 | coriander 0.5% | 2.3 | B | 2.8 | A | 3.0 | AA |
| cyclic (Phe-Phe) | 47 | coriander 0.5% | 2.3 | B | 2.3 | B | 3.2 | AA |
| cyclic (Phe-Pro) | 43 | paprika 0.5% | 2.5 | B | 2.3 | B | 2.3 | B |
| cyclic (Arg-Leu/Ile) | 25 | coriander 0.5% | 2.6 | A | 2.6 | A | 2.7 | A |
| cyclic (Gly-Gly) | 61 | coriander 0.5% | 2.2 | B | 2.5 | B | 3.0 | AA |
| cyclic (Val-Ser) | 52 | paprika 0.5% | 2.5 | B | 2.7 | A | 2.7 | A |
| cyclic (Ala-Pro) | 26 | paprika 0.5% | 2.3 | B | 2.2 | B | 2.2 | B |
| cyclic (Ala-Leu/Ile) | 35 | coriander 0.5% | 2.1 | B | 2.2 | B | 2.1 | B |
| cyclic (Ala-Val) | 30 | coriander 0.5% | 2.3 | B | 2.2 | B | 2.3 | B |
| cyclic (Leu/Ile-Ser) | 27 | paprika 0.5% | 2.9 | A | 3.1 | AA | 2.9 | A |
| cyclic (Pro-Pro) | 21 | coriander 0.5% | 2.2 | B | 2.5 | B | 2.3 | B |
| cyclic (Phe-Ala) | 36 | coriander 0.5% | 2.3 | B | 2.5 | B | 2.5 | B |
| cyclic (Phe-Tyr) | 45 | paprika 0.5% | 1.8 | C | 2.0 | B | 2.0 | B |
| cyclic (Leu/Ile-Leu/Ile) | 1 | paprika 0.5% | 2.7 | A | 2.7 | A | 3.0 | AA |
| cyclic (Ala-Asn) | 63 | coriander 0.5% | 2.3 | B | 2.3 | B | 2.3 | B |
| cyclic (Tyr-Asp) | 44 | paprika 0.5% | 2.1 | B | 2.1 | B | 2.1 | B |
| cyclic (Glu-Arg) | 11 | paprika 0.5% | 1.8 | C | 2.2 | B | 2.7 | A |
| cyclic (Phe-Thr) | 40 | paprika 0.5% | 1.8 | C | 2.5 | B | 2.7 | A |
| cyclic (Gly-Ala) | 64 | coriander 0.5% | 2.0 | B | 2.0 | B | 2.3 | B |
| cyclic (Glu-Glu) | 9 | paprika 0.5% | 2.0 | B | 2.3 | B | 2.5 | B |
| cyclic (Arg-Pro) | 49 | coriander 0.5% | 2.0 | B | 2.5 | B | 2.8 | A |
| cyclic (Phe-Ser) | 6 | paprika 0.5% | 2.3 | B | 2.8 | A | 3.0 | AA |
| cyclic (Gly-Tyr) | 48 | coriander 0.5% | 1.7 | C | 2.0 | B | 2.3 | B |
| cyclic (Thr-Leu/Ile) | 3 | paprika 0.5% | 2.0 | B | 2.5 | B | 3.0 | AA |
| cyclic (Gly-Arg) | 10 | coriander 0.5% | 2.5 | B | 3.2 | AA | 3.0 | AA |
| cyclic (Pro-Val) | 32 | paprika 0.5% | 2.5 | B | 2.3 | B | 2.2 | B |
| cyclic (Thr-Pro) | 17 | paprika 0.5% | 2.2 | B | 2.0 | B | 2.2 | B |
| cyclic (Pro-Tyr) | 34 | coriander 0.5% | 2.5 | B | 2.5 | B | 2.5 | B |
| cyclic (Ala-Arg) | 14 | coriander 0.5% | 2.0 | B | 1.8 | C | 1.8 | B |
| cyclic (Gly-Val) | 24 | paprika 0.5% | 2.3 | B | 2.3 | B | 2.5 | B |
| cyclic (Ala-Tyr) | 29 | coriander 0.5% | 2.2 | B | 2.3 | B | 2.2 | B |
| cyclic (Glu-Asp) | 15 | paprika 0.5% | 1.8 | C | 2.7 | A | 2.3 | B |
| cyclic (Gly-Ser) | 7 | coriander 0.5% | 1.7 | C | 2.0 | B | 2.2 | B |
| cyclic (Val-Tyr) | 38 | paprika 0.5% | 1.8 | C | 2.2 | B | 1.8 | C |
| cyclic (Leu/Ile-Met) | 62 | coriander 0.5% | 1.7 | C | 2.0 | B | 2. 2 | B |
| cyclic (Pro-Glu) | 55 | coriander 0.5% | 1.7 | C | 1.7 | C | 1.8 | C |
| cyclic (Pro-Asp) | 19 | paprika 0.5% | 1.8 | C | 2.0 | B | 2. 2 | B |
| cyclic (Pro-Leu/Ile) | 42 | coriander 0.5% | 1.5 | C | 1.8 | C | 2. 2 | B |

**[Table 32]**

| cyclic dipeptide | ID | Additive amount | Top sharp saltiness | | Middle fullness | | Bosting of last flavor | |
|---|---|---|---|---|---|---|---|---|
| | | | Average | Evaluation | Average | Evaluation | Average | Evaluation |
| no addition | | - | 1.0 | F | 1.0 | F | 1.0 | F |
| cyclic (Pro-Met) | 60 | coriander 1.0% | 3.0 | AA | 3.0 | AA | 3.8 | AA |
| cyclic (Glu-His) | 8 | coriander 1.0% | 4.0 | AA | 3.8 | AA | 3. 7 | AA |
| cyclic (Ala-His) | 13 | coriander 1.0% | 2.3 | B | 3.3 | AA | 3. 7 | AA |
| cyclic (Ala-Asp) | 51 | paprika 1.0% | 3.0 | AA | 3.0 | AA | 3.2 | AA |
| cyclic (Phe-Asp) | 37 | paprika 1.0% | 3.2 | AA | 3.2 | AA | 3.2 | AA |
| cyclic (Val-Phe) | 41 | paprika 1.0% | 2. 8 | A | 2. 8 | A | 3.2 | AA |
| cyclic (Gly-His) | 4 | coriander 1.0% | 2.3 | B | 2. 7 | A | 2.5 | B |
| cyclic (Tyr-His) | 57 | coriander 1.0% | 3.3 | AA | 3.3 | AA | 3.0 | AA |
| cyclic (Leu/Ile-His) | 59 | coriander 1.0% | 2.3 | B | 2. 7 | A | 3.0 | AA |
| cyclic (Gly-Thr) | 50 | coriander 1.0% | 2.0 | B | 2. 7 | A | 2.5 | B |
| cyclic (Gly-Phe) | 31 | paprika 1.0% | 2.3 | B | 2.5 | B | 2.5 | B |
| cyclic (Leu/Ile-Val) | 46 | coriander 1.0% | 2.0 | B | 2. 7 | A | 2. 7 | A |
| cyclic (Glu-Gly) | 12 | coriander 1.0% | 2.0 | B | 3.0 | AA | 2.5 | B |
| cyclic (Gly-Leu/Ile) | 28 | paprika 1.0% | 2. 8 | A | 2. 7 | A | 2. 7 | A |
| cyclic (Glu-Tyr) | 22 | paprika 1.0% | 2.8 | A | 3.0 | AA | 2. 8 | A |
| cyclic (Pro-His) | 18 | coriander 1.0% | 2.0 | B | 3.0 | AA | 3.0 | AA |
| cyclic (Glu-Phe) | 53 | coriander 1.0% | 2.5 | B | 2. 7 | A | 2.5 | B |
| cyclic (Val-Arg) | 23 | coriander 1.0% | 1.7 | C | 2.0 | B | 2.2 | B |
| cyclic (Glu-Leu/Ile) | 54 | coriander 1.0% | 2.2 | B | 2.3 | B | 2. 7 | A |
| cyclic (Phe-Phe) | 47 | coriander 1.0% | 2. 8 | A | 2. 7 | A | 2. 7 | A |
| cyclic (Phe-Pro) | 43 | paprika 1.0% | 2. 7 | A | 3.2 | AA | 3.0 | AA |
| cyclic (Arg-Leu/Ile) | 25 | coriander 1.0% | 2.0 | B | 2.5 | B | 2. 8 | A |
| cyclic (Gly-Gly) | 61 | coriander 1.0% | 2. 8 | A | 2. 7 | A | 2.3 | B |
| cyclic (Val-Ser) | 52 | paprika 1.0% | 1.8 | C | 2.2 | B | 2. 8 | A |
| cyclic (Ala-Pro) | 26 | paprika 1.0% | 2. 7 | A | 3.0 | AA | 3.0 | AA |
| cyclic (Ala-Leu/Ile) | 35 | coriander 1.0% | 2.5 | B | 2. 8 | A | 3.2 | AA |
| cyclic (Ala-Val) | 30 | coriander 1.0% | 2.5 | B | 3.0 | AA | 2. 7 | A |
| cyclic (Leu/Ile-Ser) | 27 | paprika 1.0% | 1.7 | C | 1.8 | C | 2.2 | B |
| cyclic (Pro-Pro) | 21 | coriander 1.0% | 2.3 | B | 2. 7 | A | 2.5 | B |
| cyclic (Phe-Ala) | 36 | coriander 1.0% | 2.0 | B | 2.5 | B | 2.5 | B |
| cyclic (Phe-Tyr) | 45 | paprika 1.0% | 2. 7 | A | 3.0 | AA | 2. 8 | A |
| cyclic (Leu/Ile-Leu/Ile) | 1 | paprika 1.0% | 1.7 | C | 1.8 | C | 2.3 | B |
| cyclic (Ala-Asn) | 63 | coriander 1.0% | 2.0 | B | 2. 7 | A | 2.5 | B |
| cyclic (Tyr-Asp) | 44 | paprika 1.0% | 2.5 | B | 2. 8 | A | 2. 8 | A |
| cyclic (Glu-Arg) | 11 | paprika 1.0% | 2.2 | B | 2.5 | B | 2.3 | B |
| cyclic (Phe-Thr) | 40 | paprika 1.0% | 2.3 | B | 2.2 | B | 2.3 | B |
| cyclic (Gly-Ala) | 64 | coriander 1.0% | 2.2 | B | 2.5 | B | 2. 7 | A |
| cyclic (Glu-Glu) | 9 | paprika 1.0% | 2.2 | B | 2.5 | B | 2.2 | B |
| cyclic (Arg-Pro) | 49 | coriander 1.0% | 1.8 | C | 2.0 | B | 2.2 | B |
| cyclic (Phe-Ser) | 6 | paprika 1. 0% | 2.2 | B | 2.3 | B | 2.3 | B |
| cyclic (Gly-Tyr) | 48 | coriander 1.0% | 2.2 | B | 2.2 | B | 2. 8 | A |
| cyclic (Thr-Leu/Ile) | 3 | paprika 1.0% | 1.7 | C | 2.2 | B | 1.7 | C |
| cyclic (Gly-Arg) | 10 | coriander 1.0% | 1.3 | C | 1.7 | C | 1.5 | C |
| cyclic (Pro-Val) | 32 | paprika 1.0% | 2.2 | B | 2.3 | B | 2.3 | B |
| cyclic (Thr-Pro) | 17 | paprika 1.0% | 2.0 | B | 2.5 | B | 2.5 | B |
| cyclic (Pro-Tyr) | 34 | coriander 1.0% | 2.0 | B | 2.0 | B | 2.0 | B |
| cyclic (Ala-Arg) | 14 | coriander 1.0% | 2.2 | B | 2. 7 | B | 2. 7 | A |
| cyclic (Gly-Val) | 24 | paprika 1.0% | 1.7 | C | 2.0 | B | 2.2 | B |
| cyclic (Ala-Tyr) | 29 | coriander 1.0% | 1.3 | C | 2.2 | B | 2.3 | B |
| cyclic (Glu-Asp) | 15 | paprika 1.0% | 1.5 | C | 2.0 | B | 2.0 | B |
| cyclic (Gly-Ser) | 7 | coriander 1.0% | 1.8 | C | 2.3 | B | 2.3 | B |
| cyclic (Val-Tyr) | 38 | paprika 1.0% | 2.3 | B | 2.2 | B | 2.3 | B |
| cyclic (Leu/Ile-Met) | 62 | coriander 1.0% | 1.7 | C | 2.0 | B | 2.3 | B |
| cyclic (Pro-Glu) | 55 | coriander 1.0% | 2.0 | B | 2.3 | B | 2.3 | B |
| cyclic (Pro-Asp) | 19 | paprika 1.0% | 1.8 | C | 2.0 | B | 1.8 | C |
| cyclic (Pro-Leu/Ile) | 42 | coriander 1.0% | 1.8 | C | 1.8 | C | 1.7 | C |

### 7. Experiment 7: Flavor-enhancing Effect of Cyclic Dipeptide on Various Foodstuffs

### (1) Sample Preparation

An aqueous solution of the mixture of cyclic (Pro-Met) (ID: 60), cyclic (Glu-His) (ID: 8), cyclic (Ala-His) (ID: 13), cyclic (Gly-His) (ID: 4), cyclic (Tyr-His) (ID: 57), cyclic (Leu/Ile-His) (ID: 59), cyclic (Leu/Ile-Val) (ID: 46), cyclic (Glu-Gly) (ID: 12), cyclic ( Pro-His) (ID: 18) and cyclic (Glu-Phe) (ID: 53) was prepared so that the concentration of each of the cyclic dipeptides was the same as its concentration in the heat-treated coriander prepared in 1.1. described above, as estimated from the ratio of the peak area of the cyclic dipeptides to the peak area of the internal standard (47 µg/g L-lysine-¹³C₆ monohydrochloride) (hereinafter "mixed cyclic dipeptide aqueous solution").

Cyclic dipeptides used were as described in Experiment 6.

A sample of each of the foodstuff dilutions or the food products shown in the table described below in which the aforesaid mixed cyclic dipeptide aqueous solution was added, and its negative and positive control samples, were prepared in such a way as to add the aforesaid mixed cyclic dipeptide aqueous solution, instead of the heat-treated paprika powder of Example 203, in the method described in (1) of 2.4. described above, so that the final concentration of the aforesaid aqueous solution was 1.0% (w/w) in the foodstuff dilution sample or the food product sample.

### (2) Sensory Evaluation

The strength of the flavor of the samples prepared from the respective foodstuffs and food products was evaluated by three evaluators (evaluators 1, 2, and 3). The criteria of the evaluated score are as described in (2) of 2.4. described above.

The average of the evaluated scores was defined as "F" when it was 1 point (negative control sample) or lower, "C" when it was higher than 1 point (negative control sample) and 1.9 or lower, "B" when it was 2.0 or higher and 2.5 or lower, "A" when it was 2.6 or higher and 2.9 or lower, and "AA" when it was 3.0 or higher and 5.0 or lower.

The evaluation results are shown in the table described below.

The aforesaid mixed cyclic dipeptide aqueous solution including the 10 cyclic dipeptides described above at the same concentration as in the heat-treated coriander was confirmed to have a strong effect of enhancing the flavor of various foodstuffs.

**[Table 33]**

| | | | | Mixture of 10 cyclic dipeptides | |
|---|---|---|---|---|---|
| | | | Foodstuff concentration | Average | Evaluation |
| Basic taste | saltiness | table salt | 0.5% | 3.5 | AA |
| | sweetness | granulated sugar | 1.0% | 4.0 | AA |
| | sourness | citric acid | 0.05% | 3.5 | AA |
| | | tartaric acid | 0.05% | 3.5 | AA |
| | bitterness | naringin | 0.05% | 3.0 | AA |
| | *umami* | mono sodium glutamate (MSG) | 0.25% | 3.0 | AA |
| | | sodium L-aspartate | 0.25% | 3.7 | AA |
| | | disodium succinate | 0.1% | 4.0 | AA |
| | | sodium inosinate | 0.1% | 2.2 | B |
| | | sodium inosinate + sodium guanylate | each 0.05% | 3.0 | AA |
| | sweet *umami* | glycine + alanine | each 0.125% | 3.7 | AA |
| | pungency | chili pepper | 0.01% | 4.0 | AA |
| | | black pepper | 0.05% | 4.0 | AA |
| | | | | | |
| *Dashi* ingredient | beef extract | | 0.5% | 3.0 | AA |
| | chicken extract | | 0.5% | 4.0 | AA |
| | pork extract | | 0.5% | 3.0 | AA |
| | bonito extract | | 0.5% | 3.7 | AA |
| | small dried sardine extract | | 0.5% | 4.3 | AA |
| | tomato paste | | 1.5% | 4.3 | AA |
| | garlic extract | | 0.5% | 4.0 | AA |
| | onion extract | | 0.5% | 3.5 | AA |
| | | | | | |
| Seasoning | soy sauce | | 1.2% | 4.2 | AA |
| | *miso* paste | | 3.3% | 4.2 | AA |
| | ketchup | | 6.0% | 4.0 | AA |
| | worcestershire sauce | | 2.2% | 3.0 | AA |
| | mayonnaise | | 10.0% | 3.0 | AA |
| | noodle soup base | | 1.65% | 4.2 | AA |
| | cheese | | 1.65% | 4.0 | AA |
| Ingredient | caramel | | 0.07% | 2.5 | B |
| | banana paste | | 2.5% | 2.0 | B |
| | apple paste | | 2.5% | 2.0 | B |
| | honey | | 1.25% | 3.2 | AA |
| | skimmed soybean | | 1.5% | 2.5 | B |
| | full-fat powdered milk | | 1.5% | 2.5 | B |
| | roasted skimmed milk powder | | 1.5% | 2.0 | B |
| | veast extract (main ingredient: baker's yeast) | | 0.1% | 2.5 | B |
| | protein hydrolysate | | 0.1% | 4.0 | AA |
| | curry powder A | | 0.5% | 3.5 | AA |
| | curry powder B | | 0.5% | 3.5 | AA |
| | | | | | |
| Food product | curry (medium-hot) | | | 4.0 | AA |
| | cream stew | | | 4.5 | AA |
| | spaghetti with meat sauce | | | 3.5 | AA |
| | consomme soup with onion extract | | | 4.0 | AA |
| | *miso* soup (ingredients: *tofu* and *wakame* seaweed) | | | 3.2 | AA |
| | *Sanuki* udon noodle | | | 4.3 | AA |
| | Ramen noodle with soy sauce | | | 4.7 | AA |

## Claims

1. A flavor-enhancing composition containing a cyclic dipeptide.

2. The flavor-enhancing composition according to Claim 1, wherein said cyclic dipeptide contains one or more selected from the group consisting of proline, leucine, isoleucine, glycine, phenylalanine, glutamic acid, tyrosine, valine, aspartic acid, histidine and alanine.

3. The flavor-enhancing composition according to Claim 1 or 2, wherein said cyclic dipeptide is one or more selected from the group consisting of cyclic (Pro-Asn), cyclic (Pro-His), cyclic (Pro-Asp), cyclic (Pro-Pro), cyclic (Pro-Val), cyclic (Pro-Tyr), cyclic (Pro-Leu), cyclic (Pro-Ile), cyclic (Pro-Glu), cyclic (Pro-Gly), cyclic (Pro-Met), cyclic (Arg-Pro), cyclic (Thr-Pro), cyclic (hyPro-Pro), cyclic (Leu-Leu), cyclic (Ile-Leu), cyclic (Ile-Ile), cyclic (Leu-Asp), cyclic (Ile-Asp), cyclic (Leu-Ser), cyclic (Ile-Ser), cyclic (Leu-Val), cyclic (Ile-Val), cyclic (Leu-His), cyclic (Ile-His), cyclic (Leu-Met), cyclic (Ile-Met), cyclic (Arg-Leu), cyclic (Arg-Ile), cyclic (hyPro-Leu), cyclic (hyPro-Ile), cyclic (Thr-Leu), cyclic (Thr-Ile), cyclic (Gly-His), cyclic (Gly-Ser), cyclic (Gly-Arg), cyclic (Gly-Val), cyclic (Gly-Leu), cyclic (Gly-Ile), cyclic (Gly-Phe), cyclic (Gly-Tyr), cyclic (Gly-Thr), cyclic (Gly-Gly), cyclic (Gly-Ala), cyclic (Phe-Leu), cyclic (Phe-Ile), cyclic (Phe-Ser), cyclic (Phe-Ala), cyclic (Phe-Asp), cyclic (Phe-Thr), cyclic (Phe-Pro), cyclic (Phe-Tyr), cyclic (Phe-Phe), cyclic (Glu-His), cyclic (Glu-Glu), cyclic (Glu-Arg), cyclic (Glu-Gly), cyclic (Glu-Asp), cyclic (Glu-Tyr), cyclic (Glu-Phe), cyclic (Glu-Leu), cyclic (Glu-Ile), cyclic (Tyr-Asp), cyclic (Tyr-His), cyclic (Tyr-Ser), cyclic (Val-Arg), cyclic (Val-Tyr), cyclic (Val-Val), cyclic (Val-Phe), cyclic (Val-Ser), cyclic (Ala-His), cyclic (Ala-Arg), cyclic (Ala-Pro), cyclic (Ala-Tyr), cyclic (Ala-Val), cyclic (Ala-Leu), cyclic (Ala-Ile), cyclic (Ala-Asp) and cyclic (Ala-Asn).

4. The flavor-enhancing composition according to Claim 3, wherein said cyclic dipeptide is one or more selected from the group consisting of cyclic (Ala-Leu), cyclic (Ala-Ile), cyclic (Thr-Pro), cyclic (Pro-His), cyclic (Ala-Pro), cyclic (Arg-Pro), cyclic (Phe-Pro), cyclic (Phe-Ala), cyclic (Pro-Pro), cyclic (hyPro-Pro), cyclic (Leu-Val), cyclic (Ile-Val), cyclic (Gly-Val), cyclic (Ala-Val), cyclic (Pro-Met), cyclic (hyPro-Leu), cyclic (hyPro-Ile), cyclic (Pro-Leu), cyclic (Pro-Ile) and cyclic (Pro-Val).

5. The flavor-enhancing composition according to Claim 3, wherein said cyclic dipeptide is one or more selected from the group consisting of cyclic (Pro-Met), cyclic (Glu-His), cyclic (Ala-His), cyclic (Gly-His), cyclic (Tyr-His), cyclic (Leu-His), cyclic (Ile-His), cyclic (Leu-Val), cyclic (Ile-Val), cyclic (Glu-Gly), cyclic (Pro-His) and cyclic (Glu-Phe).

6. The flavor-enhancing composition according to any one of Claims 1 to 5, further comprising one or more selected from the group consisting of sulfurol(4-methyl-5-thiazoleethanol), sulfurol acetate, carveol, nerolidol, α-terpinene-7-al and an organic acid.

7. The flavor-enhancing composition according to Claim 6, wherein said organic acid is one or more selected from the group consisting of cis-aconitic acid, trans-aconitic acid, tartaric acid, malic acid and citric acid.

8. A method for producing the flavor-enhancing composition according to any one of Claims 1 to 7, comprising
heating one or more spices selected from the group consisting of coriander, paprika, cumin and asafoetida, to increase said cyclic dipeptide in said spice.

9. A food product containing the flavor-enhancing composition according to any one of Claims 1 to 7.

10. A method for enhancing a flavor of a food product, comprising blending the flavor-enhancing composition according to any one of Claims 1 to 7 with the food product.
